# EUROPEAN PATENT APPLICATION

(11) **EP 2 259 134 A1**
(43) Date of publication of application: **08.12.2010**
(21) Application number: 08873751.5
(22) Date of filing: 30.10.2008
(51) Int. Cl.: G02F 1/1343, G02F 1/1337, G02F 1/1368

(54) **ACTIVE MATRIX BOARD, LIQUID CRYSTAL PANEL, LIQUID CRYSTAL DISPLAY DEVICE, LIQUID CRYSTAL DISPLAY UNIT AND TELEVISION RECEIVER**

(30) Priority: 31.03.2008 JP 2008090977
(71) Applicant: Sharp Kabushiki Kaisha, Osaka-shi, Osaka 545-8522 (JP)
(72) Inventor: TSUBATA, Toshihide, Osaka-shi, Osaka 545-8522 (JP)
(74) Representative: Müller - Hoffmann & Partner
(86) International application number: PCT/JP2008/069735
(87) International publication number: WO 2009/122608

(57) **Abstract**

An active matrix substrate includes: scan signal lines 16x; data signal lines 15x; and switching elements (12a, 12b), the active matrix substrate further including, in each pixel region (100): a pixel electrode (17a) connected to a corresponding one of the data signal lines (15x) via a corresponding one of the switching elements (12a); a pixel electrode (17b) connected to the corresponding one of the data signal lines (15x) via the corresponding one of the switching elements (12b); and a pixel electrode (17c) connected to the pixel electrode (17a) via a capacitance (Cac), the pixel (100) being intersected by a corresponding one of the scan signal lines (16x) so as to be divided into two parts, the pixel electrode (17a) being provided in one of the two parts, the pixel electrode (17b) being provided in the other one of the two parts. Therefore, it is possible to provide an active matrix substrate of a capacitively-coupled pixel-dividing type, which is advantageous in flexibility in layout of each pixel electrode.

## Description

### Technical Field

The present invention relates to: an active matrix substrate in which a plurality of pixel electrodes are provided per pixel region; and a liquid crystal display device (of a pixel-dividing type) including the active matrix substrate.

### Background Art

For the purpose of improving viewing angle dependency of a γ characteristic of a liquid crystal display device (suppressing excess brightness on a screen etc. for example), there has been proposed a liquid crystal display device (of a pixel-dividing type) in which a plurality of sub-pixels are provided per pixel. The liquid crystal display device displays a halftone by (i) controlling the plurality of sub-pixels to be different from each other in luminance, and (ii) carrying out area coverage modulation with respect to the plurality of sub-pixels (see Patent Literature 1, for example).

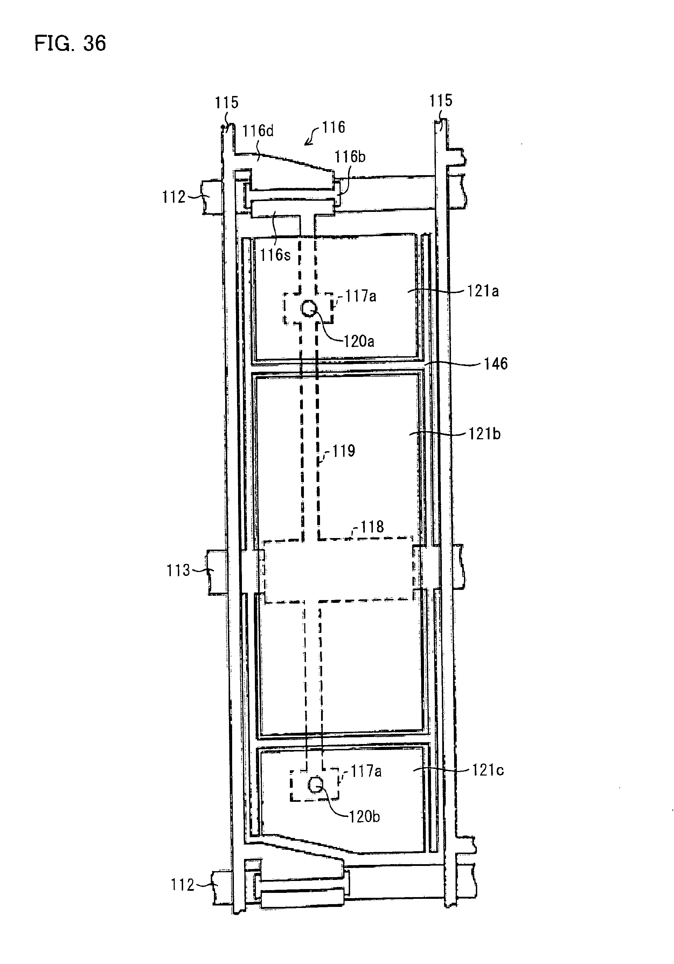

Patent Literature 1 discloses an active matrix substrate (of a capacitively-coupled pixel-dividing type) (see Fig. 36) in which a pixel region is provided between neighboring two gate bus lines 112. In the pixel region, (i) a pixel electrode 121a is provided in an upper part (a part being adjacent to one of the two gate bus lines 112), (ii) a pixel electrode 121b is provided in a middle part, and (iii) a pixel electrode 121c is provided in a lower part (a part being adjacent to the other one of the two gate bus lines 112). The pixel electrodes 121a and 121c are connected to a source lead line 119 led out of a source electrode 116s of a transistor 116. The source lead line 119 is also connected to a control electrode 118. The control electrode 118 and a pixel electrode 112b overlap each other via an insulating layer. The pixel electrode 121b provided in the middle part is capacitively-coupled with each of the pixel electrode 121a provided in the upper part and the pixel electrode 121c provided in the lower part. In a case where the active matrix substrate is applied to a liquid crystal display device, the active matrix substrate can cause (i) sub-pixels corresponding to the respective pixel electrodes 121a and 121c to serve as bright sub-pixels, and (ii) a sub-pixel corresponding to the pixel electrode 121 b to serve as a dark sub-pixel. Therefore, it is possible for the liquid crystal display device to display a halftone by carrying out area coverage modulation with respect to the (two) bright sub-pixels and the (one) dark sub-pixel.

### Citation List

### Patent Literature 1

Japanese Patent Application Publication, Tokukai, No. 2006-39290 A (Publication Date: February 9, 2006)

### Summary of Invention

Here, since the pixel electrode 121b is being in an electrically-floating state, there is a risk that a DC voltage is applied to a liquid crystal layer of the pixel (a time integration value of an electric potential of the pixel electrode is deviated from an electric potential of a counter electrode) due to a diving charge or the like with respect to the pixel electrode being in the electrically-floating state. The application of the DC voltage may cause burn-in of a pixel. In view of the problem, the active matrix substrate of Fig. 36 has an arrangement in which the pixel electrode 121b, provided in the middle part (i.e. away from the gate bus lines 112), is surrounded by a shield pattern 146 extending from a storage capacitor bus line 113. The arrangement prevents the diving charge or the like with respect to the pixel electrode 121b, but causes a limitation on a layout of each of the pixel electrodes. For example, it is necessary for the pixel electrodes corresponding to the bright sub-pixels to be provided in the respective upper and lower parts of the pixel region (parts being adjacent to the respective gate bus lines).

The active matrix substrate (like the one illustrated in Fig. 36), in which the two pixel electrodes corresponding to the bright sub-pixels are provided in the respective upper and lower parts of the pixel, also has the following problem. In a case where the active matrix substrate is applied to a (conventional) liquid crystal display device, a bright sub-pixel belonging to a pixel is adjacent to another bright sub-pixel belonging to another pixel which is adjacent to said pixel. A distance between adjacent two bright sub-pixels which belong to the respective two pixels is shorter than a distance between the two bright sub-pixels which belong to one of the two pixels. The shorter distance may cause the adjacent two bright sub-pixels belonging to the respective two pixels to be erroneously recognized as being provided in a single pixel. This raises a risk that images displayed in the liquid crystal display device might be felt unnaturally.

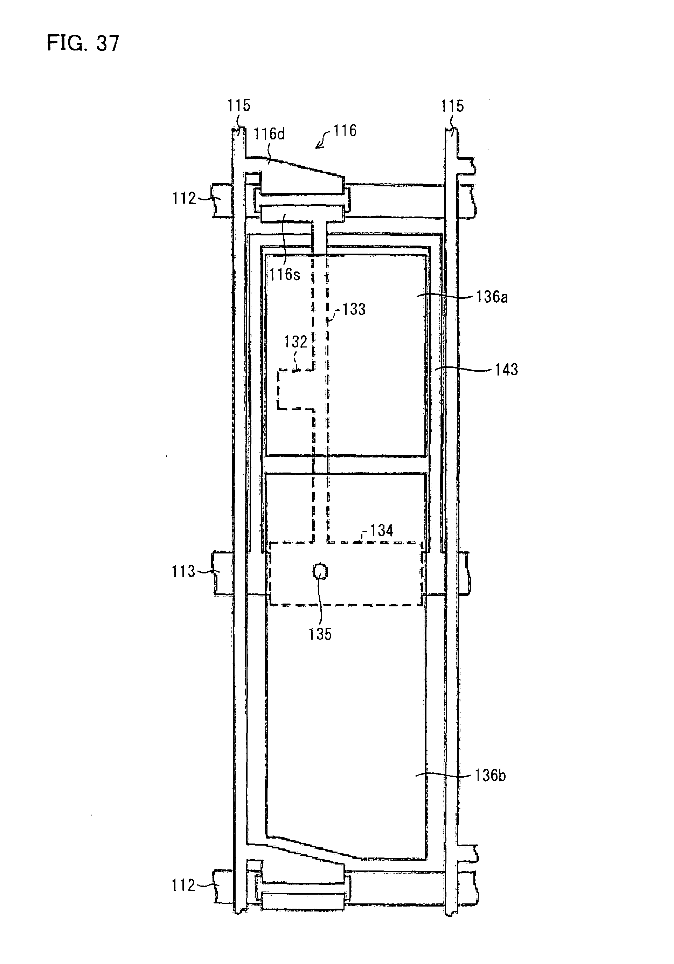

Meanwhile, there may be proposed another arrangement (see Fig. 37) in which (i) a pixel electrode 136a (a pixel electrode for the dark sub-pixel), which is being in the electrically-floating state, is provided in the upper part of the pixel region (the part being adjacent to the gate bus line 112), and (ii) a periphery of the pixel electrode 136a is surrounded by a shield pattern 143 extending from the storage capacitor bus line 113. According to the arrangement, however, the gate bus line 112 and the shield pattern 143 are provided close to each other in the same layer. Such a layout may raise a risk of occurrence of a short-circuit between the gate bus line 112 and the shield pattern 143.

The present invention is made in view of the problems. An object of the present invention is to increase flexibility in layout of each pixel electrode in a liquid crystal display device of a (capacitively-coupled) pixel-dividing type.

An active matrix substrate of the present invention includes: scan signal lines; switching elements each connected to a corresponding one of the scan signal lines; data signal lines; the active matrix substrate further including, in each pixel region: a first pixel electrode connected to a corresponding one of the data signal lines via a corresponding one of the switching elements; a second pixel electrode connected to the corresponding one of the data signal lines via a corresponding one of the switching elements; and a third pixel electrode connected to the first pixel electrode via a capacitance, the pixel region being intersected by a corresponding one of the scan signal lines so as to be divided into two parts, the first pixel electrode being provided in one of the two parts, the second pixel electrode being provided in the other one of the two parts.

Further, an active matrix substrate of the present invention may include: scan signal lines; data signal lines; first transistors each connected to both of a corresponding one of the scan signal lines and a corresponding one of the data signal lines; and second transistors each connected to both of the corresponding one of the scan signal lines and the corresponding one of the data signal lines, the active matrix substrate further comprising, in each pixel region: a first pixel electrode connected to a corresponding one of the first transistors; a second pixel electrode connected to a corresponding one of the second transistors; and a third pixel electrode connected to the first pixel electrode via a capacitance, the first pixel electrode and the second pixel electrode facing each other via a gap therebetween, the pixel region being intersected by a corresponding one of the scan signal lines so that the corresponding one of the scan signal lines and the gap overlap each other.

According to the arrangement, the scan signal line intersects the pixel region. Therefore, it is possible to increase flexibility in layout of each pixel electrode. For example, it is possible to provide each of the first pixel electrode and the second pixel electrode adjacent to the corresponding one of the scan signal lines. This allows such a layout that the pixel electrodes corresponding to the bright sub-pixels in the center of the pixel region, while the pixel electrode corresponding to the dark sub-pixel is provided away from the scan signal line. That is, in a case where the active matrix substrate of the present invention is employed in a liquid crystal display device, it is possible to prevent the bright sub-pixels which are belong to different pixels, respectively, from being adjacent to each other. Therefore, it becomes possible for the liquid crystal display device to display more natural images than those of the conventional liquid crystal display device.

In the active matrix substrate, the first pixel electrode and the third pixel electrode may be provided in the one of the two parts.

The active matrix substrate of the present invention may include first retention capacitance lines each overlapping a part of edges of corresponding third pixel electrodes with each other, each of the first retention capacitance lines having first extending portions branching therefrom, each of the first extending portions, in planar view, extending so that the first extending portion and the other part of edges of a corresponding one of the third pixel electrodes overlap each other, or, alternatively, the first extending portion extending around the other part of edges of the corresponding one of the third pixel electrodes and then merging into the first retention capacitance line again. In this case, the first extending portions and the first pixel electrodes may overlap each other, respectively. Further, the first extending portions may be provided one per pixel region and may be connected to their neighboring first extending portion in a column direction.

According to the active matrix substrate of the present invention, the first retention capacitance lines may be provided in such a manner that pixel regions in pair which are adjacent to each other share one first retention capacitance line.

The active matrix substrate of the present invention may further includes: first retention capacitance lines each overlapping a part of edges of corresponding third pixel electrodes with each other; first sub-lines each of which forms retention capacitances in combination with corresponding first pixel electrodes; and first conducting electrodes connected between the first retention capacitance line and the first sub-line, the first conducting electrodes being provided two per each pixel region in such a manner that a first sub-line and two first conducting electrodes corresponding to one pixel region are extended so that a combination of the first sub-line and the two first conducting electrodes, and the other part of edges of a corresponding one of the third pixel electrodes overlap each other, or, alternatively, that the combination of the first sub-line and the two first conducting electrodes is extended around the other part of edges of the corresponding one of the third pixel electrodes.

The active matrix substrate of the present invention may further include an interlayer insulating film provided below each of the first pixel electrode, the second pixel electrode, and the third pixel electrode, the interlayer insulating film being less in thickness in at least (i) a part of a region where the third pixel electrode and the first retention capacitance line overlap each other, and (ii) a part of a region where the third pixel electrode and the first extending portion overlap each other. In this case, the interlayer insulating film may include an inorganic insulating film and an organic insulating film which is greater in thickness than the inorganic insulating film; and the organic insulating film may be absent in at least (i) the part of the region where the third pixel electrode and the first retention capacitance line overlap each other, and (ii) the part of the region where the third pixel electrode and the first extending portion overlap each other.

The active matrix substrate of the present invention may further includes: first retention capacitance lines each overlapping a part of edges of corresponding third pixel electrodes with each other; and first shield electrodes each connected to a corresponding one of the first retention capacitance lines via a contact hole, the first shield electrodes and the third pixel electrodes being provided in the same layer, the first shield electrode, in planar view, extending around the other part of edges of a corresponding one of the third pixel electrodes. In this case, an interlayer insulating film may be provided below each of the first pixel electrode, the second pixel electrode, and the third pixel electrode, the interlayer insulating film including an inorganic insulating film and an organic insulating film which is greater in thickness than the inorganic insulating film.

The active matrix substrate of the present invention may further include, in each pixel region, a first coupling capacitance electrode electrically connected to the first pixel electrode, the first coupling capacitance electrode and the third pixel electrode overlapping each other via an interlayer insulating film which is provided below each of the first pixel electrode, the second pixel electrode, and the third pixel electrode.

According to the active matrix substrate of the present invention, the switching element may include a first transistor, the first pixel electrode may be connected to, via a contact hole, a lead line led out of a conducting terminal of the first transistor, and the lead line and the first coupling capacitance electrode may be connected to each other in the same layer.

According to the active matrix substrate of the present invention, the switching element may include a first transistor, the first pixel electrode may be connected to (i), via a contact hole, a lead line led out of a conducting terminal of the first transistor, and (ii) a junction line via another contact hole, and the first coupling capacitance electrode and the junction line may be connected to each other in the same layer.

According to the active matrix substrate of the present invention, the interlayer insulating film may be less in thickness in at least a part of a region where the third pixel electrode and the first coupling capacitance electrode overlap each other. In this case, the interlayer insulating film may include the inorganic insulating film and the organic insulating film which is greater in thickness than the inorganic insulating film, and the organic insulating film may be absent in at least a part of the region where the third pixel electrode and the first coupling capacitance electrode overlap each other.

The active matrix substrate of the present invention may further include, in each pixel region, a fourth pixel electrode connected to the second pixel electrode via a capacitance, the second pixel electrode and the fourth pixel electrode being provided in the other one of the two parts.

The active matrix substrate of the present invention may further include second retention capacitance lines each overlapping a part of edges of corresponding fourth pixel electrodes with each other, each of the second retention capacitance lines having second extending portions branching therefrom, each of the second extending portions, in planar view, extending so that the second extending portion and the other part of edges of a corresponding one of the fourth pixel electrodes overlap each other, or, alternatively, the second extending portion extending around the other part of edges of the corresponding one of the fourth pixel electrodes and then merging into the second capacitance line again. In this case, the second extending portions and the second pixel electrodes may overlap each other, respectively. Further, the second extending portions may be provided one per pixel region and are connected to their neighboring second extending portion in a column direction.

According to the active matrix substrate of the present invention, the second retention capacitance lines may be provided in such a manner that pixel regions in pair which are adjacent to each other share one second retention capacitance line.

The active matrix substrate of the present invention may further include: second retention capacitance lines each overlapping a part of edges of corresponding fourth pixel electrodes with each other; second sub-lines each of which forms retention capacitances in combination with corresponding second pixel electrodes; and the second conducting electrodes being provided two per each pixel region in such a manner that a second sub-line and two second conducting electrodes corresponding to one pixel region are extended so that a combination of the second sub-line and the two second conducting electrodes, and the other part of edges of a corresponding one of the fourth pixel electrodes overlap each other, or, alternatively, that the combination of the second sub-line and the two second conducting electrodes is extended around the other part of edges of the corresponding one of the fourth pixel electrodes.

According to the active matrix substrate of the present invention, the interlayer insulating film may be provided below each of the first pixel electrode, the second pixel electrode, the third pixel electrode, and the fourth pixel electrode, the interlayer insulating film being less in thickness in at least (i) a part of a region where the fourth pixel electrode and the second retention capacitance line overlap each other, and (ii) a part of a region where the fourth pixel electrode and the second extending portion overlap each other. In this case, the interlayer insulating film may include an inorganic insulating film and an organic insulating film which is greater in thickness than the inorganic insulating film, and the organic insulating film may be absent in at least (i) a part of the region where the fourth pixel electrode and the second retention capacitance line overlap each other, and (ii) a part of the region where the fourth pixel electrode and the second extending portion overlap each other.

The active matrix substrate of the present invention may further include: second retention capacitance lines each overlapping a part of edges of corresponding fourth pixel electrodes with each other; and second shield electrodes each connected to a corresponding one of the second retention capacitance lines via a contact hole, the second shield electrodes and the fourth pixel electrodes being provided in the same layer, the second shield electrode, in planar view, extending around the other part of edges of a corresponding one of the fourth pixel electrodes. In this case, an interlayer insulating film may be provided below each of the first pixel electrode, the second pixel electrode, the third pixel electrode, and the fourth pixel electrode, the interlayer insulating film including an inorganic insulating film and an organic insulating film which is greater in thickness than the inorganic insulating film.

The active matrix substrate of the present invention may further include, in each pixel region, a second coupling capacitance electrode electrically connected to the second pixel electrode, the second coupling capacitance electrode and the fourth pixel electrode overlapping each other via the interlayer insulating film which is provided below each of the first pixel electrode, the second pixel electrode, the third pixel electrode, and the fourth pixel electrode.

According to the active matrix substrate of the present invention, the switching element may include a second transistor, the second pixel electrode may be connected to, via a contact hole, a lead line led out of a conducting terminal of the second transistor, and the lead line and the second coupling capacitance electrode may be connected to each other in the same layer.

According to the active matrix substrate of the present invention, the switching element may include a second transistor, the second pixel electrode may be connected to (i) via a contact hole, a lead line led out of a conducting terminal of the second transistor, and (ii) a junction line via another contact hole, and the second coupling capacitance electrode and the junction line may be connected to each other in the same layer.

According to the active matrix substrate of the present invention, the interlayer insulating film may be less in thickness in at least a part of a region where the fourth pixel electrode and the second coupling capacitance electrode overlap each other. In this case, the interlayer insulating film may include the inorganic insulating film and the organic insulating film which is greater in thickness than the inorganic insulating film, and the organic insulating film may be absent in at least a part of the region where the fourth pixel electrode and the second coupling capacitance electrode overlap each other.

According to the active matrix substrate of the present invention, the switching element may further include a second transistor, and the second pixel electrode may be connected to, via a contact hole, a lead line led out of a conducting terminal of the second transistor.

The active matrix substrate of the present invention may further include, in each pixel region, a coupling electrode for connecting the first pixel electrode and the second pixel electrode to each other, the coupling electrode, the first pixel electrode, and the second pixel electrode being provided in the same layer.

The active matrix substrate of the present invention may further include, in each pixel region: a fourth pixel electrode connected to the second pixel electrode via a capacitance; a first coupling capacitance electrode electrically connected to the first pixel electrode; a second coupling capacitance electrode electrically connected to the second pixel electrode; and an interlayer insulating film provided below each of the first pixel electrode, the second pixel electrode, the third pixel electrode, and the fourth pixel electrode, the first coupling capacitance electrode and the third pixel electrode overlapping each other via the interlayer insulating film, the second coupling capacitance electrode and the fourth pixel electrode overlapping each other via the interlayer insulating film, an area of the overlapping of the first coupling capacitance electrode and the third pixel electrode being larger or smaller than that of the overlapping of the second coupling capacitance electrode and the fourth pixel electrode.

According to the active matrix substrate of the present invention, a center of each pixel region may be intersected by a corresponding one of the scan signal lines.

The active matrix substrate of the present invention may further include, in each pixel region, a fourth pixel electrode connected to the second pixel electrode via a capacitance, the first pixel electrode and the third pixel electrode facing each other via a gap therebetween in the one of the two parts, the second pixel electrode and the fourth pixel electrode facing each other via a gap therebetween in the other one of the two parts, each of the gap between the first pixel electrode and the third pixel electrode and the gap between the second pixel electrode and the fourth pixel electrode functioning as an alignment control structure.

The active matrix substrate of the present invention may further include, in each pixel region, a fifth pixel electrode connected to the third pixel electrode via a capacitance. Further, the active matrix substrate of the present invention may further include, in each pixel region: a fourth pixel electrode connected to the second pixel electrode via a capacitance; and a sixth pixel electrode connected to the fourth pixel electrode via a capacitance.

The active matrix substrate of the present invention may further include, in each pixel region, a fourth pixel electrode connected to the second pixel electrode via a capacitance, the first pixel electrode and the third pixel electrode, in planar view, being separated from each other by a first slit boundary which has (i) a part extending at an angle of 45° with respect to the corresponding one of the scan signal lines, and (ii) a part extending at an angle of 135° with respect to the corresponding one of the scan signal lines, the second pixel electrode and the fourth pixel electrode, in planar view, being separated from each other by a second slit boundary which has (i) a part extending at an angle of 225° with respect to the corresponding one of the scan signal lines, and (ii) a part extending at an angle of 315° with respect to the corresponding one of the scan signal lines.

The active matrix substrate of the present invention may further include, in each pixel region: a first coupling capacitance electrode electrically connected to the first pixel electrode; and a second coupling capacitance electrode electrically connected to the second pixel electrode, the first coupling capacitance electrode and the third pixel electrode overlapping each other, the second coupling capacitance electrode and the fourth pixel electrode overlapping each other, the first coupling capacitance electrode having, in planar view, at least a part extending at an angle of 45° or 135° with respect to the corresponding one of the scan signal lines, the second coupling capacitance electrode having, in planar view, at least a part extending at an angle of 225° or 315° with respect to the corresponding one of the scan signal lines.

According to the active matrix substrate of the present invention, the first pixel electrode may have a part provided, in planar view, between the third pixel electrode and the corresponding one of the scan signal lines; and the second pixel electrode may have a part provided, in planar view, between the fourth pixel electrode and the corresponding one of the scan signal lines.

The active matrix substrate of the present invention may further include: first retention capacitance lines; and second retention capacitance lines, the first retention capacitance lines being provided in such a manner that the pixel region and an upstream pixel region, which are adjacent to each other in a column direction, share one first retention capacitance line, the second retention capacitance lines being provided in such a manner that the pixel region and a down stream pixel region, which are adjacent to each other in the column direction, share one second retention capacitance line, in planar view, each of the first retention capacitance lines having one of (i) a first extending portion which extends so that the first extending portion and an edge of the third pixel electrode overlap each other, the edge of the third pixel electrode being along a corresponding one of the data signal lines, and (ii) a second extending portion which extends so that the second extending portion and an edge of the fourth pixel electrode overlap each other, the edge of the fourth pixel electrode being along a corresponding one of the data signal lines, each of the second retention capacitance lines having the other one of said (i) and (ii).

A liquid crystal panel of the present invention includes the active matrix substrate described above; and a counter substrate facing the active matrix substrate, the counter substrate having alignment control structures, the first coupling capacitance electrode having a part extending at the angle of 45° or 135° with respect to the corresponding one of the scan signal lines, below a corresponding one of the alignment control structures, the second coupling capacitance having a part extending at the angle of 225° or 315° with respect to the corresponding one of the scan signal lines, below a corresponding one of the alignment control structures.

The liquid crystal panel of the present invention includes the active matrix substrate described above. Further, a liquid crystal display unit of the present invention includes: the liquid crystal panel described above; and drivers. Furthermore, a liquid crystal display device of the present invention includes: the liquid crystal display unit described above; and an illumination device. Moreover, a television receiver of the present invention includes: the liquid crystal display device; and a tuner section for receiving a television broadcast.

As described above, according to the active matrix substrate of the present invention, the pixel region is intersected by the scan signal line. Therefore, it is possible to increase flexibility in layout of each pixel electrode. For example, by arranging both of the first and second pixel electrodes adjacent to the scan signal line, it is possible to provide (i) the pixel electrode corresponding to the dark sub-pixel to be away from the scan signal line, and simultaneously, (ii) the pixel electrodes corresponding the respective bright sub-pixels in the center of the pixel region. That is, in the liquid crystal display device including the active matrix substrate of the present invention, it is possible to prevent the bright sub-pixels belonging to different pixels, respectively, from being adjacent to each other. This enables the liquid crystal display device including the active matrix substrate to display more natural images than those of the conventional liquid crystal display device.

### Brief Description of Drawings

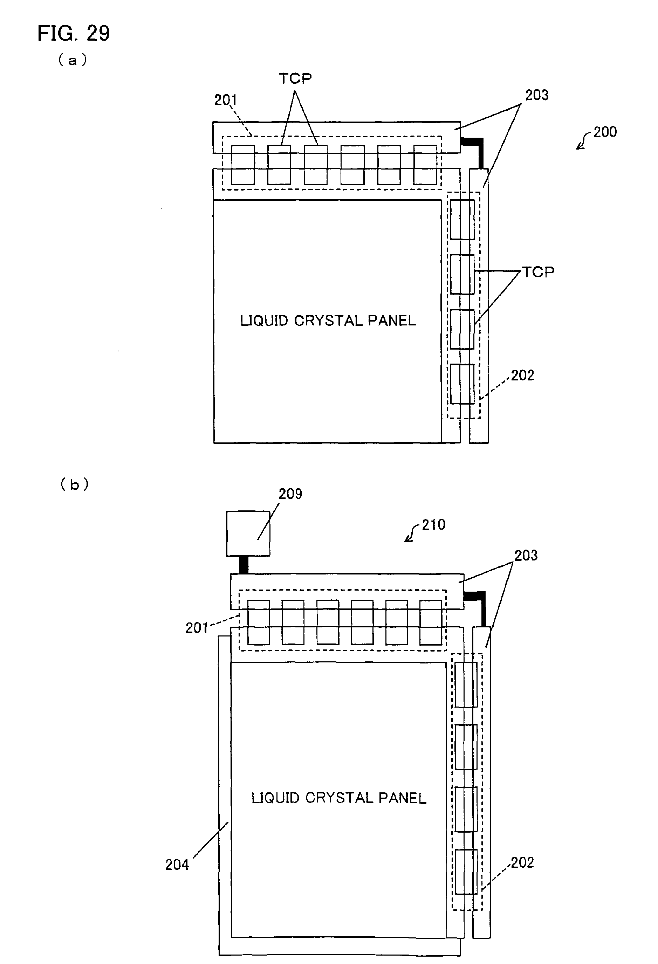

Fig. 1

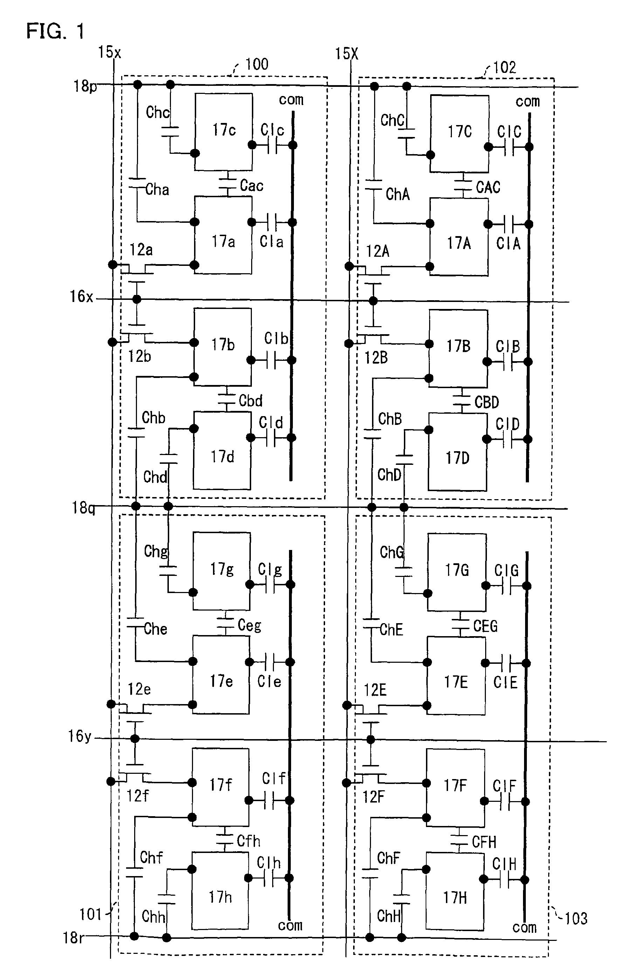

   Fig. 1 is a circuit diagram illustrating an arrangement of a liquid crystal panel in accordance with Embodiment 1.
Fig. 2

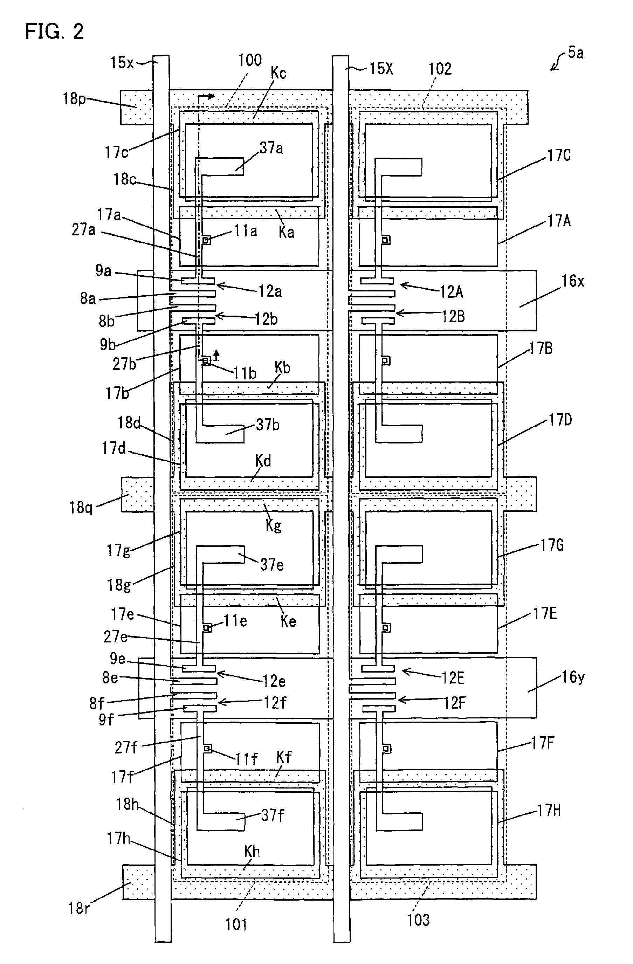

Fig. 2 is a plan view illustrating a specific example of the liquid crystal panel in accordance with Embodiment 1.
Fig. 3

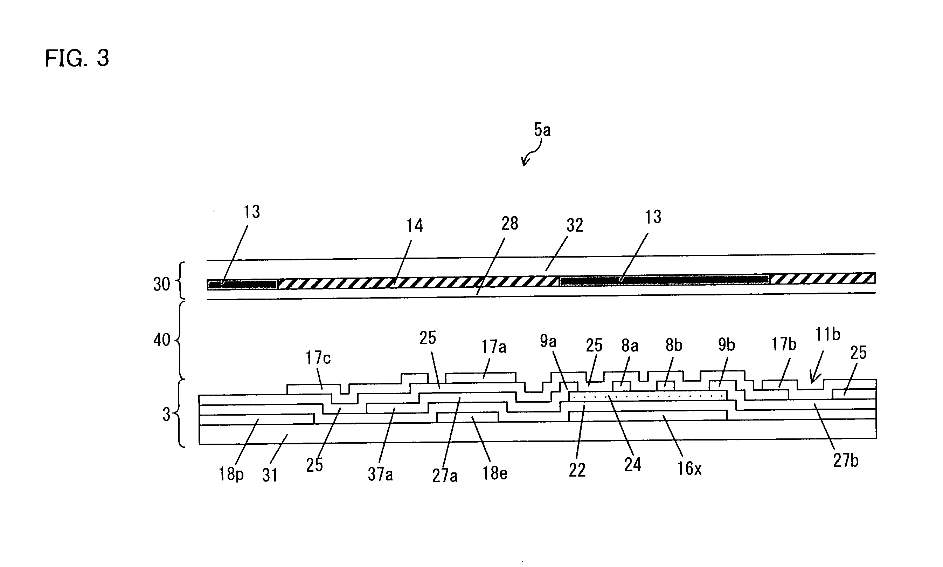

Fig. 3 is a fragmentary cross-sectional view of Fig. 2.
Fig. 4

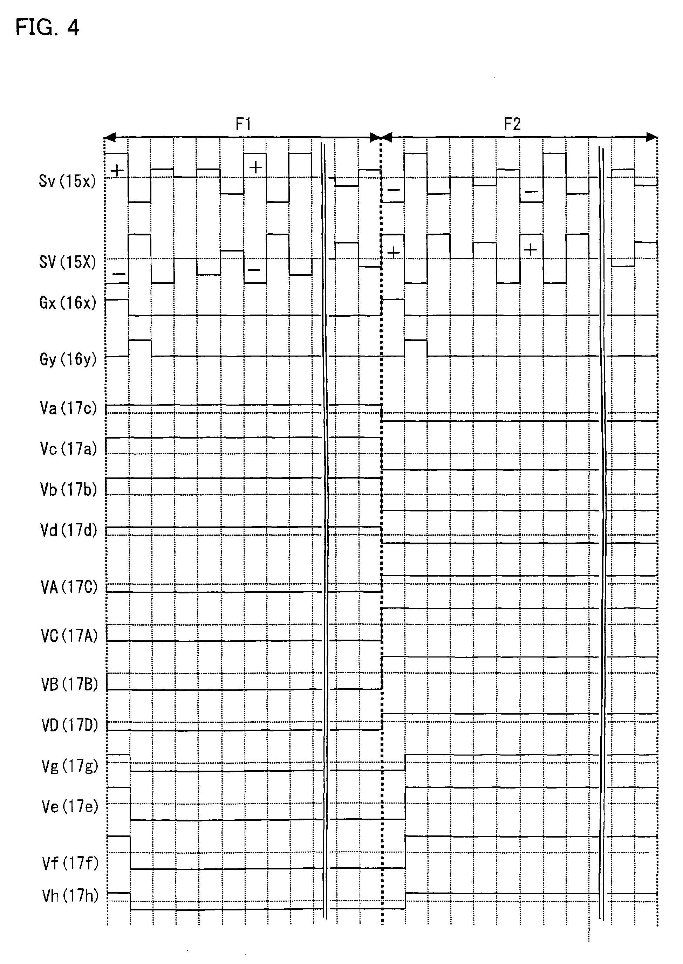

Fig. 4 is a timing chart showing how to drive a liquid crystal display device employing the liquid crystal panel of Fig. 1.
Fig. 5

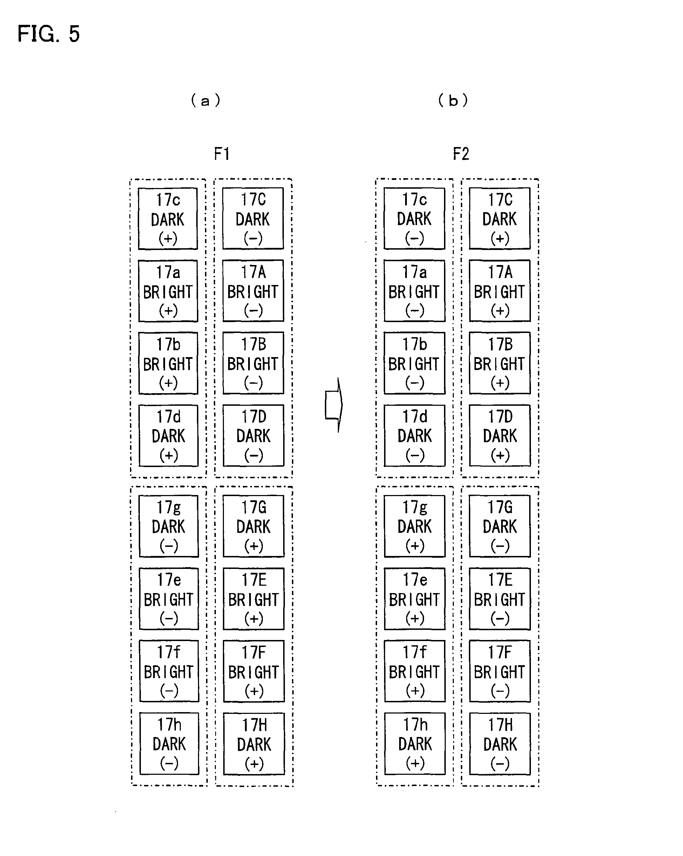

Fig. 5 is a view schematically illustrating how a display state of the liquid crystal display device changes as a frame shifts in a case where the liquid crystal display device is driven by the method of Fig. 4.
Fig. 6

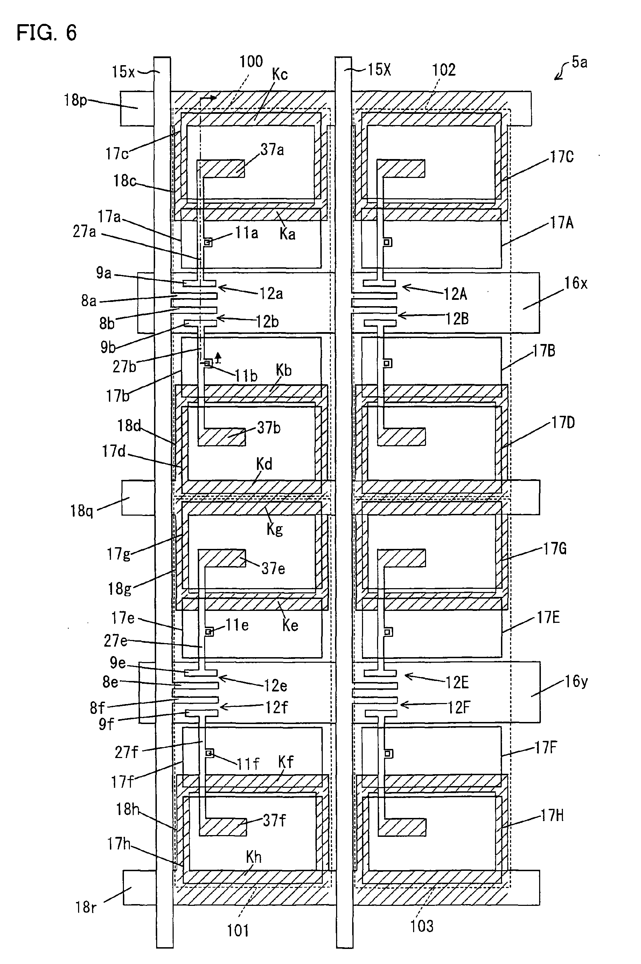

Fig. 6 is a plan view illustrating another specific example of the liquid crystal panel in accordance with Embodiment 1.
Fig. 7

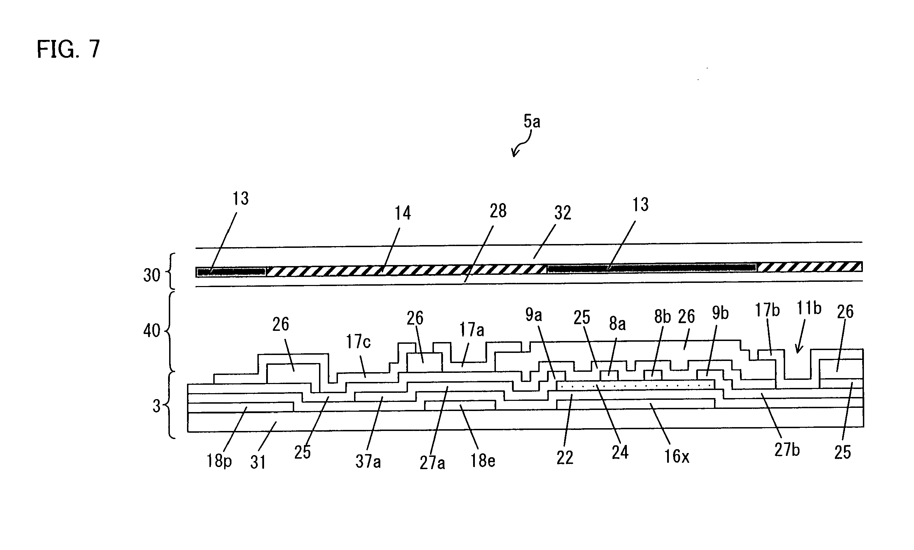

Fig. 7 is a fragmentary cross-sectional view of Fig. 6.
Fig. 8

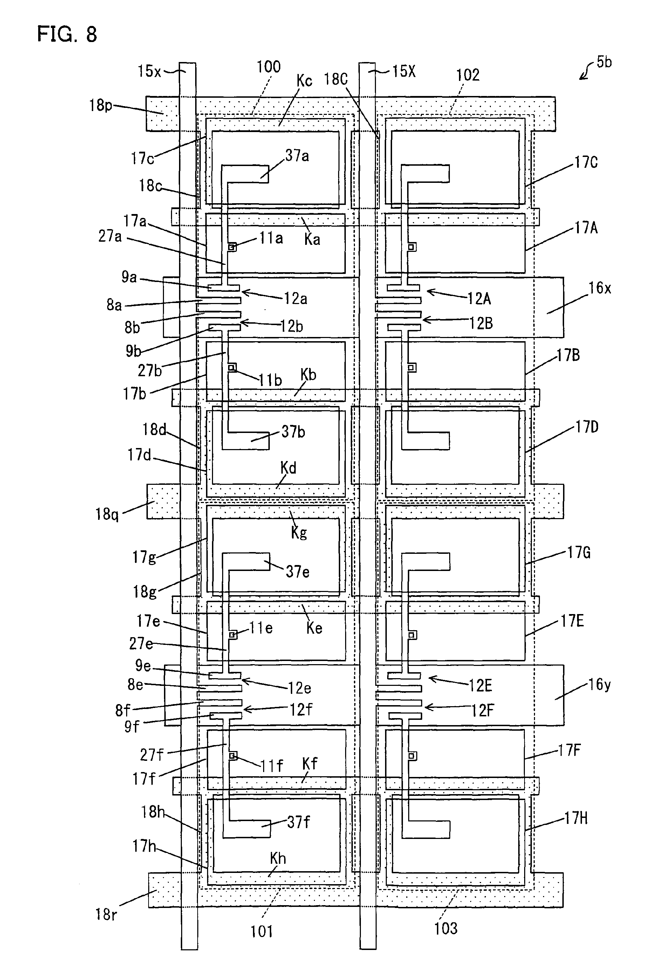

   Fig. 8 is a plan view illustrating another specific example of the liquid crystal panel in accordance with Embodiment 1.
Fig. 9

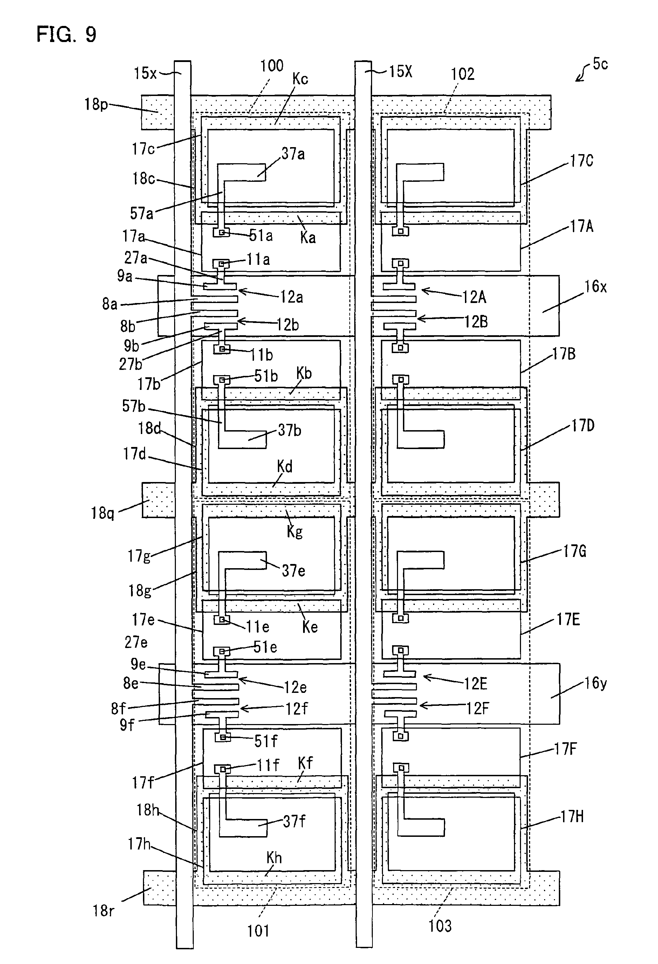

   Fig. 9 is a plan view illustrating another specific example of the liquid crystal panel in accordance with Embodiment 1.
Fig. 10

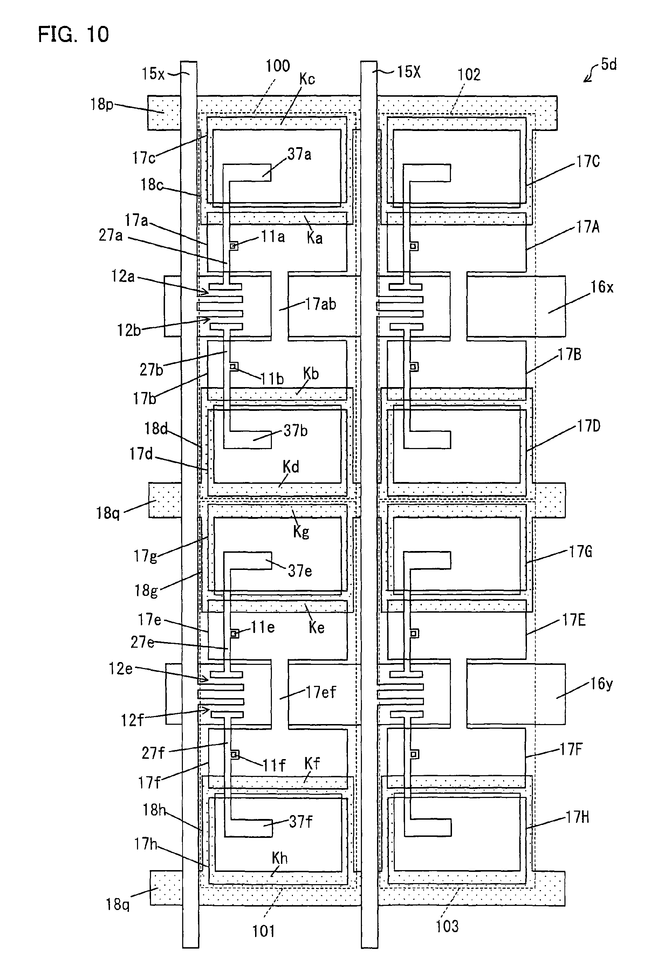

   Fig. 10 is a plan view illustrating another specific example of the liquid crystal panel in accordance with Embodiment 1.
Fig. 11

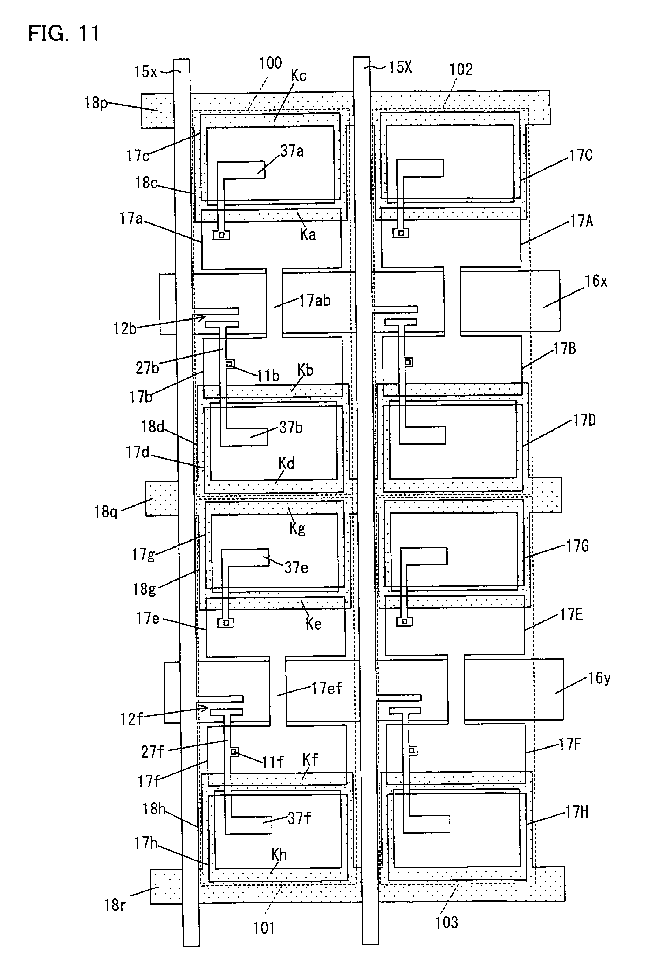

   Fig. 11 is a plan view illustrating another specific example of the liquid crystal panel in accordance with Embodiment 1.
Fig. 12

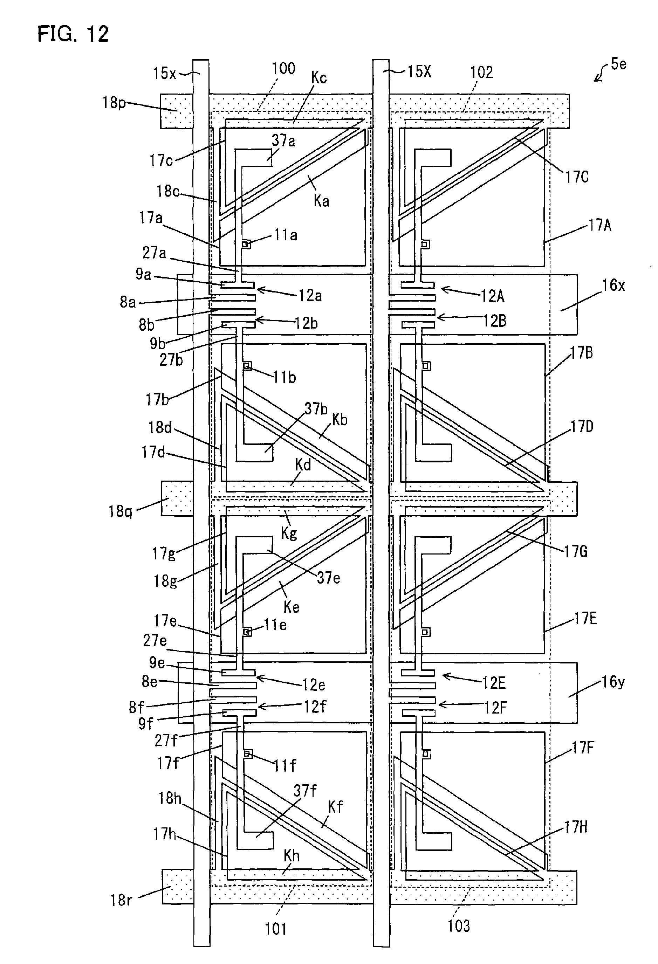

   Fig. 12 is a plan view illustrating another specific example of the liquid crystal panel in accordance with Embodiment 1.
Fig. 13

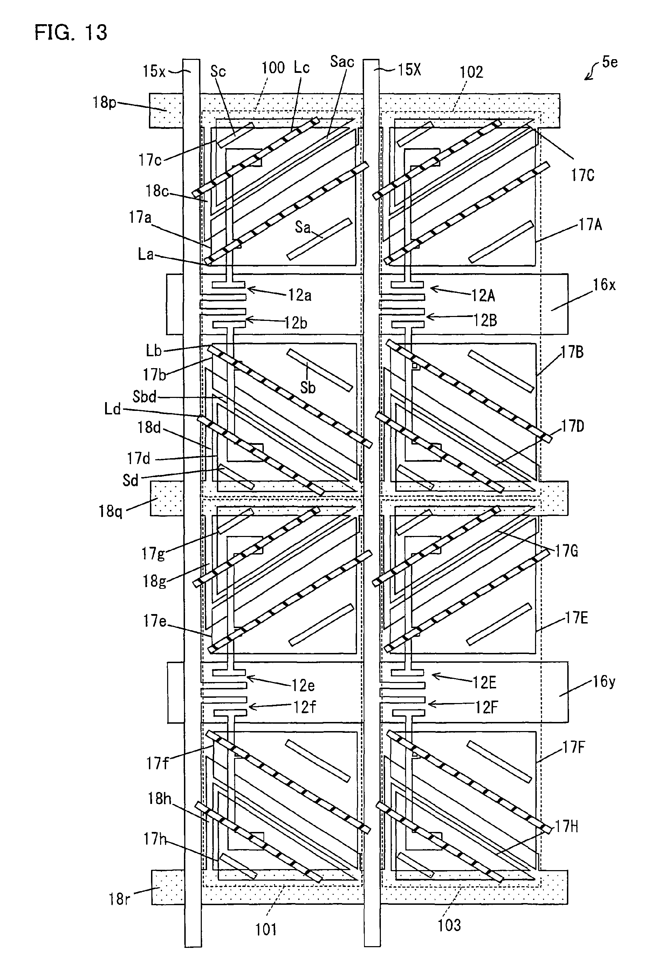

   Fig. 13 is a plan view illustrating another specific example of the liquid crystal panel in accordance with Embodiment 1.
Fig. 14

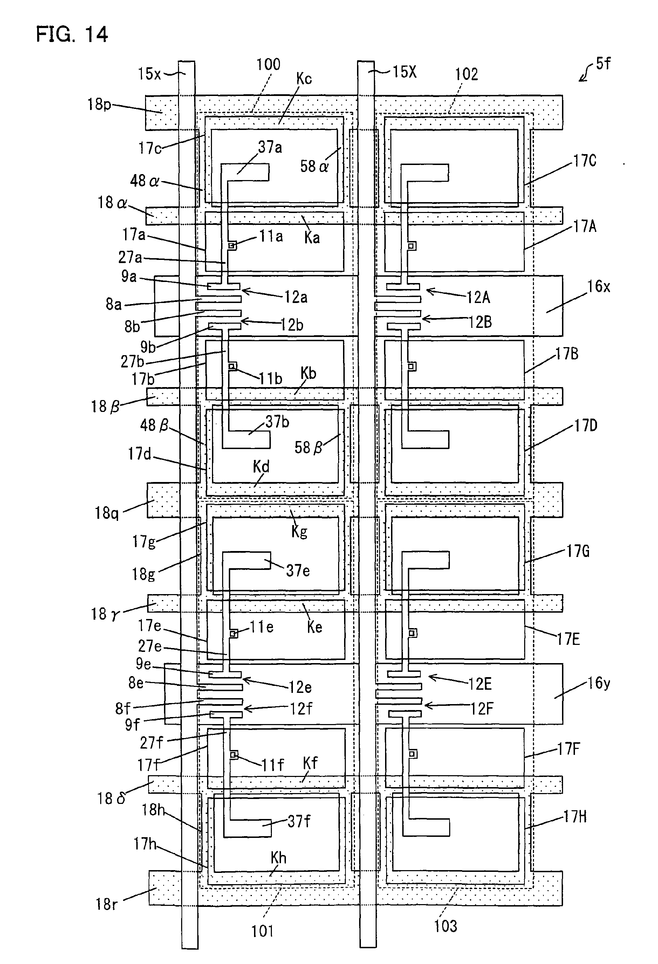

   Fig. 14 is a plan view illustrating another specific example of the liquid crystal panel in accordance with Embodiment 1.
Fig. 15

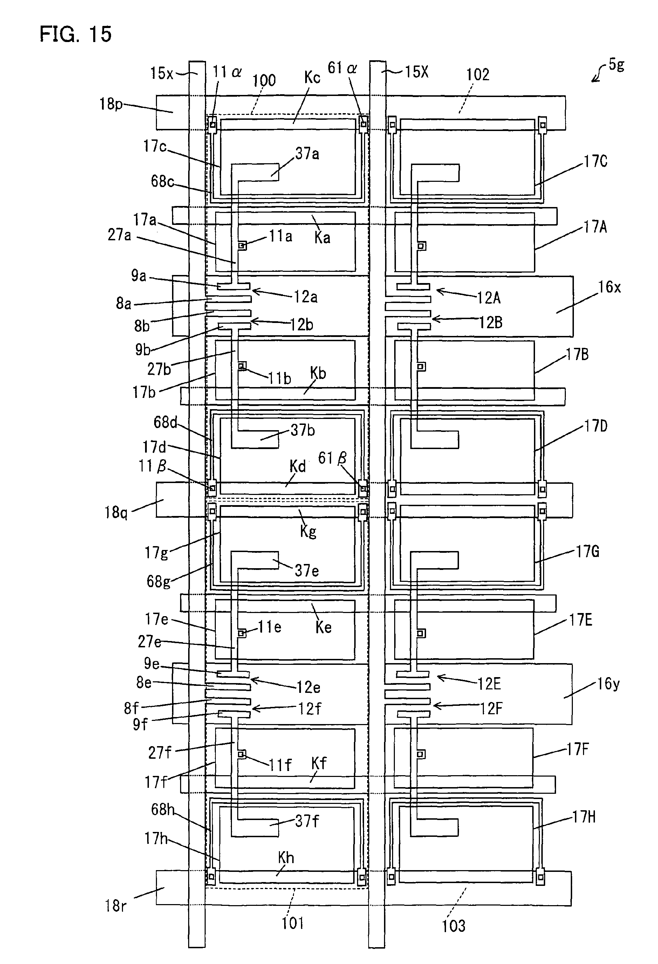

   Fig. 15 is a plan view illustrating another specific example of the liquid crystal panel in accordance with Embodiment 1.
Fig. 16

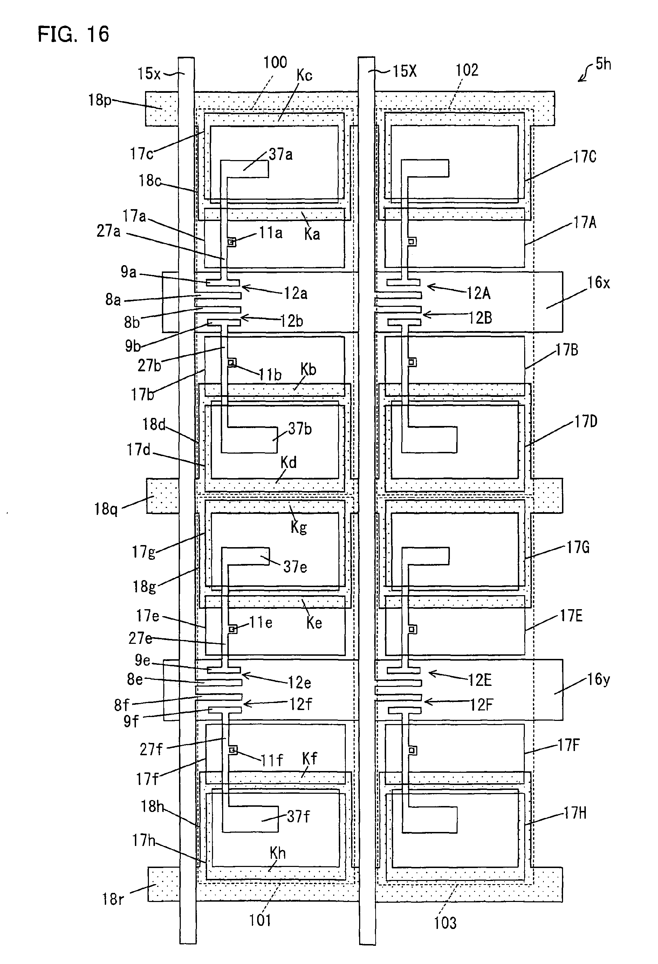

   Fig. 16 is a plan view illustrating another specific example of the liquid crystal panel in accordance with Embodiment 1.
Fig. 17

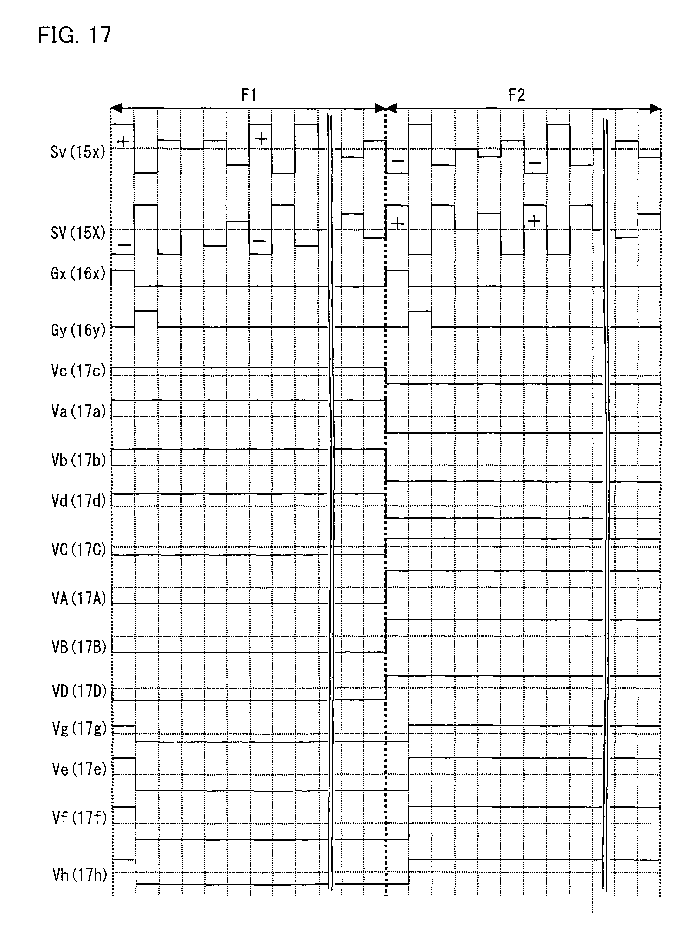

   Fig. 17 is a timing chart showing how to drive a liquid crystal display device employing the liquid crystal panel of Fig. 16.
Fig. 18

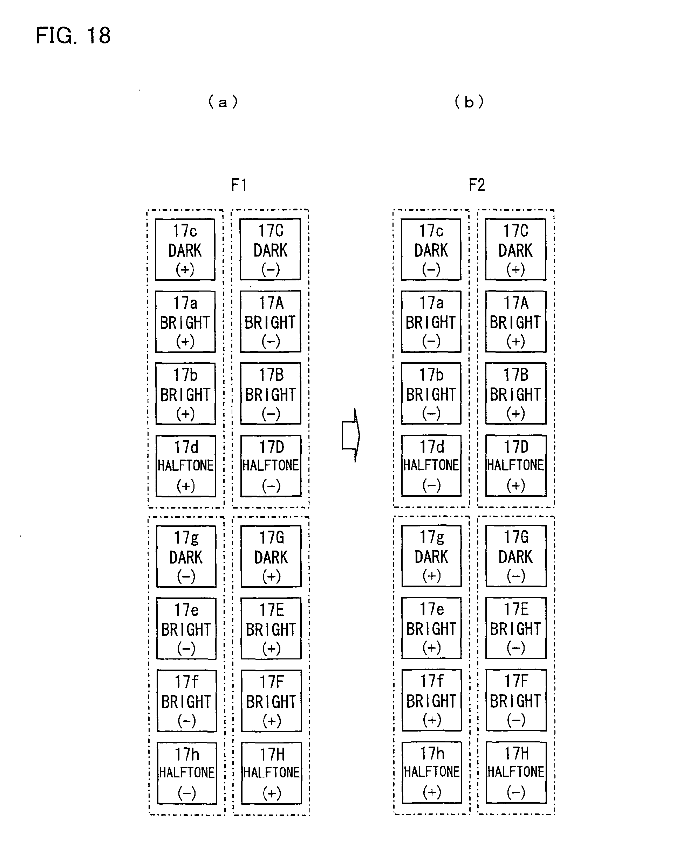

   Fig. 18 is a view schematically illustrating how a display state of the liquid crystal panel changes as a frame shifts in a case where the liquid crystal display device is driven by the method of Fig. 17.
Fig. 19

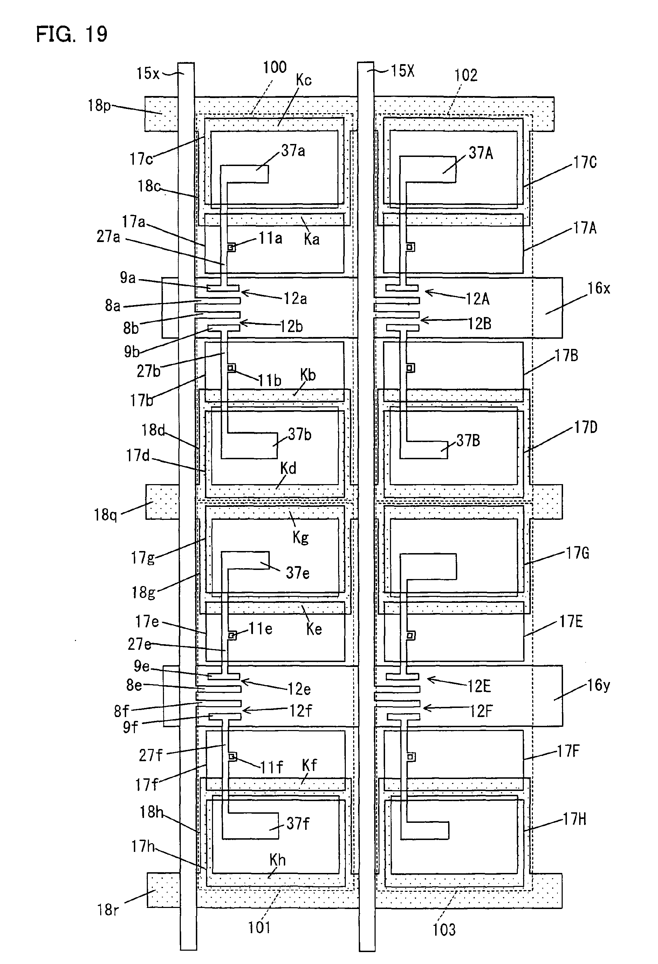

   Fig. 19 is a plan view illustrating another specific example of a liquid crystal panel of the present invention.
Fig. 20

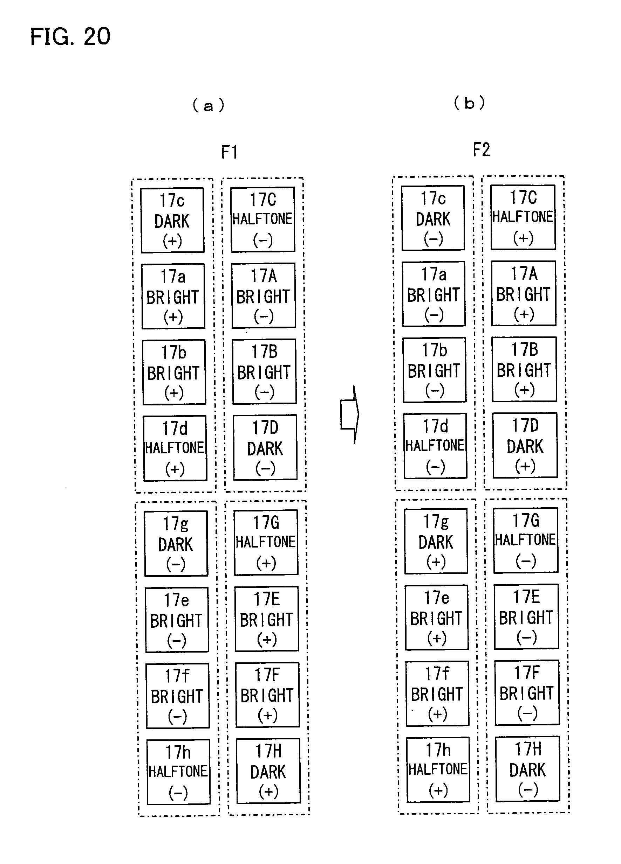

   Fig. 20 is a view schematically illustrating how a display state of a liquid crystal display device employing the liquid crystal panel of Fig. 19 changes as a frame shifts in a case where the liquid crystal display device is driven by the method (a method for driving data signal lines and scan signal lines) of Fig. 17.
Fig. 21

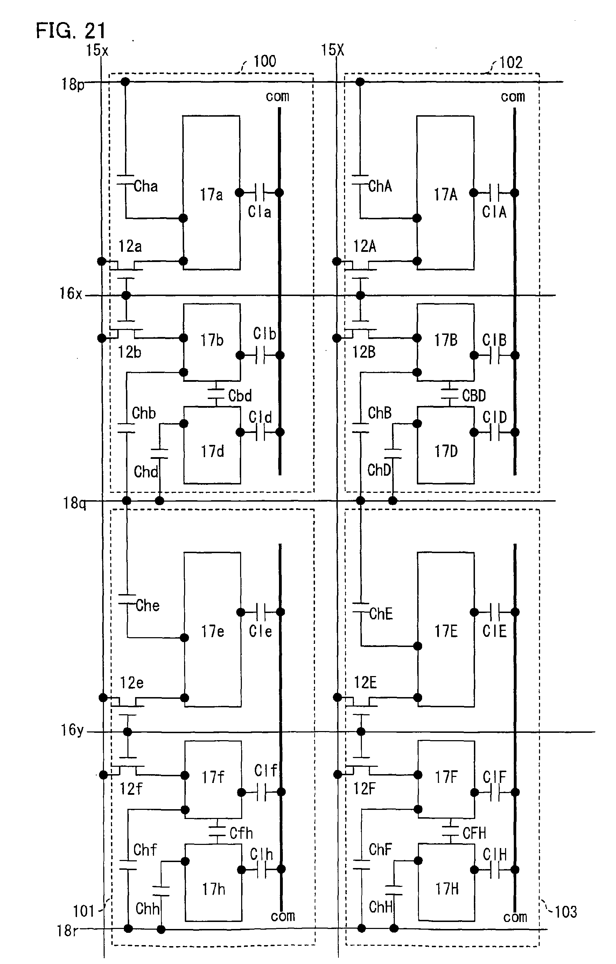

   Fig. 21 is a circuit diagram illustrating an arrangement of a liquid crystal panel in accordance with Embodiment 2.
Fig. 22

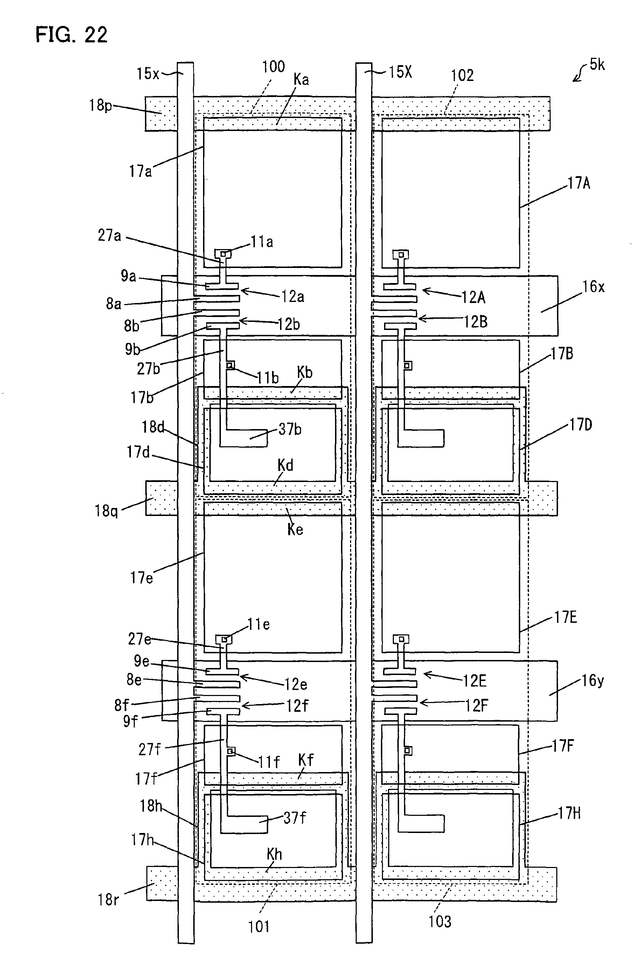

   Fig. 22 is a plan view illustrating a specific example of the liquid crystal panel in accordance with Embodiment 2.
Fig. 23

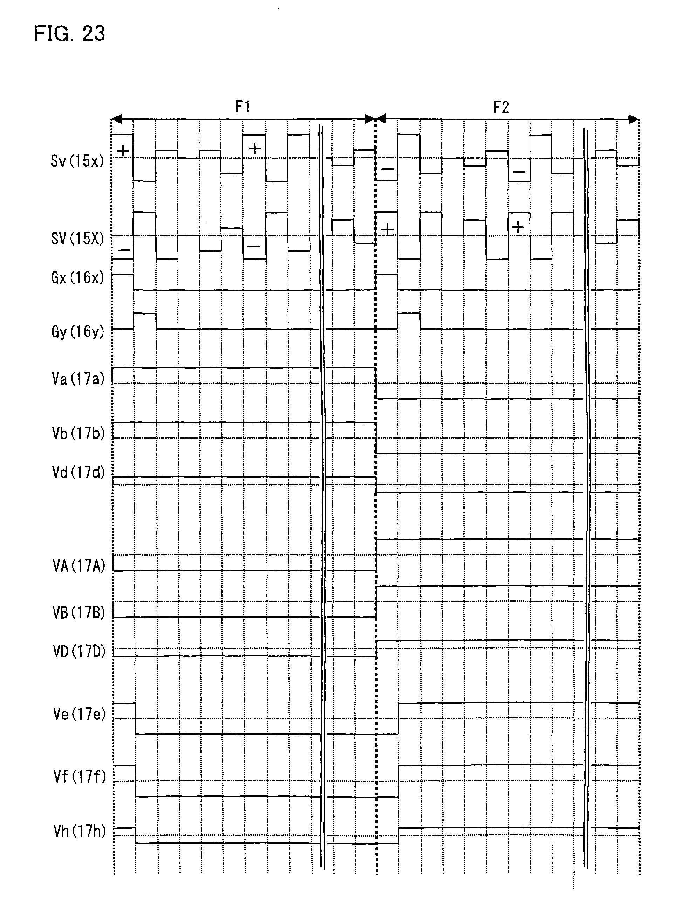

   Fig. 23 is a timing chart showing how to drive a liquid crystal display device employing the liquid crystal panel of Fig. 22.
Fig. 24

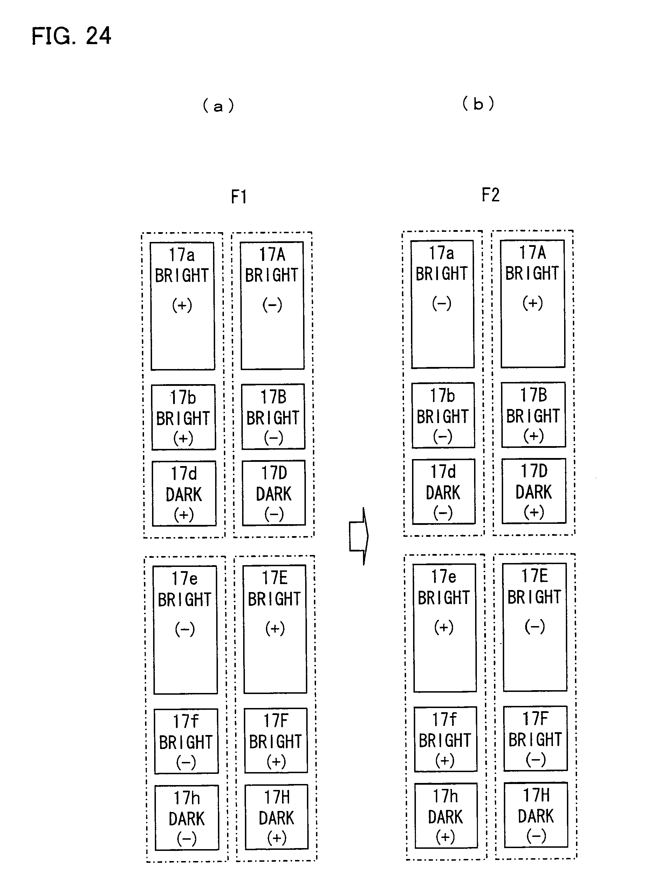

   Fig. 24 is a view schematically illustrating how a display state of the liquid crystal display device changes as a frame shifts in a case where the liquid crystal display device is driven by the method of Fig. 23.
Fig. 25

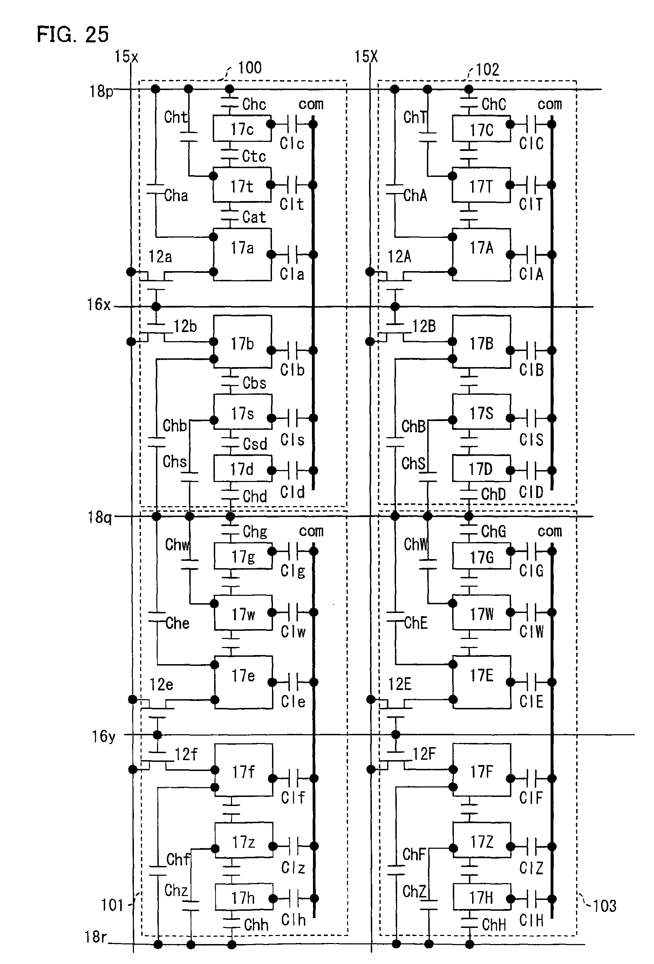

   Fig. 25 is a circuit diagram illustrating an arrangement of a liquid crystal panel in accordance with Embodiment 3.
Fig. 26

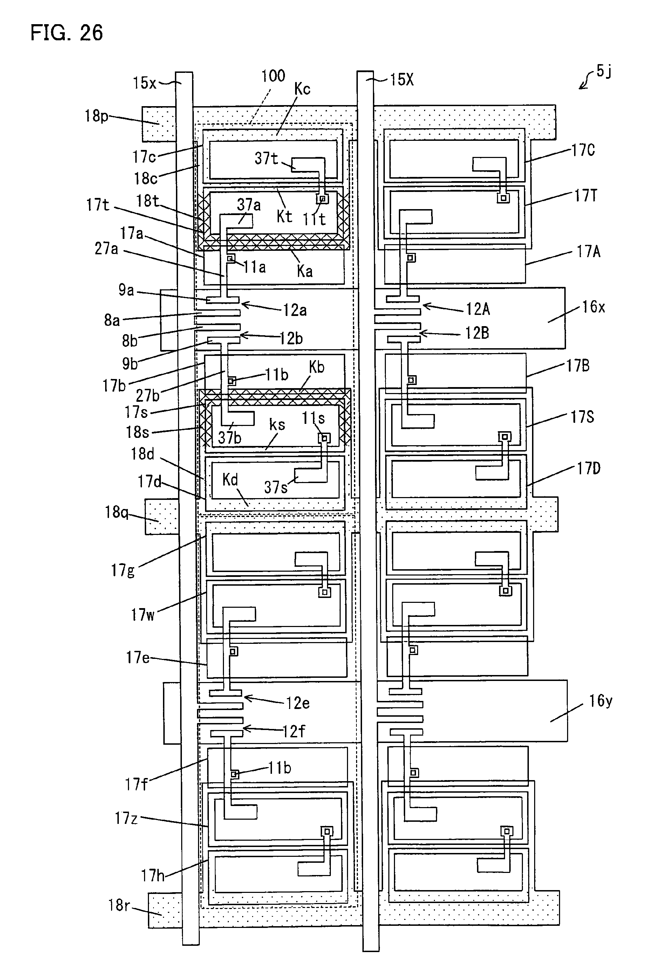

   Fig. 26 is a plan view illustrating a specific example of the liquid crystal panel in accordance with Embodiment 3.
Fig. 27

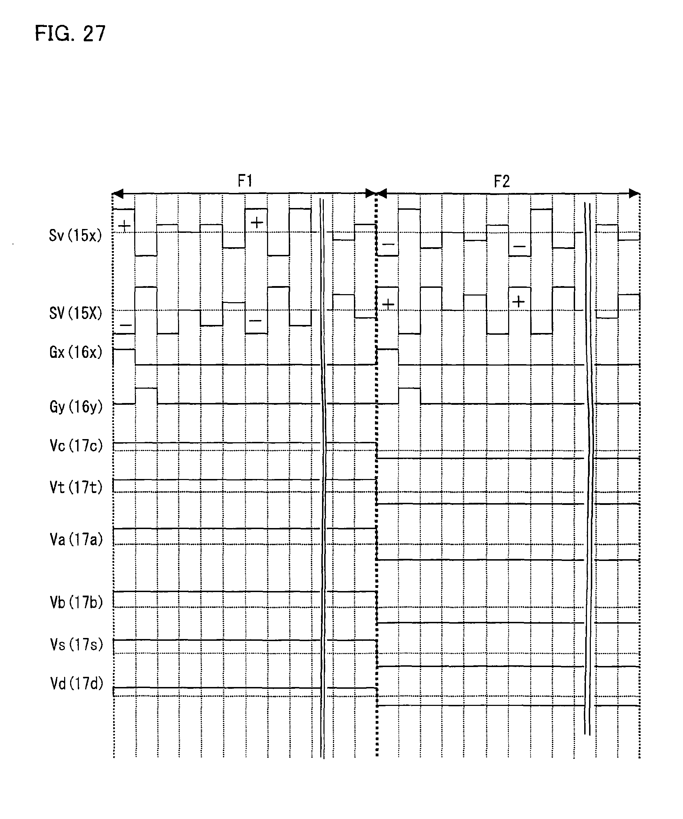

   Fig. 27 is a timing chart showing how to drive a liquid crystal display device employing the liquid crystal panel of Fig. 25.
Fig. 28

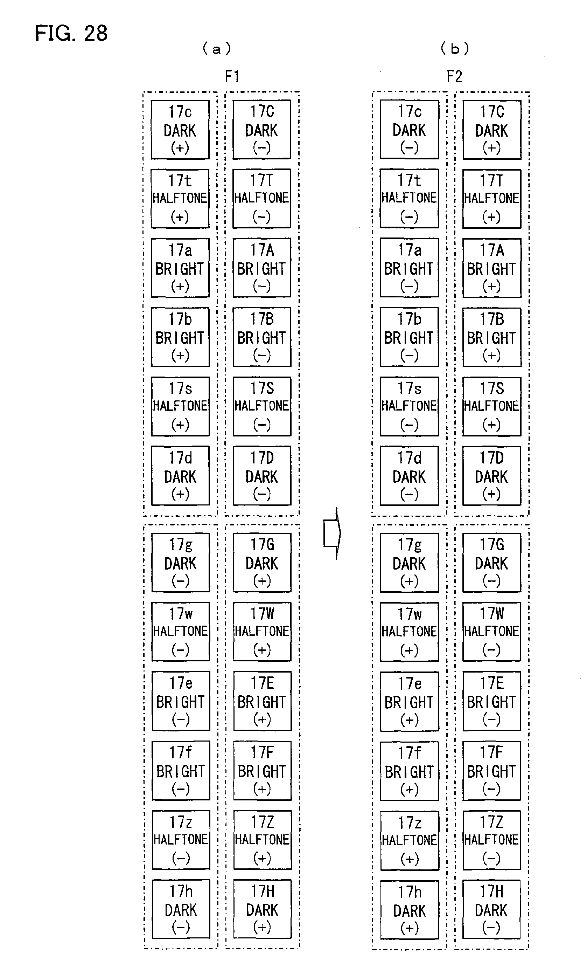

   Fig. 28 is a view schematically illustrating how a display state of the liquid crystal display device changes as a frame shifts in a case where the liquid crystal display device is driven by the method of Fig. 27.
Fig. 29
   (a) of Fig. 29 is a view schematically illustrating an arrangement of a liquid crystal display unit of the present invention, and (b) of Fig. 29 is a view schematically illustrating an arrangement of a liquid crystal display device of the present invention.
Fig. 30

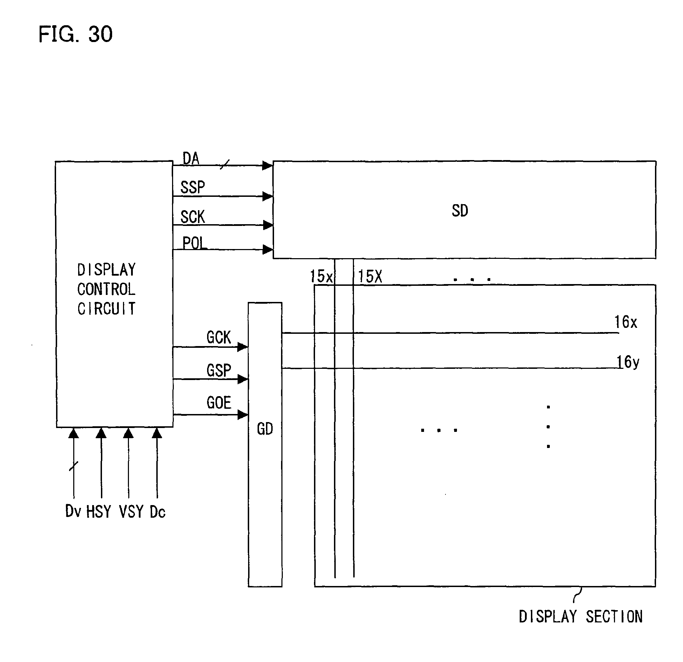

   Fig. 30 is a block diagram illustrating an entire arrangement of the liquid crystal display device of the present invention.
Fig. 31

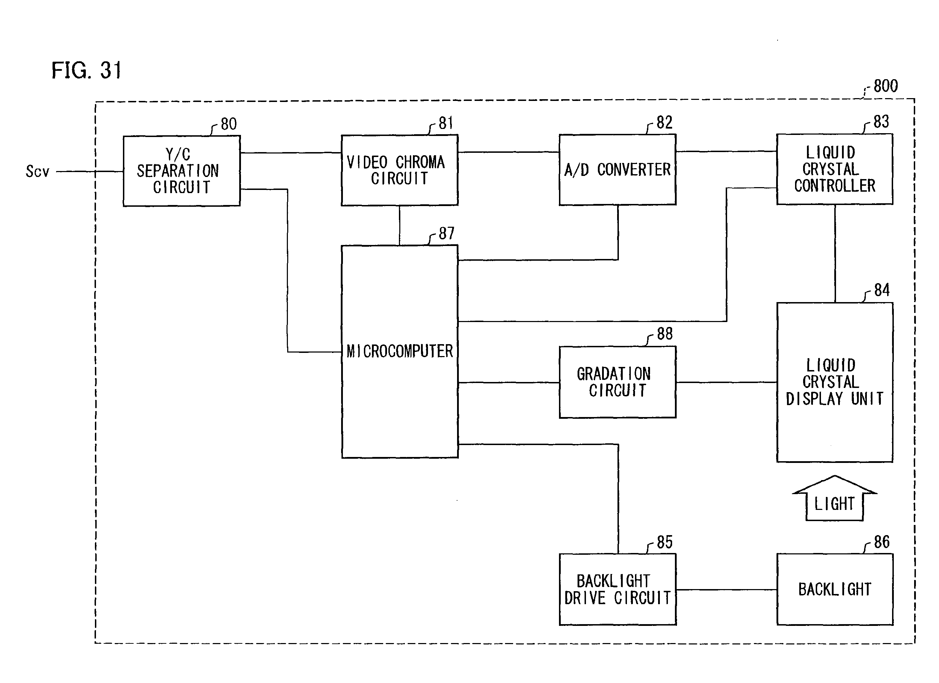

   Fig. 31 is a block diagram illustrating each function of the liquid crystal display device of the present invention.
Fig. 32

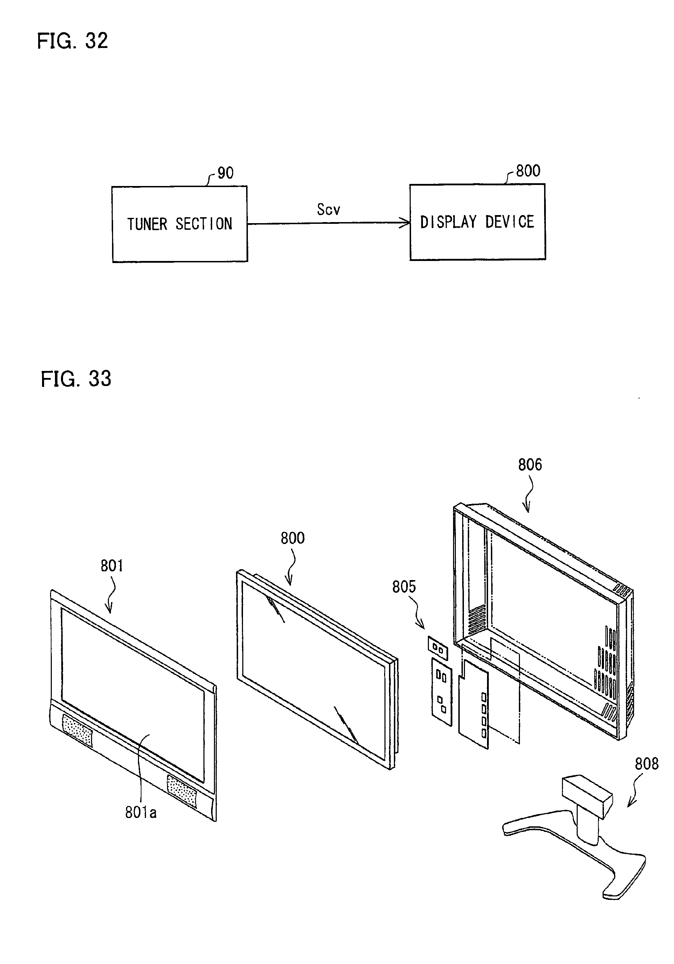

   Fig. 32 is a block diagram illustrating a function of a television receiver of the present invention.
Fig. 33
   Fig. 33 is an exploded perspective view illustrating an arrangement of the television receiver of the present invention.
Fig. 34

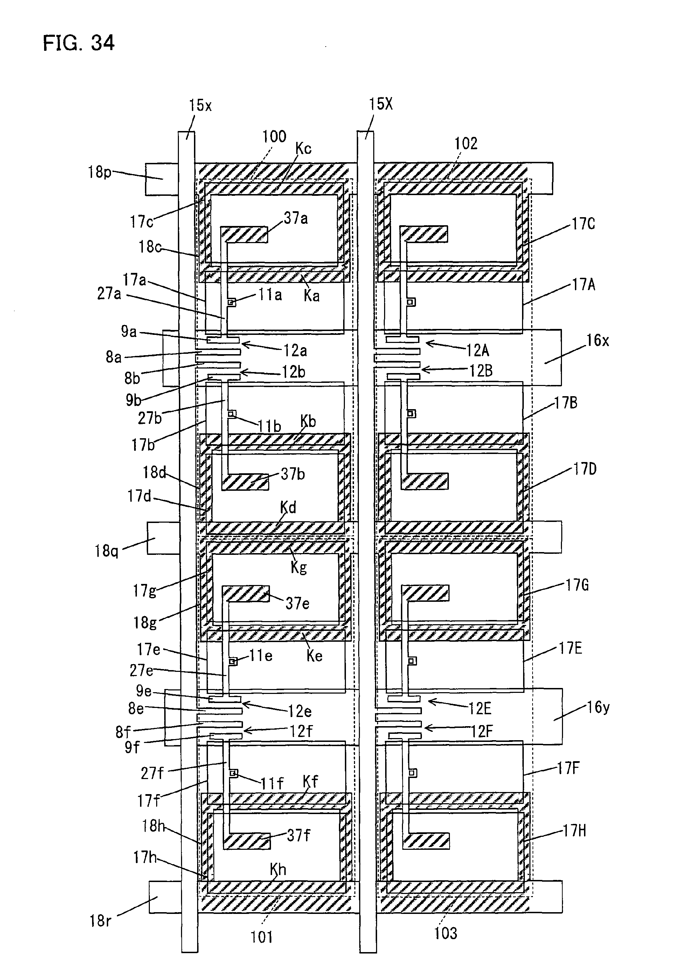

   Fig. 34 is a plan view illustrating another specific example of the liquid crystal panel in accordance with Embodiment 1.
Fig. 35

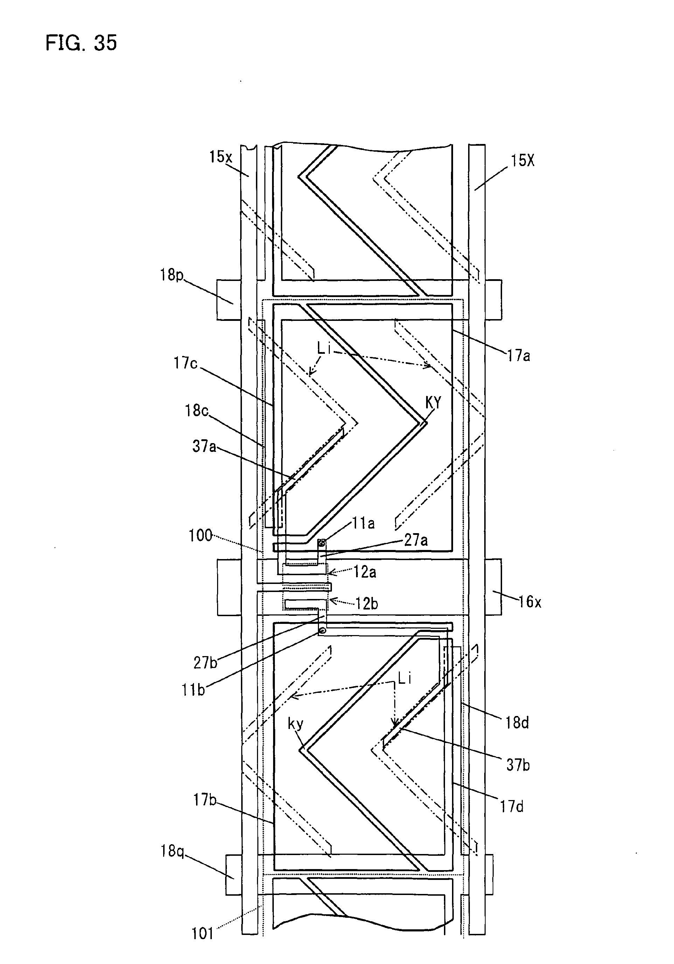

   Fig. 35 is a plan view illustrating another specific example of the liquid crystal panel in accordance with Embodiment 1.
Fig. 36
   Fig. 36 is a plan view illustrating an arrangement of a conventional liquid crystal panel.
Fig. 37
   Fig. 37 is a plan view illustrating an arrangement of another conventional liquid crystal panel.

### Reference Signs List

5a to 5h, 5j, 5k: Liquid crystal panel
11a, 11b, 11e, 11f: Contact hole
12a, 12b, 12e, 12f: Transistor
12A, 12B, 12E, 12F: Transistor
15x, 15X: Data signal line
16x, 16y: Scan signal line
17a to 17h: Pixel electrode
17A to 17H: Pixel electrode
18p to 18r: Retention capacitance line
18α to 18δ: Sub-line
22: Inorganic gate insulating film
24: Semiconductor layer
25: Inorganic interlayer insulating film
26: Organic interlayer insulating film
37a, 37b, 37A, 37B: Coupling capacitance electrode
84: Liquid crystal display unit
100 to 103: Pixel
800: Liquid crystal display device

### Description of Embodiments

Embodiments of the present invention are described below with reference to Figs. 1 through 35. Hereinafter, a direction in which a scan signal line is extended is referred to as "row direction" for the sake of simple explanation. Note, however, that, as a matter of course, in a case where a liquid crystal display device (or a liquid crystal panel or an active matrix substrate, either of which is employed in the liquid crystal display device) of the present invention is in actual use (when the liquid crystal display device is viewed), the scan signal line employed in the liquid crystal display device may lie in a horizontal direction or in a vertical direction in accordance with orientation of the liquid crystal display device.

### [Embodiment 1]

Fig. 1 is an equivalent circuit diagram illustrating a part of a liquid crystal panel in accordance with Embodiment 1. The liquid crystal panel includes: data signal lines (15x and 15X) extending in a column direction (an upper-lower direction in Fig. 1); scan signal lines (16x and 16y) extending in the row direction (a right-left direction in Fig. 1); pixels (100 through 103) arranged along the row and column directions; a retention capacitance lines (18p, 18q, and 18r); and a common electrode (counter electrode) com (see Fig. 1). The pixels 100 through 103 are identical with each other in structure. Note that a pixel column including the pixels 100 and 101 and a pixel column including the pixels 102 and 103 are adjacent to each other, while a pixel row including the pixels 100 and 102 and a pixel row including the pixels 101 and 103 are adjacent to each other.

The liquid crystal panel has an arrangement in which a single data signal line and a single scan signal line are provided with respect to a corresponding pixel, and a single retention capacitance line is provided with respect to corresponding two pixels which are adjacent to each other in the column direction. Further, pixel electrodes are provided four per pixel. Four pixel electrodes 17c, 17a, 17b, and 17d, provided in the pixel 100, and four pixel electrodes 17g, 17e, 17f, and 17h, provided in the pixel 101, are arranged in a line, while four pixel electrodes 17C, 17A, 17B, and 17D, provided in the pixel 102, and four pixel electrodes 17G, 17E, 17F, and 17H, provided in the pixel 103, are arranged in a line. The pixel electrodes 17c and 17C, 17a and 17A, 17b and 17B, 17d and 17D, 17g and 17G, 17e and 17E, 17f and 17F, and 17h and 17H are adjacent to each other in the row direction, independently.

The following description deals with an arrangement of the pixel 100. The pixel electrodes 17a and 17c are connected to each other via a coupling capacitance Cac, while the pixel electrodes 17b and 17d are connected to each other via a coupling capacitance Cbd. The pixel electrode 17a is connected to the data signal line 15x via a transistor 12a connected to the scan signal line 16x, while the pixel electrode 17b is connected to the data signal line 15x via a transistor 12b connected to the scan signal line 16x. A retention capacitance. Chc is formed between the pixel electrode 17c and both of the retention capacitance line 18p and an extending portion of the retention capacitance line 18p. A retention capacitance Cha is formed between the pixel electrode 17a and the extending portion of the retention capacitance line 18p. A retention capacitance Chb is formed between the pixel electrode 17b and an extending portion of the retention capacitance line 18q. A retention capacitance Chd is formed between the pixel electrode 17d and both of the retention capacitance line 18q and the extending portion of the retention capacitance line 18q. Note that (i) a liquid crystal capacitance. Clc is formed between the pixel electrode 17c and the common electrode com, (ii) a liquid crystal capacitance Cla is formed between the pixel electrode 17a and the common electrode com, (iii) a liquid crystal capacitance Clb is formed between the pixel electrode 17b and the common electrode com, and (iv) a liquid crystal capacitance Cld is formed between the pixel electrode 17d and the common electrode com.

Meanwhile, the pixel 101 which is adjacent to the pixel 100 in the column direction has the following arrangement. The pixel electrodes 17e and 17g are connected to each other via a coupling capacitance Ceg, while the pixel electrodes 17f and 17h are connected to each other via a coupling capacitance Cfh. The pixel electrode 17e is connected to the data signal line 15x via a transistor 12e connected to the scan signal line 16y, while the pixel electrode 17f is connected to the data signal line 15x via a transistor 12f connected to the scan signal line 16y. A retention capacitance Chg is formed between the pixel electrode 17g and both of the retention capacitance line 18q and the extending portion of the retention capacitance line 18q. A retention capacitance Che is formed between the pixel electrode 17e and the extending portion of the retention capacitance line 18q. A retention capacitance Chf is formed between the pixel electrode 17f and an extending portion of the retention capacitance line 18r. A retention capacitance Chh is formed between the pixel electrode 17h and both of the retention capacitance line 18r and the extending portion of the retention capacitance line 18r. Note that (i) a liquid crystal capacitance Clg is formed between the pixel electrode 17g and the common electrode com, (ii) a liquid crystal capacitance Cle is formed between the pixel electrode 17e and the common electrode com, (iii) a liquid crystal capacitance Clf is formed between the pixel electrode 17f and the common electrode com, and (iv) a liquid crystal capacitance Clh is formed between the pixel electrode 17h and the common electrode com.

Further, the pixel 102 which is adjacent to the pixel 100 in the row direction has the following arrangement. The pixel electrodes 17A and 17C are connected to each other via a coupling capacitance CAC, while the pixel electrodes 17B and 17D are connected to each other via a coupling capacitance CBD. The pixel electrode 17A is connected to the data signal line 15X via a transistor 12A connected to the scan signal line 16x, while the pixel electrode 17B is connected to the data signal line 15X via a transistor 12B connected to the scan signal line 16x. A retention capacitance ChC is formed between the pixel electrode 17C and both of the retention capacitance line 18p and the extending portion of the retention capacitance line 18p. A retention capacitance ChA is formed between the pixel electrode 17A and the extending portion of the retention capacitance line 18p. A retention capacitance ChB is formed between the pixel electrode 17B and the extending portion of the retention capacitance line 18q. A retention capacitance ChD is formed between the pixel electrode 17D and both of the retention capacitance line 18q and the extending portion of the retention capacitance line 18q. Note that (i) a liquid crystal capacitance C1C is formed between the pixel electrode 17C and the common electrode com, (ii) a liquid crystal capacitance C1A is formed between the pixel electrode 17A and the common electrode com, (iii) a liquid crystal capacitance C1B is formed between the pixel electrode 17B and the common electrode com, and (iv) a liquid crystal capacitance C1D is formed between the pixel electrode 17D and the common electrode com.

A liquid crystal display device employing the liquid crystal panel of the present embodiment is subjected to sequential scanning. The scan signal lines 16x and 16y are sequentially selected. In a case where the scan signal line 16x is selected, for example, (i) the pixel electrode 17a is connected to the data signal line 15x (via the transistor 12a), (ii) the pixel electrode 17c is capacitively-coupled with the data signal line 15x (via the transistor 12a and the pixel electrode 17a), (iii) the pixel electrode 17b is connected to the data signal line 15x (via the transistor 12b), and (iv) the pixel electrode 17d is capacitively-coupled with the data signal line 15x (via the transistor 12b and the pixel electrode 17b). In this case, an electric potential Vc of the pixel electrode 17c, which Vc is obtained after the transistor 12a is turned off, can be represented by an equation of "Vc = Va × (C1/(Cli + Chj + C1))", and an electric potential Vd of the pixel electrode 17d, which Vd is obtained after the transistor 12b is turned off, can be represented by an equation of "Vd = Vb × (C2/(Cli + Chj + C2))" (where Cli = a capacitance value of Cla = a capacitance value of Clb, Clj = a capacitance value of Clc = a capacitance value of Cld, Chi = a capacitance value of Cha = a capacitance value of Chb, Chj = a capacitance value of Chc = a capacitance value of Chd, C1 = a capacitance value of Cac, C2 = a capacitance value of Cbd, Va is an electric potential of the pixel electrode 17a, which Va is obtained after the transistor 12a is turned off, and Vb is an electric potential of the pixel electrode 17b, which Vb is obtained after the transistor 12b is turned off). Here, Va and Vb are equal to each other. Therefore, by setting C1 and C2 to be equal to each other, a formula of "|Va| = |Vb| ≥ |Vc| = |Vd|" can be obtained (note that |Va| represents a potential difference between Va and Vcom (an electric potential of the common electrode com), for example). It follows that a sub-pixel including the pixel electrode 17a and a sub-pixel including the pixel electrode 17b are bright sub-pixels having substantially the same luminance, while a sub-pixel including the pixel electrode 17c and a sub-pixel including the pixel electrode 17d are dark sub-pixels having substantially the same luminance. In the same manner, a sub-pixel including the pixel electrode 17A and a sub-pixel including the pixel electrode 17B are bright sub-pixels having substantially the same luminance, while a sub-pixel including the pixel electrode 17C and a sub-pixel including the pixel electrode 17D are dark sub-pixels having substantially the same luminance. Further, in a case where the scan signal line 16y is selected, for example, (i) a sub-pixel including the pixel electrode 17e and a sub-pixel including the pixel electrode 17f are bright sub-pixels having substantially the same luminance, (ii) a sub-pixel including the pixel electrode 17g and a sub-pixel including the pixel electrode 17h are dark sub-pixels having substantially the same luminance, (iii) a sub-pixel including the pixel electrode 17E and a sub-pixel including the pixel electrode 17F are bright sub-pixels having substantially the same luminance, and (iv) a sub-pixel including the pixel electrode 17G and a sub-pixel including the pixel electrode 17H are dark sub-pixels having substantially the same luminance.

Fig. 2 illustrates a specific example of the liquid crystal panel of the present embodiment. The following description deals with a liquid crystal panel 5a of Fig. 2. Each pixel is divided into two parts (regions) by a corresponding scan signal line intersecting the pixel. In one of the two parts, a first pixel electrode which is connected to a transistor is provided adjacent to the scan signal line, and a second pixel electrode which is connected to the first pixel electrode via a capacitance is provided adjacent to one of two edges of the pixel, which two edges extend along the row direction. In the other one of the two parts, a third pixel electrode connected to a transistor is provided adjacent to the scan signal line, and a fourth pixel electrode which is connected to the third pixel electrode via a capacitance is provided adjacent to the other one of two edges of the pixel. Further, a single retention capacitance line having extending portions is provided with respect to corresponding two pixel rows which are adjacent to each other (so that the retention capacitance line and the two pixel rows overlap each other). Specifically, the retention capacitance line and a part of edges (periphery) of a pixel electrode overlap each other, while, in planar view, the extending portion (i) extends so that the extending portion and the other part of edges of the pixel electrode overlap each other, or, alternatively, (ii) extends around

the other part of edges of the pixel electrode and then merges into the retention capacitance line again.

Specifically, (i) the data signal line 15x is provided along the pixels 100 and 101, (ii) the data signal line 15X is provided along the pixels 102 and 103, (iii) the scan signal line 16x intersects both of a center of the pixel 100 and a center of the pixel 102, and (iv) the scan signal line 16y intersects both of a center of the pixel 101 and a center of the pixel 103. The retention capacitance line 18p overlaps: the pixel row including the pixels 100 and 102, with each other; and another pixel row (located on an upper side with respect to the pixel row including the pixels 100 and 102 in Fig. 2), with each other. The retention capacitance line 18q overlaps: the pixel row including the 100 and 102, with each other; and the pixel row including the pixels 101 and 103, with each other. The retention capacitance line 18r overlaps: the pixel row including the pixels 101 and 103, with each other; and another pixel row (located on a lower side with respect to the pixel row including the pixels 101 and 103 in Fig. 2), with each other. In the pixel 100, for example, on the upper side with respect to the scan signal line 16x intersecting the center of the pixel 100 in Fig. 2, the pixel electrode 17a, which has a rectangular shape and is connected to the transistor 12a, is provided adjacent to the scan signal line 16x, while the pixel electrode 17c, which has a rectangular shape and is connected to the pixel electrode 17a via the capacitance, is provided adjacent to one of two edges of the pixel 100, which two edges extend along the row direction. Meanwhile, on the lower side with respect to the scan signal line 16x in Fig. 2, the pixel electrode 17b, which has a rectangular shape and is connected to the transistor 12b, is provided adjacent to the scan signal line 16x, while the pixel electrode 17d, which has a rectangular shape and is connected to the pixel electrode 17b via the capacitance, is provided adjacent to the other one of two edges of the pixel 100. A source electrode 8a and a drain electrode 9a of the transistor 12a, and a source electrode 8b and a drain electrode 9b of the transistor 12b are provided on the scan signal line 16x. The source electrode 8a is connected to the data signal line 15x. The drain electrode 9a is connected to a drain lead line 27a which is connected to: a coupling capacitance electrode 37a in the same layer; and the pixel electrode 17a via a contact hole 11a. The coupling capacitance electrode 37a and the pixel electrode 17c overlap each other via an interlayer insulating film. The coupling capacitance Cac (see Fig. 1) between the pixel electrodes 17a and 17c is thus formed. Further, the source electrode 8b is connected to the data signal line 15x. The drain electrode 9b is connected to a drain lead line 27b which is connected to: a coupling capacitance electrode 37b in the same layer; and the pixel electrode 17b via a contact hole 11b. The coupling capacitance electrode 37b and the pixel electrode 17d overlap each other via the interlayer insulating film. The coupling capacitance Cbd (see Fig. 1) between the pixel electrodes 17b and 17d is thus formed.

Moreover, the retention capacitance line 18p and a part of edges (periphery) of the pixel electrode 17c (among two edges extending along the row direction, the one farther from the scan signal line 16x) overlap each other so that most of the retention capacitance Chc (see Fig. 1) is formed in an overlapping part Kc of these (the retention capacitance line 18p and the pixel electrode 17c). Further, the retention capacitance line 18p has an extending portion 18c branching therefrom. In planar view, the extending portion 18c (i) extends so that the extending portion 18c and the other part of edges of the pixel electrode 17c overlap each other, or, alternatively, (ii) extends around the other parts of the edges of the pixel electrode 17c and then merges into the retention capacitance line 18p again. This causes the pixel electrode 17c, which is being in an electrically-floating state, to be electrically shielded by the retention capacitance line 18p and the extending portion 18c. Furthermore, the extending portion 18c and the pixel electrode 17a overlap each other so that the retention capacitance Cha (see Fig. 1) is formed in an overlapping part Ka of these (the extending portion 18c and the pixel electrode 17a). In the same manner, the retention capacitance line 18q and a part of edges (periphery) of the pixel electrode 17d (among two edges extending along the row direction, the one farther from the scan signal line 16x) overlap each other so that most of the retention capacitance Chd (see Fig. 1) is formed in an overlapping part Kd of these (the retention capacitance line 18q and the pixel electrode 17d). Further, the retention capacitance line 18q has an extending portion 18d branching therefrom. In planar view, the extending portion 18d (i) extends so that the extending portion 18d and the other part of edges of the pixel electrode 17d overlap each other, or, alternatively, (ii) extends around the other part of edges of the pixel electrode 17d and then merges into the retention capacitance line 18q again. This causes the pixel electrode 17d, which is being in the electrically-floating state, to be electrically shielded by the retention capacitance line 18q and the extending portion 18d. Furthermore, the extending portion 18d and the pixel electrode 17b overlap each other so that the retention capacitance Chb (see Fig. 1) is formed in an overlapping part Kb of these (the extending portion 18d and the pixel electrode 17b). Note that a part of the retention capacitance Chc is also formed in an overlapping part of the extending portion 18c and the pixel electrode 17c, and a part of the retention capacitance Chd is also formed in an overlapping part of the extending portion 18d and the pixel electrode 17d.

In the pixel 101, on the upper side with respect to the scan signal line 16y intersecting the center of the pixel 101 in Fig. 2, the pixel electrode 17e, which has a rectangular shape and is connected to the transistor 12e, is provided adjacent to the scan signal line 16y, while the pixel electrode 17g, which has a rectangular shape and is connected to the pixel electrode 17e via the capacitance, is provided adjacent to one of two edges of the pixel 101, which two edges extend along the row direction. Meanwhile, on the lower side with respect to the scan signal line 16y in Fig. 2, the pixel electrode 17f, which has a rectangular shape and is connected to the transistor 12f, is provided adjacent to the scan signal line 16y, while the pixel electrode 17h, which has a rectangular shape and is connected to the pixel electrode 17f via the capacitance, is provided adjacent to the other one of two edges of the pixel 101. A source electrode 8e and a drain electrode 9e of the transistor 12e, and a source electrode 8f and a drain electrode 9f of the transistor 12f are provided on the scan signal line 16y. The source electrode 8e is connected to the data signal line 15x. The drain electrode 9e is connected to a drain lead line 27e which is connected to: a coupling capacitance electrode 37e in the same layer; and the pixel electrode 17e via a contact hole 11e. The coupling capacitance electrode 37e and the pixel electrode 17g overlap each other via the interlayer insulating film. The coupling capacitance Ceg (see Fig. 1) between the pixel electrodes 17e and 17g is thus formed. Further, The source electrode 8f is connected to the data signal line 15x. The drain electrode 9f is connected to a drain lead line 27f which is connected to: a coupling capacitance electrode 37f in the same layer; and the pixel electrode 17f via a contact hole 11f. The coupling capacitance electrode 37f and the pixel electrode 17h overlap each other via the interlayer insulating film. The coupling capacitance Cfh (see Fig. 1) between the pixel electrodes 17f and 17h is thus formed.

Moreover, the retention capacitance line 18q and a part of edges (periphery) of the pixel electrode 17g overlap each other so that most of the retention capacitance Chg (see Fig. 1) is formed in an overlapping part Kg of these (the retention capacitance line 18q and the pixel electrode 17g). Further, the retention capacitance line 18q has an extending portion 18g branching therefrom. In planar view, the extending portion 18g (i) extends so that the extending portion 18g and the other part of edges of the pixel electrode 17g overlap each other, or, alternatively, (ii) extends around the other part of edges of the pixel electrode 17g and then merges into the retention capacitance line 18q again. This causes the pixel electrode 17g, which is being in the electrically-floating state, to be electrically shielded by the retention capacitance line 18q and the extending portion 18g. Furthermore, the extending portion 18g and the pixel electrode 17e overlap each other so that the retention capacitance Che (see Fig. 1) is formed in an overlapping part Ke of these (the extending portion 18g and the pixel electrode 17e). In the same manner, the retention capacitance line 18r and a part of edges (periphery) of the pixel electrode 17h overlap each other so that most of the retention capacitance Chh (see Fig. 1) is formed in an overlapping part Kh of these (the retention capacitance line 18r and the pixel electrode 17h). Further, the retention capacitance line 18r has an extending portion 18h branching therefrom. In planar view, the extending portion 18h (i) extends so that the extending portion 18h and the other part of edges of the pixel electrode 17h overlap each other, or, alternatively, (ii) extends around the other part of edges of the pixel electrode 17h and then merges into the retention capacitance line 18r again. This causes the pixel electrode 17h, which is being in the electrically-floating state, to be electrically shielded by the retention capacitance line 18r and the extending portion 18h. Furthermore, the extending portion 18h and the pixel electrode 17f overlap each other so that the retention capacitance Chf (see Fig. 1) is formed in an overlapping part Kf of these (the extending portion 18h and the pixel electrode 17f). Note that a part of the retention capacitance Chg is also formed in an overlapping part of the extending portion 18g and the pixel electrode 17g, and a part of the retention capacitance Chh is also formed in an overlapping part of the extending portion 18h and the pixel electrode 17h.

Fig. 3 is a fragmentary cross-sectional view of Fig. 2. The liquid crystal panel 5a includes: an active matrix substrate 3; a color filter substrate 30 facing the active matrix substrate 3; and a liquid crystal layer 40 provided between the substrates (3 and 30) (see Fig. 3).

The following description deals with an arrangement of the active matrix substrate 3. The scan signal line 16x, the retention capacitance line 18p, and the extending portion 18c are provided on a glass substrate 31. Over these, an inorganic gate insulating film 22 is provided. Above the inorganic gate insulating layer 22, the followings are provided: a semiconductor layer 24 (an i layer and an n+ layer); the source electrodes 8a and 8b and the drain electrodes 9a and 9b, each of which is in contact with the n+ layer; the drain lead lines 27a and 27b; and the coupling capacitance electrode 37a. Over these, an inorganic interlayer insulating film 25 is provided. The pixel electrodes 17a, 17b, and 17c are provided on the inorganic interlayer insulating film 25. Further, an alignment film (not illustrated) is provided so as to cover the pixel electrodes (17a through 17c). Here, a part of the inorganic interlayer insulating film 25 is removed so as to form the contact hole 11b, via which the pixel electrode 17b and the drain lead line 27b are connected to each other. Furthermore, the coupling capacitance electrode 37a, connected to the drain lead line 27a in the same layer, and the pixel electrode 17c overlap each other via the inorganic interlayer insulating film 25. The coupling capacitance Cac (see Fig. 1) is thus formed. Note that the pixel electrode 17c and the retention capacitance line 18p overlap each other via both of the inorganic interlayer insulating film 25 and the inorganic gate insulating film 22 so that the retention capacitance Chc (see Fig. 1) is formed.

Meanwhile, the color filter substrate 30 has an arrangement in which (i) a black matrix 13 and a colored layer 14 are provided on a glass substrate 32, (ii) above these, a common electrode (com) 28 is provided, and (iii) an alignment film (not illustrated) is provided so as to cover the common electrode 28.

Fig. 4 is a timing chart showing how to drive a liquid crystal display device (a liquid crystal display device employing a normally-black mode) employing the liquid crystal panel illustrated in Figs. 1 and 2. Note that, in Fig. 4, (i) "Sv" and "SV" represent signal electric potentials, respectively, which are received by two data signal lines being adjacent to each other (the data signal lines 15x and 15X, for example), respectively, (ii) "Gx" and "Gy" represent gate-on pulse signals, respectively, which gate-on pulse signals are received by the scan signal lines 16x and 16y, respectively, and (iii) "Va to Vd", "VA to VD", and "Ve to Vh" represent electric potentials of the pixel electrodes 17a to 17d, 17A to 17D, and 17e to 17h, respectively.

According to the driving method, (i) scan signal lines are sequentially selected, (ii) two data signal lines which are adjacent to each other receive signal electric potentials whose polarities are opposite to each other, respectively, during the same 1 horizontal scanning period, (iii) a polarity of a signal electric potential received by each of the data signal lines is inverted every 1 horizontal scanning period (1H), and (iv) the polarity of the signal electric potential received by each of the data signal lines during the same horizontal scanning period of a frame is inverted every 1 frame (see Fig. 4).

Specifically, in F1 among sequential frames F1 and F2, the scan signal lines are sequentially selected (the scan signal lines 16x and 16y are selected in this order, for example). One of two data signal lines which are adjacent to each other (the data signal line 15x, for example) receives (i) a positive signal electric potential during the first horizontal scanning period (including a writing period of the pixel electrodes 17a and 17b, for example), and (ii) a negative signal electric potential during the second horizontal scanning period (including a writing period of the pixel electrodes 17e and 17f, for example), while the other one of two data signal lines (the data signal line 15X, for example) receives (i) a negative signal electric potential during the first horizontal scanning period (including writing period of the pixel electrodes 17A and 17B, for example), and (ii) a positive signal electric potential during the second horizontal scanning period (including a writing period of the pixel electrodes 17E and 17F, for example). It follows that the sub-pixel including the pixel electrode 17c (whose polarity is positive) is a dark sub-pixel (hereinafter, referred to as "dark"), the sub-pixel including the pixel electrode 17a (whose polarity is positive) is a bright sub-pixel (hereinafter, referred to as "bright"), the sub-pixel including the pixel electrode 17b (whose polarity is positive) is "bright", the sub-pixel including the pixel electrode 17d (whose polarity is positive) is "dark", the sub-pixel including the pixel electrode 17g (whose polarity is negative) is "dark", the sub-pixel including the pixel electrode 17e (whose polarity is negative) is "bright", the sub-pixel including the pixel electrode 17f (whose polarity is negative) is "bright", the sub-pixel including the pixel electrode 17h (whose polarity is negative) is "dark", the sub-pixel including the pixel electrode 17C (whose polarity is negative) is "dark", the sub-pixel including the pixel electrode 17A (whose polarity is negative) is "bright", the sub-pixel including the pixel electrode 17B (whose polarity is negative) is "bright", and the sub-pixel including the pixel electrode 17D (whose polarity is negative) is "dark" (see Fig. 4). As a whole, in F1, a display state of the liquid crystal panel 5a becomes as illustrated in (a) of Fig. 5.

Further, in F2, the scan signal lines are sequentially selected (the scan signal lines 16x and 16y are selected in this order, for example). One of the two data signal lines which are adjacent to each other (the data signal line 15x, for example) receives (i) a negative signal electric potential during the first horizontal scanning period (including the writing period of the pixel electrodes 17a and 17b, for example), and (ii) a positive signal electric potential during the second horizontal scanning period (including the writing period of the pixel electrodes 17e and 17f, for example), while the other one of the two data signal lines (the data signal line 15X, for example) receives (i) a positive signal electric potential during the first horizontal scanning period (including the writing period of the pixel electrodes 17A and 17B, for example), and (ii) a negative signal electric potential during the second horizontal scanning period (including the writing period of the pixel electrodes 17E and 17F, for example). It follows that the sub-pixel including the pixel electrode 17c (whose polarity is negative) is "dark", the sub-pixel including the pixel electrode 17a (whose polarity is negative) is "bright", the sub-pixel including the pixel electrode 17b (whose polarity is negative) is "bright", the sub-pixel including the pixel electrode 17d (whose polarity is negative) is "dark", the sub-pixel including the pixel electrode 17g (whose polarity is positive) is "dark", the sub-pixel including the pixel electrode 17e (whose polarity is positive) is "bright", the sub-pixel including the pixel electrode 17f (whose polarity is positive) is "bright", the sub-pixel including the pixel electrode 17h (whose polarity is positive) is "dark", the sub-pixel including the pixel electrode 17C (whose polarity is positive) is "dark", the sub-pixel including the pixel electrode 17A (whose polarity is positive) is "bright", the sub-pixel including the pixel electrode 17B (whose polarity is positive) is "bright", and the sub-pixel including the pixel electrode 17D (whose polarity is positive) is "dark" (see Fig. 4). As a whole, in F2, the display state becomes as illustrated in (b) of Fig. 5.

According to the liquid crystal panel 5a, the scan signal line is provided in the center of the pixel. This layout makes it possible to (i) arrange the four pixel electrodes in the pixel such that two pixel electrodes (the pixel electrodes corresponding to the bright sub-pixels), each of which is connected to the data signal line via a transistor, are provided in the center of the pixel, and the other two pixel electrodes (the pixel electrodes corresponding to the dark sub-pixels), which are being in the electrically-floating state, are provided in respective ends of the pixel, and simultaneously, (ii) cause the retention capacitance line and the extending portion of the retention capacitance line to function, in a position away from the scan signal line, as a pattern for electrically shielding a corresponding one of the other two pixel electrodes being in the electrically-floating state. Therefore, it is possible for the liquid crystal display device employing the liquid crystal panel 5a to have such an arrangement that (i) a diving charge with respect to the two pixel electrodes being in the electrically-floating state is suppressed so that burn-in of the dark sub-pixels is prevented as much as possible, and (ii) the bright sub-pixels, belonging to different pixels, respectively, are not adjacent to each other. Accordingly, it becomes possible for the liquid crystal display device employing the liquid crystal panel 5a to display more natural images than those displayed by the conventional liquid crystal display device.

Further, the drain lead line can have a reduction in its length due to the provision of the scan signal line in the center of the pixel. Such a reduction realizes effects of: a reduction in risk of breakage of the drain lead line; and an increase in aperture ratio. Furthermore, the extending portion of the retention capacitance line realizes a redundant effect of the retention capacitance line. For example, even if the retention capacitance line is broken between a part where the extending portion branches from the retention capacitance line and a part where the extending portion merges into the retention capacitance line, a retention capacitance line signal (a Vcom signal equivalent to an electric potential of the common electrode com, for example) can be transmitted to a part in the downstream with respect to the breaking point via the extending portion functioning as a bypass route.

Moreover, the polarity of the signal electric potential received by each of the data signal lines is inversed every 1 horizontal scanning period (1H) (see Figs. 4 and 5). This causes two pixels which are adjacent to each other in the column direction to have opposite electric potential drawing directions, respectively, during a period of time in which the transistors are in an off-state. Therefore, it is possible to suppress generation of flickers. Further, two data signal lines which are adjacent to each other receive signal electric potentials whose polarities are opposite to each other, respectively, during the same 1 horizontal scanning period (see Figs. 4 and 5). This causes two pixels which are adjacent to each other in the row direction to have opposite electric potential drawing directions, respectively, during a period of time in which the transistors are in the off-state. Therefore, it is possible to further suppress the generation of flickers.

The liquid crystal panel 5a of Fig. 2 can have another arrangement in which the interlayer insulating film has a double layer structure constituted by an inorganic interlayer insulating film and an organic interlayer insulating film which is greater in thickness than the inorganic interlayer insulating film. Provision of such an interlayer insulating film can realize effects of: a reduction in various parasitic capacitances; prevention of a short-circuit between wiring lines; and prevention of a breakup of a pixel electrode etc. due to planarization. In this case, it is preferable that the organic interlayer insulating film is removed in each of (i) a region where the organic interlayer insulating film 26, the retention capacitance line, and the pixel electrode overlap each other, (ii) a region where the organic interlayer insulating film, the extending portion of the retention capacitance line, and the pixel electrode overlap each other, and (iii) a region where the organic interlayer insulating film and the coupling capacitance electrode overlap each other (see regions with oblique lines in Fig. 6, and an organic interlayer insulating film 26 in Fig. 7 which is a cross sectional view of Fig. 6, taken along a line A-B). This secures sufficient capacitance values of the coupling capacitance and the retention capacitance, without reducing the aforementioned effects. Further, it is also possible to have a reduction in parasitic capacitance between the scan signal line and the pixel electrode due to the double layer arrangement of the interlayer insulating film, constituted by the inorganic interlayer insulating film and the organic interlayer insulating film which is greater in thickness than the inorganic interlayer film (see Figs. 6 and 7). Such a reduction allows the edges of the respective pixel electrodes 17a and 17b (first and second electrodes) and the scan signal line 16x to overlap each other, so as to have an increase in aperture ratio (see Fig. 34, for example). In the arrangement, the pixel electrodes 17a and 17b are also provided to face each other via the gap, and, in planar view, the scan signal line 16x also intersects the pixel region 100 so that the scan signal line 16x and the gap overlap each other.

The following description deals with how to provide the inorganic interlayer insulating film 25, the organic interlayer insulating film 26, and the contact hole 11b, each of which is illustrated in Fig. 7. After the transistors (TFTs) and the data signal lines are provided, CVD is carried out with respect to an entire surface of the substrate by use of a mixed gas of an SiH₄ gas, an NH₃ gas, and an N₂ gas, so as to provide the inorganic interlayer insulating film 25 (passivation film). The resultant inorganic interlayer insulating film 25 (a passivation film) is made from SiNx, and has a thickness of approximately 3000Å. Then, the organic interlayer insulating film 26 is provided by a spin coating method or a die coating method. The organic interlayer insulating film 26 is made from a positive photosensitive acrylate resin, and has a thickness of approximately 3µm. Next, the organic interlayer insulating film 26 is subjected to photolithography so as to have hollowed parts and various contact patterns. Further, the inorganic interlayer insulating film 25 is subjected to dry etching with the use of the patterned organic interlayer insulating film 26 as a mask. The dry etching is carried out by use of a mixed gas of a CF₄ gas and an O₂ gas. Specifically, in the photolithography, the organic interlayer insulating film 26 is (i) partially half-exposed so that the organic interlayer insulating film 26 is thinly left in regions corresponding to the respective hollowed parts after a development step, and (ii) is partially full-exposed so that no organic interlayer insulating film 26 is left in regions corresponding to the respective contact holes after the development step. Here, the dry etching is carried out by use of the mixed gas of the CF₄ gas and the O₂ gas, so that (i) the organic interlayer insulating film 26 is removed away in each of the regions corresponding to the respective hollowed parts, and (ii) the inorganic interlayer insulating film 25, provided below the organic interlayer insulating film 26, is removed away in the regions corresponding to the respective contact holes. Note that the organic interlayer insulating film 26 can be exemplified by an insulating film made from an SOG (spin-on glass) material, and may contain at least one of an acryl resin, an epoxy resin, a polyimide resin, a polyurethane resin, a novolac resin, and a siloxane resin.

Fig. 8 illustrates another specific example of the liquid crystal panel of the present invention. A liquid crystal panel 5b of Fig. 8 has a similar arrangement to that of the liquid crystal panel of Fig. 2, except that the extending portions of the retention capacitance lines provided adjacent to each other in the column direction are connected to each other. The pixel 100 of the liquid crystal panel 5b, for example, has an arrangement in which the retention capacitance line 18p overlaps: a part of edges of the pixel electrode 17c of the pixel 100 with each other; and a part of edges of the pixel electrode 17C of the pixel 102, with each other, the pixel 102 being adjacent to the pixel 100 in the column direction. Here, the retention capacitance line 18p has the extending portions 18c and 18C branching therefrom. The extending portion 18c (i) extends so that the extending portion 18c and the other part of edges of the pixel electrode 17c overlap each other, or, alternatively, (ii) extends around the other part of edges of the pixel electrode 17c and then merges into the retention capacitance line 18p again. The extending portion 18C (i) extends so that the extending portion 18C and the other part of edges of the pixel electrode 17C overlap each other, or, alternatively, (ii) extends around the other part of edges of the pixel electrode 17C and then merges into the retention capacitance line 18p again. The extending portions 18c and 18C are connected to each other below the data signal line 15X.

According to the liquid crystal panel 5b, it is possible to increase the redundant effect of the retention capacitance line, which redundant effect is realized in the liquid crystal panel 5a. For example, even if the retention capacitance line is broken in a part where the retention capacitance line and the data signal line intersect each other, a retention capacitance line signal (a Vcom signal, for example) can be transmitted to a part in the downstream of the breaking point by two extending portions of the retention capacitance lines, provided adjacent to each other in the column direction, each of which two extending portions functions as a bypass route.

According to the liquid crystal panel 5a of Fig. 2, a drain lead line is connected to: a coupling capacitance electrode in the same layer; and a pixel electrode via a contact hole. However, the present embodiment is not limited to this. For example, it is also possible to connect the pixel electrode to: the drain lead line via the contact hole; and a junction line via another contact hole, the junction line being connected to the coupling capacitance electrode in the same layer (as in a liquid crystal panel 5c illustrated in Fig. 9).

The pixel 100 of the liquid crystal panel 5c, for example, has an arrangement in which (i) the pixel electrode 17a is connected to: the drain lead line 27a via the contact hole 11a, the drain lead line 27a being led out of the drain electrode 9a of the transistor 12a; and a junction line 57a via a contact hole 51a, the junction line 57a being connected to the coupling capacitance electrode 37a in the same layer, and (ii) the coupling capacitance electrode 37a and the pixel electrode 17c overlap each other via the interlayer insulating film. The coupling capacitance Cac (see Fig. 1) between the pixel electrodes 17a and 17c is thus formed. In the same manner, (i) the pixel electrode 17b is connected to: the drain lead line 27b via the contact hole 11b, the drain lead line 27b being led out of the drain electrode 9b of the transistor 12b; and a junction line 57b via a contact hole 51 b, the junction line 57b being connected to the coupling capacitance electrode 37b in the same layer, and (ii) the coupling capacitance electrode 37b and the pixel electrode 17d overlap each other via the interlayer insulating film. The coupling capacitance Cbd (see Fig. 1) between the pixel electrodes 17b and 17d is thus formed.

According to the liquid crystal panel 5c, it is possible to further reduce the drain lead line (having a light blocking effect) in length as compared with the liquid crystal panel 5a. Therefore, it is possible to further increase the aperture ratio.

Fig. 10 illustrates still another specific example of the liquid crystal panel of the present invention. A liquid crystal panel 5d of Fig. 10 has a similar arrangement to that of the liquid crystal panel 5a of Fig. 2, except that two pixel electrodes (pixel electrodes corresponding to the bright sub-pixels) which are adjacent to a scan signal line are connected to each other via a coupling electrode which extends across the scan signal line. In the pixel 100 of the liquid crystal panel 5d, for example, the pixel electrode 17a, provided adjacent to the scan signal line 16x on the upper side with respect to the scan signal line 16x, and the pixel electrode 17b, provided adjacent to the scan signal line 16x on the lower side with respect to the scan signal line 16x, are connected to each other via a coupling electrode 17ab which extends across the scan signal line 16x. Further, in the pixel 101, the pixel electrode 17e, provided adjacent to the scan signal line 16y on the upper side with respect to the scan signal line 16y, and the pixel electrode 17f, provided adjacent to the scan signal line 16y on the lower side with respect to the scan signal line 16y, are connected to each other via a coupling electrode 17ef which extends across the scan signal line 16y.

According to the liquid crystal panel 5d, it is possible for each of two pixel electrodes (corresponding to the bright sub-pixels) provided adjacent to a scan signal line to receive a signal electric potential via a data signal line, even if any of the following problems occurs: (i) one of two transistors connected to a single scan signal line cannot be operated, (ii) one of two drain lead lines is broken, and (iii) one of two contact holes has a defect in its structure (a contact failure). Note that it is preferable to provide a coupling electrode in the center of a pixel so that the coupling electrode is equally affected by two data signal lines provided on both sides of the pixel. Further, the arrangement can employ the double layer structure of the interlayer insulating film, constituted by the inorganic interlayer insulating film and the organic interlayer insulating film which is greater in thickness than the inorganic interlayer film (see Fig. 7), so as to reduce a parasitic capacitance (Cgd) between the coupling electrode and the scan signal line. Further, according to the liquid crystal panel 5d, the two pixel electrodes, connected to the respective two transistors which are connected to the same scan signal line, are connected to each other via the coupling electrode. Therefore, it is possible to have an arrangement illustrated in Fig. 11, where one of the two transistors, the drain lead line lead out of the one of the two transistors, and the contact hole connected to the drain lead line are omitted.

According to the liquid crystal panel 5a of Fig. 2, each of four pixel electrodes provided in a single pixel has a rectangular shape. However, the present embodiment is not limited to this. For example, it is possible to have an arrangement in which, on one side with respect to a scan signal line, (i) a pixel electrode having a right-angle triangle shape is provided so that the pixel electrode having the right-angle triangle shape and a retention capacitance line overlap each other, and (ii) a pixel electrode having a trapezoid shape is provided adjacent to the scan signal line, and (iii) an extending portion of the retention capacitance line extends so as to electrically shield the pixel electrode having the right-angle triangle shape (see Fig. 12).

The pixel 100 of a liquid crystal panel 5e of Fig. 12 has an arrangement in which, on the upper side with respect to the scan signal line 16x intersecting the center of the pixel 100 (see Fig. 12), (i) the pixel electrode 17a, which has a trapezoid shape and is connected to the transistor 12a, is provided adjacent to the scan signal line 16x, and (ii) the pixel electrode 17c, which has a right-angle triangle shape and is connected to the pixel electrode 17a via the capacitance, is provided adjacent to one of two edges of the pixel 100, which two edges extend along the row direction. Here, the pixel electrode 17c has: an edge along the data signal line 15x; an edge overlapping the retention capacitance line 18p with each other; and an edge corresponding to an oblique side of the right-angle triangle shape, while the pixel electrode 17a has: an edge along the data signal line 15x; an edge along the scan signal line 16x; an edge along the data signal line 15X; and an edge along one of the edges of the pixel electrode 17c (the edge corresponding to the oblique side). Meanwhile, on the lower side with respect to the scan signal line 16x (see Fig. 12), (i) the pixel electrode 17b, which has a trapezoid shape and is connected to the transistor 12b, is provided adjacent to the scan signal line 16x, and (ii) the pixel electrode 17d, which has a right-angle triangle shape and is connected to the pixel electrode 17b via the capacitance, is provided adjacent to the other one of two edges of the pixel 100, which two edge extend along the row direction. Here, the pixel electrode 17d has: an edge along the data signal line 15X; an edge overlapping the retention capacitance line 18q with each other; and an edge corresponding to an oblique side of the right-angle triangle shape, while the pixel electrode 17b has: an edge along the scan signal line 16x; an edge along the data signal line 15x; an edge along the data signal line 15X; and an edge along one of the edges of the pixel electrode 17d (the edge corresponding to the oblique side). Note that the pixel electrodes 17a and 17b have line symmetry (the line of symmetry is the scan signal line 16x), while the pixel electrodes 17c and 17d have line symmetry (the line of symmetry is the scan signal line 16x).

The retention capacitance line 18p and a part of edges of the pixel electrode 17c overlap each other so that the retention capacitance Chc (see Fig. 1) is formed in the overlapping part Kc of these (the retention capacitance line 18p and the pixel electrode 17c). Further, the retention capacitance line 18p has the extending portion 18c branching therefrom. In planar view, the extending portion 18c (i) extends so that the extending portion 18c and the other part of edges of the pixel electrode 17c (the edge along the data signal line 15x and the edge corresponding to the oblique side) overlap each other, or, alternatively, (ii) extends around the other part of edges of the pixel electrode 17c and then merges into the retention capacitance line 18p. This causes the pixel electrode 17c, which is being in the electrically-floating state, to be electrically shielded by the retention capacitance line 18p and the extending portion 18c. Furthermore, the extending portion 18c and the pixel electrode 17a overlap each other so that the retention capacitance Cha (see Fig. 1) is formed in the overlapping part Ka of these (the extending portion 18c and the pixel electrode 17a). In the same manner, the retention capacitance line 18q and a part of edges of the pixel electrode 17d overlap each other so that the retention capacitance Chd (see Fig. 1) is formed in the overlapping part Kd of these (the retention capacitance line 18q and the pixel electrode 17d). Further, the retention capacitance line 18q has the extending portion 18d branching therefrom. In planar view, the extending portion 18d (i) extends so that the extending portion 18d and the other part of edges of the pixel electrode 17d (the edge along the data signal line 15x and the edge corresponding to the oblique side) overlap each other, or, alternatively, (ii) extends around the other part of edges of the pixel electrode 17d and then merges into the retention capacitance line 18q again. This causes the pixel electrode 17d, which is being in the electrically-floating state, to be electrically shielded by the retention capacitance line 18q and the extending portion 18d. Furthermore, the extending portion 18d and the pixel electrode 17b overlap each other so that the retention capacitance Chb (see Fig. 1) is formed in the overlapping part Kb of these (the extending portion 18d and the pixel electrode 17b).

According to the liquid crystal panel 5e, the gap between two pixel electrodes is an oblique slit either on the upper side or on the lower side with respect to the scan signal line. Therefore, it is possible to cause the slit to function as an alignment control structure. In this case, it is possible to constitute a liquid crystal panel employing an MVA (multi domain vertical alignment) mode by providing (i) ribs on the color filter substrate, and (ii) various slits with respect to each pixel electrode (see Fig. 13, for example). That is, the pixel 100 has an arrangement in which (i) the gap between the pixel electrodes 17a and 17c serves as a slit Sac, (ii) the pixel electrode 17a has a slit Sa which is parallel with the slit Sac, (iii) the pixel electrode 17c has a slit Sc which is parallel with the slit Sac, (iv) a rib La is provided between the slits Sa and Sac, as being parallel with the slit Sa (in planar view), and (v) a rib Lc is provided between the slits Sc and Sac, as being parallel with the slit Sc (in planar view). In the same manner, (i) the gap between the pixel electrodes 17b and 17d serves as a slit Sbd, (ii) the pixel electrode 17b has a slit Sb which is parallel with the slit Sbd, (iii) the pixel electrode 17d has a slit Sd which is parallel with the slit Sbd, (iv) a rib Lb is provided between the slits Sb and Sbd, as being parallel with the slit Sb (in planar view), and (v) a rib Ld is provided between the slits Sd and Sbd, as being parallel with the slit Sd, (in planar view).

The active matrix substrate 5e of Fig. 12 can be modified as illustrated in Fig. 35. The active matrix substrate of Fig. 35 has an arrangement in which the four pixel electrodes (17a to 17d), and the coupling capacitance electrodes 37a and 37b are provided in the pixel 100. The pixel electrodes 17a and 17b (the first and second pixel electrodes) face each other via the gap. The scan signal line 16x intersects the pixel 100 so that the scan signal line 16x and the gap overlap each other. The pixel electrodes 17a and 17c (the first and third pixel electrodes) are provided adjacent to each other in the row direction via a slit boundary KY (which has a V shape when viewed in the row direction (from the right side)). The pixel electrodes 17b and 17d (the second and third pixel electrodes) are provided adjacent to each other in the row direction via a slit boundary ky (which has a V shape when viewed in the row direction (from the left side)). The pixel electrode 17a is connected to the transistor 12a via the contact hole 11a, while the pixel electrode 17b is connected to the transistor 12b via the contact hole 11b.

The slit boundary KY is provided in the upper part of the pixel region 100. In planar view, the slit boundary KY (i) extends in the row direction from a point in the vicinity of an intersection between the scan signal line 16x and the data signal line 15x, and then (ii) turns and further extends at an angle of 45° with respect to the scan signal line 16x, after that, (iii) when reaching a substantially middle point of the upper part of the pixel region 100, turns and extends at an angle of 135° with respect to the scan signal line 16x, finally, (iv) reaches a point in the vicinity of an edge of the pixel region 100. On the other hand, the slit boundary ky is provided in the lower part of the pixel region 100. In planar view, the slit boundary ky (i) extends in the row direction from a point in the vicinity of an intersection between the scan signal line 16x and the data signal line 15X which is adjacent to the data signal line 15x, and then (ii) turns and extends at an angle of 225° with respect to the scan signal line 16x, after that, (iii) when reaching a substantially middle point of the lower part of the pixel region 100, turns and extends at an angle of 315° with respect to the scan signal line 16x, finally, (iv) reaches a point in the vicinity of an edge of the pixel electrode 100. Note that a shape of the pixel electrode 17a would substantially coincide with that of the pixel electrode 17b if the pixel electrode 17a is rotated by 180° around the center of the gap between the pixel electrodes 17a and 17b, and a shape of the pixel electrode 17b would substantially coincide with that of the pixel electrode 17d if the pixel electrode 17b is rotated by 180° around the center of the gap between the pixel electrodes 17b and 17d.

In the arrangement, each of the slit boundaries KY and ky can function as the alignment control structure. Further, according to the arrangement, in planar view, (i) the pixel electrode 17a has a part extending between the pixel electrode 17c and the scan signal line 16x, and (ii) the pixel electrode 17b has a part extending between the pixel electrode 17d and the scan signal line 16x. Therefore, the pixel electrodes 17c and 17d, which are being in the electrically-floating state, can be less influenced by the scan signal line 16x.

In planar view, the coupling capacitance electrode 37a (i) extends in the column direction from a connection point between the coupling capacitance electrode 37a and the drain electrode of the transistor 12a, and then (ii) intersects the boundary KY so as to be below the boundary KY, after that, (iii) turns and extends at an angle of 45° with respect to the scan signal line 16x so that the coupling capacitance electrode 37a and both of a rib Li of the color filter substrate and the pixel electrode 17c overlap each other, finally (iv) reaches a substantially middle point of the upper part of the pixel region 100. On the other hand, in planar view, the coupling capacitance electrode 37b (i) extends in the row direction from a connection point between the coupling capacitance electrode 37b and the drain electrode of the transistor 12b, and then (ii) turns at a point in the vicinity of the intersection between the scan signal line 16x and the data signal line 15X, after that (iii) intersects the boundary ky so as to be below the boundary ky, then (iv) further turns and extends at an angle of 225 with respect to the scan signal line 16x so that the coupling capacitance 37b and both of the rib Li and the pixel electrode 17d overlap each other, finally (v) reaches a substantially middle point of the lower part of the pixel region 100.

This forms: the coupling capacitance between the pixel electrodes 17a and 17c in an overlapping part of the pixel electrode 17c and the coupling capacitance electrode 37a; and the coupling capacitance between the pixel electrodes 17b and 17d in an overlapping part of the pixel electrode 17d and the coupling capacitance electrode 37b. Further, each of the coupling capacitance electrodes 37a and 37b has a pat extending below the rib Li. This increases the aperture ratio and an alignment controlling effect.

Moreover, the retention capacitance line 18p overlaps both of the pixel region 100 and another pixel region in the upstream of the pixel region 100, with each other. The retention capacitance line 18p has the extending portion 18c. The extending portion 18c extends so that the extending portion 18c and an edge of the pixel electrode 17c overlap each other, which edge extends along the data signal line 15x. The retention capacitance line 18q overlap both of the pixel region 100 and another pixel region in the downstream of the pixel region 100, with each other. The retention capacitance line 18q has the extending portion 18d. The extending portion 18d extends so that the extending portion 18d and an edge of the pixel electrode 17d overlap each other, which edge extends along the data signal line 15X.

This forms the retention capacitance in each of (i) an overlapping part of the retention capacitance line 18p and the pixel electrode 17a, (ii) an overlapping part of the retention capacitance line 18p and the pixel electrode 17c, (iii) an overlapping part of the retention capacitance line 18q and the pixel electrode 17b, and (iv) an overlapping part of the retention capacitance line 18q and the pixel electrode 17d. According to the arrangement, a single retention capacitance line overlap, with each other, two pixel regions which are adjacent to each other in the column direction. Therefore, it is possible to (i) reduce the number of the retention capacitance lines, and (ii) increase the aperture ratio. Further, the pixel electrodes 17c and 17d, which are being in the electrically-floating state, can be less influenced by the data signal lines (15x and 15X) due to the provision of the extending portions 18c and 18d.

According to the liquid crystal panel 5a of Fig. 2, the extending portion of the retention capacitance line is provided in each pixel. However, the present embodiment is not limited to this. Instead of the extending portion, it is possible to provide a sub-line and a bridging electrode connected to the sub-line, for example (see Fig. 14).

A liquid crystal panel 5f of Fig. 14 has an arrangement in which a sub-line is provided between the retention capacitance line which overlaps two pixel rows being adjacent to each other, and a scan signal line, with each other. The sub-line, the retention capacitance line, and the scan signal line are provided in the same layer. Further, bridging electrodes are provided two per pixel. That is, two bridging electrodes are provided between the retention capacitance line and the sub-line. The retention capacitance line and a part of edges of a pixel electrode overlap each other. The sub-line and the two bridging electrodes provided in the pixel are (i) provided so that a combination of the sub-line and the two bridging electrodes, and the other part of edges of the pixel electrode overlap each other, or, alternatively, (ii) provided so that the combination of the sub-line and the two bridging electrodes extends around the other part of edges of the pixel electrode.

Specifically, a sub-line 18α is provided between the retention capacitance line 18p and the scan signal line 16x, a sub-line β is provided between the retention capacitance line 18q and the scan signal line 16x, a sub-line 18γ is provided between the retention capacitance line 18q and the scan signal line 16y, and a sub-line 18δ is provided between the retention capacitance line 18r and the scan signal line 16y. In the pixel 100, for example, the retention capacitance line 18p and a part of edges of the pixel electrode 17c (among two edges extending along the row direction, the one farther from the scan signal line 16x) overlap each other so that most of the retention capacitance Chc (see Fig. 1) is formed in the overlapping part Kc of these (the retention capacitance line 18p and the pixel electrode 17c). Further, bridging electrodes 48α and 58α are connected between the retention capacitance line 18p and the sub-line 18α with a certain interval between the bridging electrodes 48α and 58α. The sub-line 18α and the bridging electrodes 48α and 58α are (i) provided so that a combination of the sub-line 18α and the bridging electrodes 48α and 58α, and the other part of edges of the pixel electrode 17c overlap each other, or, alternatively, (ii) provided so that the combination of the sub-line 18α and the bridging electrodes 48α and 58α extends around the other part of edges of the pixel electrode 17c. This causes the pixel electrode 17c, which is being in the electrically-floating state, to be electrically shielded by the retention capacitance line 18p, the sub-line 18α, and the bridging electrodes 48α and 58α. Furthermore, the sub-line 18α and the pixel electrode 17a overlap each other so that the retention capacitance Cha (see Fig. 1) is formed in the overlapping part Ka of these (the sub-line 18α and the pixel electrode 17a). In the same manner, the retention capacitance line 18q and a part of edges of the pixel electrode 17d (among two edges extending along the row direction, the one farther from the scan signal line 16x) overlap each other so that most of the retention capacitance Chd (see Fig. 1) is formed in the overlapping part Kd of these (the retention capacitance line 18q and the pixel electrode 17d). Moreover, bridging electrodes 48β and 58β are connected between the retention capacitance line 18q and the sub-line 18β with a certain interval between the bridging electrodes 48β and 58β. The sub-line 18β and the bridging electrodes 48β and 58β are (i) provided so that a combination of the sub-line 18β and the bridging electrodes 48β and 58β, and the other part of edges of the pixel electrode 17d overlap each other, or, alternatively, (ii) provided so that the combination of the sub-line 18β and the bridging electrodes 48β and 58β extends around the other part of edges of the pixel electrode 17d. This causes the pixel electrode 17d, which is being in the electrically-floating state, to be electrically shielded by the retention capacitance line 18q, the sub-line 18β, and the bridging electrodes 48β and 58β. Further, the sub-line 18β and the pixel electrode 17b overlap each other so that the retention capacitance Chb (see Fig. 1) is formed in the overlapping part Kb of these (the sub-line 18β and the pixel electrode 17b). Note that a part of the retention capacitance Chc is also formed in an overlapping part of the pixel electrode 17c and each of the bridging electrodes 48α and 58α, and a part of the retention capacitance Chd is also formed in an overlapping part of the pixel electrode 17d and each of the bridging electrodes 48β and 58β.

According to the liquid crystal panel 5f, the sub-line and the bridging electrodes connected between the retention capacitance line and the sub-line are provided. Therefore, it is possible to increase the redundant effect of the retention capacitance line. For example, a retention capacitance signal can be supplied to each of the retention capacitance line and the sub-line. This allows the liquid crystal panel to be driven via the sub-line even if (i) the retention capacitance line fails to receive a signal or (ii) a failure occurs during signal transmission.

According to the liquid crystal panel 5a of Fig. 2, the extending portion of the retention capacitance line is provided in each pixel. However, the present embodiment is not limited to this. Instead of the extending portion, it is also possible to provide a sub-line and a shield electrode (note that the shield electrode and the pixel electrode are provided in the same layer), for example (see Fig. 15).

A liquid crystal panel 5g of Fig. 15 has an arrangement in which a sub-line is provided between a single retention capacitance line which overlaps, with each other, two pixel rows being adjacent to each other, and a scan signal line. The sub-line, the retention capacitance line, and the scan signal line are provided in the same layer. Further, a shield electrode, connected to the retention capacitance line via contact holes, and pixel electrodes are provided in the same layer. The retention capacitance line and a part of edges of a pixel electrode overlap each other. The shield electrode extends around the other part of edges of the pixel electrode.

Specifically, the sub-line 18α is provided between the retention capacitance line 18p and the scan signal line 16x, the sub-line 18β is provided between the retention capacitance line 18q and the scan signal line 16x, the sub-line 18γ is provided between the retention capacitance line 18q and the scan signal line 16y, and the sub-line 18δ is provided between the retention capacitance line 18r and the scan signal line 16y. In the pixel 100, for example, the retention capacitance line 18p and a part of edges of the pixel electrode 17c (among two edges extending along the row direction, the one farther from the scan signal line 16x) overlap each other so that the retention capacitance Chc (see Fig. 1) is formed in the overlapping part Kc of these (the retention capacitance line 18p and the pixel electrode 17c). Further, a shield electrode 68c, connected to the retention capacitance line 18p via contact holes 11a and 61α, extends around the other part of edges (of the pixel electrode 17c), which shield electrode 68c and pixel electrode 17c are provided in the same layer. This causes the pixel electrode 17c, which is being in the electrically-floating state, to be electrically shielded by the retention capacitance line 18p and the shield electrode 68c. Furthermore, the sub-line 18α and the pixel electrode 17a overlap each other so that the retention capacitance Cha (see Fig. 1) is formed in the overlapping part Ka of these (the sub-line 18α and the pixel electrode 17a). In the same manner, the retention capacitance line 18q and a part of edges of the pixel electrode 17d (among two edges extending along the row direction, the one farther from the scan signal line 16x) overlap each other so that the retention capacitance Chd (see Fig. 1) is formed in the overlapping part Kd of these (the retention capacitance line 18q and the pixel electrode 17d). Further, a shield electrode 68d, connected to the retention capacitance line 18q via contact holes 11β and 61β, extends around the other part of edges (of the pixel electrode 17d), which shield electrode 68d and pixel electrode 17d are provided in the same layer. This causes the pixel electrode 17d, which is being in the electrically-floating state, to be electrically shielded by the retention capacitance line 18q and the shield electrode 68d. Furthermore, the sub-line 18β and the pixel electrode 17b overlap each other so that the retention capacitance Chb (see Fig. 1) is formed in the overlapping part Kb of these (the sub-line 18β and the pixel electrode 17b).

According to the liquid crystal panel 5g, the shield electrode, and the pixel electrode that is being in the electrically-floating state are provided in the same layer. Therefore, it is possible to realize a higher electrical shielding effect. The use of the shield electrode is suitably applicable to the arrangement in which the interlayer insulating film has the double layer structure (the inorganic interlayer insulating film and the organic interlayer insulating film which is greater in thickness than the inorganic interlayer insulating film).

According to the liquid crystal panel 5a of Fig. 2, a coupling capacitance between two pixel electrodes provided on one side with respect to a scan signal line, and another coupling capacitance between two pixel electrodes provided on the other side with respect to the scan signal line are substantially equal to each other in value. However, the present embodiment is not limited to this. That is, these capacitances can be different in value from each other.

The pixel 100 of a liquid crystal panel 5h of Fig. 16 has an arrangement in which the coupling capacitance electrode 37b, which is connected to the transistor 12b and overlaps the pixel electrode 17d with each other, has an area larger than that of the coupling capacitance electrode 37a, which is connected to the transistor 12a and overlaps the pixel electrode 17c with each other. That is, an inequality of "C2 > C1" is obtained (where C1 represents a capacitance value of the coupling capacitance Cac between the pixel electrodes 17a and 17c, and C2 represents a capacitance value of the coupling capacitance Cbd between the pixel electrodes 17b and 17d). Accordingly, an electric potential Vc of the pixel electrode 17c, which Vc is obtained after the transistor 12a is turned off, can be represented by an equality of "Vc = Va × (C1/(C1i + Chj + C1))", while an electric potential Vd of the pixel electrode 17d, which Vd is obtained after the transistor 12b is turned off, can be represented by an equality of "Vd = Vb × (C2/(Cli + Chj + C2))" (where Va is an electric potential of the pixel electrode 17a, which Va is obtained after the transistor 12a is turned off, and Vb is an electric potential of the pixel electrode 17b, which Vb is obtained after the transistor 12b is turned off). Here, Va and Vb are equal to each other. Therefore, a formula of "| Va | = | Vb | ≥ | Vd | ≥ | Vc |" can be obtained (note that | Va | is an electric potential difference between Va and Vcom (an electric potential of the common electrode com), and the same goes for the others in the formula). It follows that the sub-pixel including the pixel electrode 17a and the sub-pixel including the pixel electrode 17b are bright sub-pixels having substantially the same luminance, the sub-pixel including the pixel electrode 17c is a dark sub-pixel, and the sub-pixel including the pixel electrode 17d is a middle luminance sub-pixel (hereinafter, referred to as "halftone sub-pixel") having a luminance in a range between that of the bright sub-pixel (the sub-pixel including the pixel electrode 17a or the sub-pixel including the pixel electrode 17b) and that of the dark sub-pixel (the sub-pixel including the pixel electrode 17c). In the same manner, the pixel 101 has an arrangement in which the coupling capacitance electrode 37f, which is connected to the transistor 12f and overlaps the pixel electrode 17h with each other, has an area larger than that of the coupling capacitance electrode 37e, which is connected to the transistor 12e and overlaps the pixel electrode 17e with each other. It follows that the sub-pixel including the pixel electrode 17e and the sub-pixel including the pixel electrode 17f are bright sub-pixels having substantially the same luminance, the sub-pixel including the pixel electrode 17g is a dark sub-pixel, and the sub-pixel including the pixel electrode 17h is a middle luminance sub-pixel (hereinafter, referred to as "halftone sub-pixel") having a luminance in a range between that of the bright sub-pixel (the sub-pixel including the pixel electrode 17a or the sub-pixel including the pixel electrode 17b) and that of the dark sub-pixel (the sub-pixel including the pixel electrode 17c).

Fig. 17 is a timing chart showing how to drive a liquid crystal display device (a liquid crystal display device employing the normally black mode) employing the liquid crystal panel 5h. Note that in Fig. 17, (i) Sv and SV represent signal electric potentials, respectively, which are received by two data signal lines (15x and 15X, for example) being adjacent to each other, respectively, (ii) Gx and Gy represent gate on-pulse signals, respectively, which are received by the signal lines 16x and 16y, respectively, and (iii) Va to Vd, VA to VD, and Ve to Vh represent electric potentials of the pixel electrodes 17a to 17d, 17A to 17D, and 17e to 17h, respectively.

According to the driving method, (i) scan signal lines are sequentially selected, (ii) two data signal lines which are adjacent to each other receive signal electric potentials whose polarities are opposite to each other, respectively, during the same 1 horizontal scanning period, (iii) a polarity of a signal electric potential received by each of the data signal lines is inverted every 1 horizontal scanning period (1H), and (iv) the polarity of the signal electric potential received by each of the data signal lines during the same horizontal scanning period in a frame is inverted every 1 frame (see Fig. 17).

It follows that, in F1 among the sequential frames F1 and F2, the sub-pixel including the pixel electrode 17c (whose polarity is positive) is "dark", the sub-pixel including the pixel electrode 17a (whose polarity is positive) is "bright", the sub-pixel including the pixel electrode 17b (whose polarity is positive) is "bright", the sub-pixel including the pixel electrode 17d (whose polarity is positive) is a middle luminance sub-pixel (hereinafter, referred to as "halftone"), the sub-pixel including the pixel electrode 17g (whose polarity is negative) is "dark", the sub-pixel including the pixel electrode 17e (whose polarity is negative) is "bright", the sub-pixel including the pixel electrode 17f (whose polarity is negative) is "bright", the sub-pixel including the pixel electrode 17h (whose polarity is negative) is "halftone", the sub-pixel including the pixel electrode 17C (whose polarity is negative) is "dark", the sub-pixel including the pixel electrode 17A (whose polarity is negative) is "bright", the sub-pixel including the pixel electrode 17B (whose polarity is negative) is "bright", and the sub-pixel including the pixel electrode 17D (whose polarity is negative) is "halftone". As a whole, in F1, a display state of the liquid crystal panel 5h becomes as illustrated in (a) of Fig. 18.

Further, in F2, the sub-pixel including the pixel electrode 17c (whose polarity is negative) is "dark", the sub-pixel including the pixel electrode 17a (whose polarity is negative) is "bright", the sub-pixel including the pixel electrode 17b (whose polarity is negative) is "bright", the sub-pixel including the pixel electrode 17d (whose polarity is negative) is "halftone", the sub-pixel including the pixel electrode 17g (whose polarity is positive) is "dark", the sub-pixel including the pixel electrode 17e (whose polarity is positive) is "bright", the sub-pixel including the pixel electrode 17f (whose polarity is positive) is "bright", the sub-pixel including the pixel electrode 17h (whose polarity is positive) is "halftone", the sub-pixel including the pixel electrode 17C (whose polarity is positive) is "dark", the sub-pixel including the pixel electrode 17A (whose polarity is positive) is "bright", the sub-pixel including the pixel electrode 17B (whose polarity is positive) is "bright", and the sub-pixel including the pixel electrode 17D (whose polarity is positive) is "halftone". As a whole, in F2, the display state becomes as illustrated in (b) of Fig. 18.

In the liquid crystal display device employing the liquid crystal panel 5h, each pixel includes not only bright and dark sub-pixels but also a halftone pixel (a middle luminance pixel). Therefore, it is possible to further improve the viewing angle characteristic.

Note that the liquid crystal panel 5h can be modified as illustrated in Fig. 19. In Fig. 19, the pixel electrodes 17c and 17C are adjacent to each other in the row direction, while the pixel electrodes 17d and 17D are adjacent to each other in the row direction. The coupling capacitance electrode 37b, which is connected to the transistor 12b and overlaps the pixel electrode 17d with each other, has an area larger than that of the coupling capacitance electrode 37a, which is connected to the transistor 12a and overlaps the pixel electrode 17c with each other. Meanwhile, the coupling capacitance electrode 37A, which is connected to the transistor 12A and overlaps the pixel electrode 17C with each other, has an area larger than that of the coupling capacitance electrode 37B, which is connected to the transistor 12B and overlaps the pixel electrode 17D with each other. The coupling capacitance electrodes 37a and 37B are equal to each other in area, and the coupling capacitance electrodes 37b and 37A are equal to each other in area. That is, inequalities of "C1 < C2" and "C3 > C4", and equalities of "C1 = C4" and "C2 = C3" are obtained (where C1 represents a capacitance value of the coupling capacitance Cac between the pixel electrodes 17a and 17c, C2 represents a capacitance value of the coupling capacitance Cbd between the pixel electrodes 17b and 17d, C3 represents a capacitance value of the coupling capacitance CAC between the pixel electrodes 17A and 17C, and C4 represents a capacitance value of the coupling capacitance Cbd between the pixel electrodes 17B and 17D).

It follows that the sub-pixel including the pixel electrode 17a and the sub-pixel including the pixel electrode 17b are bright sub-pixels having substantially the same luminance, the sub-pixel including the pixel electrode 17c is a dark sub-pixel, and the sub-pixel including the pixel electrode 17d is a halftone sub-pixel. Meanwhile, in the pixel 102 which is adjacent to the pixel 100 in the row direction, the sub-pixel including the pixel electrode 17A and the sub-pixel including the pixel electrode 17B are bright sub-pixels having substantially the same luminance, the sub-pixel including the pixel electrode 17C is a halftone sub-pixel, and the sub-pixel including the pixel electrode 17D is a dark sub-pixel. In a case where the data signal lines (15x and 15X, for example) and the scan signal lines (16x and 16y) are driven as shown in Fig. 17, for example, the display state in each of frames (F1 and F2) becomes as illustrated in Fig. 20. That is, it is possible for halftone sub-pixels to be provided with a certain interval therebetween (the halftone sub-pixels are not adjacent to each other in the row direction).

### [Embodiment 2]

Fig. 21 is an equivalent circuit diagram illustrating a part of a liquid crystal panel in accordance with Embodiment 2. The liquid crystal panel of the present embodiment has an arrangement in which a single data signal line and a single scan signal line are provided with respect to a corresponding pixel, and a single retention capacitance line is provided with respect to corresponding two pixels being adjacent to each other in a column direction. Further, pixel electrodes are provided three per pixel. Specifically, three pixel electrodes 17a, 17b, and 17d, provided in a pixel 100, and three pixel electrodes 17e, 17f, and 17h, provided in a pixel 101, are arranged in a line, while three pixel electrodes 17A, 17B, and 17D, provided in a pixel 102, and three pixel electrodes 117E, 17F, and 17H, provided in a pixel 103, are arranged in a line. The pixel electrodes 17a and 17A, 17b and 17B, 17d and 17D, 17e and 17E, 17f and 17F, and 17h and 17H are adjacent to each other in the row direction, independently.

In the pixel 100, the pixel electrodes 17b and 17d are connected to each other via a coupling capacitance Cbd. The pixel electrode 17a is connected to a data signal line 15x via a transistor 12a connected to a scan signal line 16x, while the pixel electrode 17b is connected to the data signal line 15x via a transistor 12b connected to the scan signal line 16x. A retention capacitance Cha is formed between the pixel electrode 17a and a retention capacitance line 18p, a retention capacitance Chb is formed between the pixel electrode 17b and an extending portion of a retention capacitance line 18q, and a retention capacitance Chd is formed between the pixel electrode 17d, and both of the retention capacitance line 18q and the extending portion of the retention capacitance line 18q. Note that a liquid crystal capacitance Cla is formed between the pixel electrode 17a and a common electrode com, a liquid crystal capacitance Clb is formed between the pixel electrode 17b and the common electrode com, and a liquid crystal capacitance Cld is formed between the pixel electrode 17d and the common electrode com.

Meanwhile, in the pixel 101 which is adjacent to the pixel 100 in the column direction, the pixel electrodes 17f and 17h are connected to each other via a coupling capacitance Cfh. The pixel electrode 17e is connected to the data signal line 15x via a transistor 12e connected to a scan signal line 16y, while the pixel electrode 17f is connected to the data signal line 15x via a transistor 12f connected to the scan signal line 16y. A retention capacitance Che is formed between the pixel electrode 17e and the retention capacitance line 18q, a retention capacitance Chf is formed between the pixel electrode 17f and an extending portion of a retention capacitance line 18r, and a retention capacitance Chh is formed between the pixel electrode 17h, and both of the retention capacitance line 18r and the extending portion of the retention capacitance line 18r. Note that a liquid crystal capacitance Cle is formed between the pixel electrode 17e and the common electrode com, a liquid crystal capacitance Clf is formed between the pixel electrode 17f and the common electrode com, and a liquid crystal capacitance Clh is formed between the pixel electrode 17h and the common electrode com.

Further, in the pixel 102 which is adjacent to the pixel 100 in the row direction, the pixel electrodes 17B and 17D are connected to each other via a coupling capacitance CBD. The pixel electrode 17A is connected to a data signal line 15X via a transistor 12A connected to the scan signal line 16x, while the pixel electrode 17B is connected to the data signal line 15X via a transistor 12B connected to the scan signal line 16x. A retention capacitance ChA is formed between the pixel electrode 17A and the retention capacitance line 18p, a retention capacitance ChB is formed between the pixel electrode 17B and an extending portion of the retention capacitance line 18q, and a retention capacitance ChD is formed between the pixel electrode 17D and the retention capacitance line 18q. Note that a liquid crystal capacitance C1A is formed between the pixel electrode 17A and the common electrode com, a liquid crystal capacitance C1B is formed between the pixel electrode 17B and the common electrode com, and a liquid crystal capacitance C1D is formed between the pixel electrode 17D and the common electrode com.

A liquid crystal display device employing the liquid crystal panel of the present embodiment is subjected to sequential scanning. The scan signal lines 16x and 16y are sequentially selected. In a case where the scan signal line 16x is selected, for example, (i) the pixel electrode 17a is connected to the data signal line 15x (via the transistor 12a), (ii) the pixel electrode 17b is connected to the data signal line 15x (via the transistor 12b), and (iii) the pixel electrode 17d is capacitively-coupled with the data signal line 15x (via the transistor 12b and the pixel electrode 17b). Accordingly, an electric potential Vd of the pixel electrode 17d, which Vd is obtained after the transistor 12b is turned off, can be represented by an equality of "Vd = Vb × (C2/(Cli + Chj + C2))" (where Cli = a capacitance value of Cla = a capacitance value of Clb, Clj = a capacitance value of Cld, Chi = a capacitance value of Cha = a capacitance value of Chb, Chj = a capacitance value of Chd, C2 = a capacitance value of Cbd, Va is an electric potential of the pixel electrode 17a, which Va is obtained after the transistor 12a is turned off, and Vb is an electric potential of the pixel electrode 17b, which Vb is obtained after the transistor 12b is turned off). Here, Va and Vb are equal 1 to each other. Therefore, a formula of "| Va | = | Vb | ≥ | Vd |" is obtained (where | Va | is an electric potential difference between Va and Vcom (an electric potential of the common electrode com), and the same goes for the others in the formula). It follows that a sub-pixel including the pixel electrode 17a and a sub-pixel including the pixel electrode 17b are bright sub-pixels having substantially the same luminance, and a sub-pixel including the pixel electrode 17d is a dark sub-pixel. In the same manner, a sub-pixel including the pixel electrode 17A and a sub-pixel including the pixel electrode 17B are bright sub-pixels having substantially the same luminance, and a sub-pixel including the pixel electrode 17D is a dark sub-pixel. Further, in a case where the scan signal line 16y is selected, for example, (i) a sub-pixel including the pixel electrode 17e and a sub-pixel including the pixel electrode 17f are bright sub-pixels having substantially the same luminance, (ii) a sub-pixel including the pixel electrode 17h is a dark sub-pixel, (iii) a sub-pixel including the pixel electrode 17E and a sub-pixel including the pixel electrode 17F are bright sub-pixels having substantially the same luminance, and (iv) a sub-pixel including the pixel electrode 17H is a dark sub-pixel.

Fig. 22 illustrates a specific example of the liquid crystal panel of Fig. 21. A liquid crystal panel 5k of Fig. 22 has an arrangement in which each pixel is divided into two parts (regions) by a single scan signal line intersecting the pixel. In one of the two parts, a single pixel electrode is provided adjacent to one of two edges of the pixel and a scan signal line, which two edges extend along the row direction. In the other one of the two parts, a pixel electrode connected to a transistor is provided adjacent to the scan signal line, while another pixel electrode, which is connected to, via a capacitance, the pixel electrode connected to the transistor, is provided adjacent to the other one of two edges of the pixel. Further, a single retention capacitance line is provided with respect to corresponding two pixel rows being adjacent to each other (so as to overlap the two pixel rows with each other). The retention capacitance line and a part of edges of the capacitively-coupled pixel electrode overlap each other. The retention capacitance line has an extending portion. In planar view, the extending portion (i) extends so that the extending portion and the other part of edges of the pixel overlap each other, or, alternatively, (ii) extends around the other part of edges and then merges into the retention capacitance line again.

Specifically, the data signal line 15x is provided along the pixels 100 and 101, and the data signal line 15X is provided along the pixels 102 and 103. The scan signal line 16x intersects a center of each of the pixels 100 and 102, and the scan signal line 16y intersects a center of each of the pixels 101 and 103. Further, the retention capacitance line 18p overlaps (i) a pixel row including the pixels 100 and 102, with each other, and (ii) another pixel row (located on an upper side with respect to the pixel row including the pixels 100 and 102 in Fig. 22), with each other, the retention capacitance line 18q overlaps (i) the pixel row including the pixels 100 and 102, with each other, and (ii) the pixel row including the pixels 101 and 103, with each other, and the retention capacitance line 18r overlaps (i) the pixel row including the pixels 101 and 103, with each other, and (ii) another pixel row (located on a lower side with respect to the pixel row including the pixels 101 and 103 in Fig. 22), with each other.

In the pixel 100, for example, on an upper side with respect to the scan signal line 16x intersecting the center of the pixel 100 in Fig. 22, the pixel electrode 17a, which has a rectangular shape and is connected to the transistor 12a, is provided adjacent to one of two edges of the pixel 100, which two edges extend in the row direction. On a lower side with respect to the scan signal line 16x in Fig. 22, the pixel electrode 17b, which has a rectangular shape and is connected to the transistor 12b, is provided adjacent to the scan signal line 16x, and the pixel electrode 17d, which has a rectangular shape and is connected to the pixel electrode 17b via the capacitance, is provided adjacent to the other one of two edges of the pixel 100. A source electrode 8a and a drain electrode 9a of the transistor 12a, and a source electrode 8b and drain electrode 9b of the transistor 12b are provided on the scan signal line 16x. The source electrode 8a is connected to the data signal line 15x. The drain electrode 9a is connected to a drain lead line 27a, which is connected to the pixel electrode 17a via a contact hole 11a. Further, the source electrode 8b is connected to the data signal line 15x. The drain electrode 9b is connected to a drain lead line 27b, which is connected to: a coupling capacitance electrode 37b in the same layer; and the pixel electrode 17b via a contact hole 11b. The coupling capacitance electrode 37b and the pixel electrode 17d overlap each other via an interlayer insulating film. The coupling capacitance Cbd (see Fig. 1) between the pixel electrodes 17b and 17d is thus formed.

The retention capacitance line 18p and a part of edges of the pixel electrode 17a (among two edges extending along the row direction, the one farther from the scan signal line 16x) overlap each other so that the retention capacitance Cha (see Fig. 1) is formed in an overlapping part Ka of these (the retention capacitance line 18p and the pixel electrode 17a). Further, the retention capacitance line 18q and a part of edges of the pixel electrode 17d (among two edges extending along the row direction, the one farther from the scan signal line 16x) overlap each other so that most of the retention capacitance Chd (see Fig. 1) is formed in an overlapping part Kd of these (the retention capacitance line 18q and the pixel electrode 17d). Furthermore, the retention capacitance line 18q has an extending portion 18d branching therefrom. In planar view, the extending portion 18d (i) extends so that the extending portion 18d and the other part of edges of the pixel electrode 17d overlap each other, or, alternatively, (ii) extends around the other part of edges and then merges into the retention capacitance line 18q. This causes the pixel electrode 17d, which is being in the electrically-floating state, to be electrically shielded by the retention capacitance line 18q and the extending portion 18d. Moreover, the extending portion 18d and the pixel electrode 17b overlap each other so that the retention capacitance Chb (see Fig. 1) is formed in an overlapping part Kb of these (the extending portion 18d and the pixel electrode 17b). Note that a part of the retention capacitance Chd is also formed in an overlapping part of the extending portion 18d and the pixel electrode 17d.

Further, in the pixel 101, on an upper side with respect to the scan signal line 16y intersecting the center of the pixel 101 in Fig. 22, the pixel electrode 17e, which has a rectangular shape and is connected to the transistor 12e, is provided adjacent to one of two edges of the pixel 101, which two edges extend along the row direction. On a lower side with respect to the scan signal line 16y in Fig. 22, the pixel electrode 17f connected to the transistor 12f is provided adjacent to the scan signal line 16y, and the pixel electrode 17h connected to the pixel electrode 17f via the capacitance is provided adjacent to the other one of two edges of the pixel 101. A source electrode 8e and a drain electrode 9e of the transistor 12e, and a source electrode 8f and a drain electrode 9f of the transistor 12f are provided on the scan signal line 16y. The source electrode 8e is connected to the data signal line 15x. The drain electrode 9e is connected to a drain lead line 27e, which is connected to the pixel electrode 17e via a contact hole 11e. Furthermore, the source electrode 8f is connected to the data signal line 15x. The drain electrode 9f is connected to a drain lead line 27f, which is connected to: a coupling capacitance electrode 37f in the same layer; and the pixel electrode 17f via a contact hole 11f. The coupling capacitance electrode 37f and the pixel electrode 17h overlap each other via the interlayer insulating film. The coupling capacitance Cfh (see Fig. 1) between the pixel electrodes 17f and 17h is thus formed.

The retention capacitance line 18q and a part of edges of the pixel electrode 17e overlap each other so that the retention capacitance Che (see Fig. 1) is formed in an overlapping part Ke of these (the retention capacitance line 18q and the pixel electrode 17e). Further, the retention capacitance line 18r and a part of edges of the pixel electrode 17h overlap each other so that most of the retention capacitance Chh (see Fig. 1) is formed in an overlapping part Kh of these (the retention capacitance line 18r and the pixel electrode 17h). Furthermore, the retention capacitance line 18r has an extending portion 18h branching therefrom. In planar view, the extending portion 18h (i) extends so that the extending portion 18h and the other part of edges of the pixel electrode 17h overlap each other, or, alternatively, (ii) extends around the other part of edges and then merges into the retention capacitance line 18r again. This causes the pixel electrode 17h, which is being in the electrically-floating state, to be electrically shielded by the retention capacitance line 18r and the extending portion 18h. Moreover, the extending portion 18h and the pixel electrode 17f overlap each other so that the retention capacitance Chf (see Fig. 1) is formed in an overlapping part Kf of these (the extending portion 18h and the pixel electrode 17f). Note that a part of the retention capacitance Chh is also formed in an overlapping part of the extending portion 18h and the pixel electrode 17h.

Fig. 23 is a timing chart showing how to drive a liquid crystal display device (a liquid crystal display device employing a normally black mode) employing the liquid crystal panel illustrated in Figs. 21 and 22. Note that in Fig. 23, (i) Sv and SV represent signal electric potentials, respectively, which are received by two data signal lines (15x and 15X, for example) being adjacent to each other, respectively, (ii) Gx and Gy represent gate on-pulse signals, respectively, which are received by the scan signal lines 16x and 16y, respectively, and (iii) Va, Vb, and Vd, VA, VB, and VD, and Ve, Vf, and Vh represent electric potentials of the pixel electrodes 17a, 17b, and 17d, 17A, 17B, and 17D, and 17e, 17f, and 17h, respectively.

According to the driving method, (i) scan signal lines are sequentially selected, (ii) two data signal lines which are adjacent to each other receive signal electric potentials whose polarities are opposite to each other, respectively, during the same 1 horizontal scanning period, (iii) a polarity of a signal electric potential received by each of the data signal lines is inverted every 1 horizontal scanning period (1H), and (iv) the polarity of the signal electric potential received by each of the data signal lines during the same horizontal scanning period in a frame is inverted every 1 frame (see Fig. 23).

It follows that, in F1 among sequential frames F1 and F2, the sub-pixel including the pixel electrode 17a (whose polarity is positive) is "bright", the sub-pixel including the pixel electrode 17b (whose polarity is positive) is "bright", the sub-pixel including the pixel electrode 17d (whose polarity is positive) is "dark", the sub-pixel including the pixel electrode 17e (whose polarity is negative) is "bright", the sub-pixel including the pixel electrode 17f (whose polarity is negative) is "bright", the sub-pixel including the pixel electrode 17h (whose polarity is negative) is "dark", the sub-pixel including the pixel electrode 17A (whose polarity is negative) is "bright", the sub-pixel including the pixel electrode 17B (whose polarity is negative) is "bright", and the sub-pixel including the pixel electrode 17D (whose polarity is negative) is "dark". As a whole, in F1, a display state of the liquid crystal panel 5k becomes as illustrated in (a) of Fig. 24.

Further, in F2, the sub-pixel including the pixel electrode 17a (whose polarity is negative) is "bright", the sub-pixel including the pixel electrode 17b (whose polarity is negative) is "bright", the sub-pixel including the pixel electrode 17d (whose polarity is negative) is "dark", the sub-pixel including the pixel electrode 17e (whose polarity is positive) is "bright", the sub-pixel including the pixel electrode 17f (whose polarity is positive) is "bright", the sub-pixel including the pixel electrode 17h (whose polarity is positive) is "dark", the sub-pixels including the pixel electrode 17A (whose polarity is positive) is "bright", the sub-pixel including the pixel electrode 17B (whose polarity is positive) is "bright", and the sub-pixel including the pixel electrode 17D (whose polarity is positive) is "dark". As a whole, in F2, the display state becomes as illustrated in (b) of Fig. 24.

According to the liquid crystal panel 5k, the scan signal line is provided in the center of the pixel. This layout makes it possible to (i) arrange the three pixel electrodes in the pixel such that two pixel electrodes (the pixel electrodes corresponding to the bright sub-pixels), each of which is connected to the data signal line via the transistor, are provided adjacent to each other, and one pixel electrode (the pixel electrode corresponding to the dark sub-pixel), which are being in the electrically-floating state, are provided adjacent to the two pixel electrodes corresponding to the bright sub-pixels, and simultaneously, (ii) cause the retention capacitance line and the extending portion of the retention capacitance line to function, in a position away from the scan signal line, as a pattern for electrically shielding the pixel electrode being in the electrically-floating state. Accordingly, it is possible for the liquid crystal display device employing the liquid crystal panel 5k to have such an arrangement that (i) a diving charge with respect to the two pixel electrodes being in the electrically-floating state is suppressed so that burn-in of the dark sub-pixels is prevented as much as possible, and simultaneously (ii) the single dark sub-pixel and the two bright sub-pixels are arranged in a line in the column direction. Therefore, it is possible for the liquid crystal display device employing the liquid crystal panel 5k to have such an arrangement that (i) a diving charge with respect to the two pixel electrodes being in the electrically-floating state is suppressed so that burn-in of the dark sub-pixels is prevented as much as possible, and simultaneously (ii) the bright sub-pixels, belonging to different pixels, respectively, are not adjacent to each other. Accordingly, it becomes possible for the liquid crystal display device employing the liquid crystal panel 5k to display more natural images than those displayed by the conventional liquid crystal display device. Further, the drain lead line can have a reduction in its length due to the provision of the scan signal line in the center of the pixel. Such a reduction realizes effects of: a reduction in risk of breakage of the drain lead line; and an increase in aperture ratio. Furthermore, the extending portion of the retention capacitance line realizes a redundant effect of the retention capacitance line. For example, even if the retention capacitance line is broken between a part where the extending portion branches from the retention capacitance line and a part where the extending portion merges into the retention capacitance line, a retention capacitance line signal (a Vcom signal equivalent to an electric potential of the common electrode com, for example) can be transmitted to a part in the downstream with respect to the breaking point via the extending portion functioning as a bypass route.

Moreover, the polarity of the signal electric potential received by each of the data signal lines is inversed every 1 horizontal scanning period (1H) (see Figs. 23 and 24). This causes two pixels which are adjacent to each other in the column direction to have opposite electric potential drawing directions, respectively, during a period of time in which the transistors are in an off-state. Therefore, it is possible to suppress generation of flickers. Further, two data signal lines which are adjacent to each other receive signal electric potentials whose polarities are opposite to each other, respectively, during the same 1 horizontal scanning period (see Figs. 23 and 24). This causes two pixels which are adjacent to each other in the row direction to have opposite electric potential drawing directions, respectively, during a period of time in which the transistors are in the off-state. Therefore, it is possible to further suppress the generation of flickers.

### [Embodiment 3]

Fig. 25 is an equivalent circuit diagram illustrating a part of a liquid crystal panel in accordance with Embodiment 3. The liquid crystal panel of the present embodiment includes: data signal lines (15x and 15X) extending in a column direction (an upper-lower direction in Fig. 25); scan signal lines (16x and 16y) extending in a row direction (a right-left direction in Fig. 25); pixels (100 to 103) arranged in the row and column directions; retention capacitance lines (18p, 18q, and 18r); and a common electrode (counter electrode) com (see Fig. 25). The pixels are identical with each other in structure. Note that a pixel column including the pixels 100 and 101, and a pixel column including the pixels 102 and 103 are adjacent to each other, while a pixel row including the pixels 100 and 102, and a pixel row including the pixels 101 and 103 are adjacent to each other.

The liquid crystal panel of the present embodiment has an arrangement in which a single data signal line and a single scan signal line are provided with respect to a corresponding pixel, and a single retention capacitance line is provided with respect to corresponding two pixels being adjacent to each other in the column direction. Further, six pixel electrodes are provided per pixel. Specifically, six pixel electrodes 17c, 17t, 17a, 17b, 17s, and 17d, provided in the pixel 100, and six pixel electrodes 17g, 17w, 17e, 17f, 17z, and 17h, provided in the pixel 101, are arranged in a line, while six pixel electrodes 17C, 17T, 17A, 17B, 17S, and 17D, provided in the pixel 102, and six pixel electrodes 17G, 17W, 17E, 17F, 17Z, and 17H, provided in the pixel 103, are arranged in a line. The pixel electrodes 17c and 17C, 17t and 17T, 17a and 17A, 17b and 17B, 17s and 17S, 17d and 17D, 17g and 17G, 17w and 17W, 17e and 17E, 17f and 17F, 17z and 17Z, and 17h and 17H are adjacent to each other in the row direction, independently.

In the pixel 100, (i) the pixel electrodes 17a and 17t are connected to each other via a coupling capacitance Cat, (ii) the pixel electrode 17t and 17c are connected to each other via a coupling capacitance Ctc, (iii) the pixel electrodes 17b and 17s are connected to each other via a coupling capacitance Cbs, and (iv) the pixel electrodes 17s and 17d are connected to each other via a coupling capacitance Csd. The pixel electrode 17a is connected to the data signal line 15x via a transistor 12a connected to the scan signal line 16x, while the pixel electrode 17b is connected to the data signal line 15x via a transistor 12b connected to the scan signal line 16x. A retention capacitance Chc is formed between the pixel electrode 17c, and both of the retention capacitance line 18p and an extending portion of the retention capacitance line 18p. A retention capacitance Cht is formed between the pixel electrode 17t and the extending portion of the retention capacitance line 18p. A retention capacitance Cha is formed between the pixel electrode 17a and the extending portion of the retention capacitance line 18p. A retention capacitance Chd is formed between the pixel electrode 17d, and both of the retention capacitance line 18q and an extending portion of the retention capacitance line 18q. A retention capacitance Chs is formed between the pixel electrode 17s and the extending portion of the retention capacitance line 18q. A retention capacitance Chb is formed between the pixel electrode 17b and the extending portion of the retention capacitance line 18q. Note that (i) a liquid crystal capacitance Clc is formed between the pixel electrode 17c and the common electrode com, (ii) a liquid crystal capacitance Clt is formed between the pixel electrode 17t and the common electrode com, (iii) a liquid crystal capacitance Cla is formed between the pixel electrode 17a and the common electrode com, (iv) a liquid crystal capacitance Clb is formed between the pixel electrode 17b and the common electrode com, (v) a liquid crystal capacitance Cls is formed between the pixel electrode 17s and the common electrode com, and (vi) a liquid crystal capacitance Cld is formed between the pixel electrode 17d and the common electrode com.

A liquid crystal display device employing the liquid crystal panel of the present embodiment is subjected to sequential scanning. The scan signal lines 16x and 16y are sequentially selected. In a case where the scan signal line 16x is selected, for example, a formula of "|va| = |Vb| ≥ |Vt| = |Vs| ≥ |Vc| = [Vd|" can be obtained (note that |Va| represents an electric potential difference between Va and Vcom (an electric potential of the common electrode com), for example) (where Va, Vt, and Vc represent electric potentials of the pixel electrodes 17a, 17t, and 17c, respectively, which Va, Vt, and Vc are obtained after the transistor 12a is turned off, and Vb, Vs, and Vd represent electric potentials of the pixel electrodes 17b, 17s, and 17d, respectively, which Vb, Vs, and Vd are obtained after the transistor 12b is turned off). It follows that a sub-pixel including the pixel electrode 17a and a sub-pixel including the pixel electrode 17b are bright sub-pixels having substantially the same luminance, a sub-pixel including the pixel electrode 17c and a sub-pixel including the pixel electrode 17d are dark sub-pixels having substantially the same luminance, a sub-pixel including the pixel electrode 17t and a sub-pixel including the pixel electrode 17s are halftone sub-pixels (sub-pixels having luminance in a range between that of a bright sub-pixel and that of a dark sub-pixel) having substantially the same luminance.

Fig. 26 illustrates a specific example of the liquid crystal panel of the present embodiment. A liquid crystal panel 5j of Fig. 26 has an arrangement in which (i) the data signal line 15x extends along the pixels 100 and 101, (ii) the data signal line 15X extends along the pixels 102 and 103, (iii) the scan signal line 16x intersects a center of each of the pixels 100 and 102, and (iv) the scan signal line 16y intersects a center of each of the pixels 101 and 103. Further, the retention capacitance line 18p overlaps: a pixel row including the pixels 100 and 102, with each other; and another pixel row (located on an upper side with respect to the pixel row including the pixels 100 and 102 in Fig. 26), with each other. The retention capacitance line 18q overlaps: the pixel row including the pixels 100 and 102, each other; and a pixel row including the pixels 101 and 103, with each other. The retention capacitance line 18r overlaps: the pixel row including the pixels 101 and 103, with each other; and another pixel row (located on a lower side with respect to the pixel row including the pixels 101 and 103 in Fig. 26), with each other.

In the pixel 100, for example, on an upper side with respect to the scan signal line 16x intersecting the center of the pixel 100 in Fig. 26, (i) the pixel electrode 17a, which has a rectangular shape and is connected to the transistor 12a, is provided adjacent to the scan signal line 16x, (ii) the pixel electrode 17c, which has a rectangular shape and is connected to the pixel electrode 17t via the capacitance, is provided adjacent to one of two edges of the pixel 100, which two edges extend in the row direction, and (iii) the pixel electrode 17t, which has a rectangular shape and is connected to the pixel electrode 17a via the capacitance, is provided between the pixel electrodes 17a and 17c. Meanwhile, on a lower side with respect to the scan signal line 16x in Fig. 26, (i) the pixel electrode 17b, which has a rectangular shape and is connected to the transistor 12b, is provided adjacent to the scan signal line 16x, (ii) the pixel electrode 17d, which has a rectangular shape and is connected to the pixel electrode 17s via the capacitance, is provided adjacent to the other one of two edges of the pixel 100, and (iii) the pixel electrode 17s, which has a rectangular shape and is connected to the pixel electrode 17b via the capacitance, is provided between the pixel electrodes 17b and 17d.

A source electrode 8a and a drain electrode 9a of the transistor 12a, and a source electrode 8b and a drain electrode 9b of the transistor 12b are provided on the scan signal line 16x. The source electrode 8a is connected to the data signal line 15x. The drain electrode 9a is connected to a drain lead line 27a, which is connected to: a coupling capacitance electrode 37a in the same layer; and the pixel electrode 17a via a contact hole 11a. The coupling capacitance electrode 37a and the pixel electrode 17t overlap each other via an interlayer insulating film. The capacitance Cat (see Fig. 25) between the pixel electrodes 17a and 17t is thus formed. Further, the pixel electrode 17t is connected to a coupling capacitance electrode 37t via a contact hole 11t. The coupling capacitance electrode 37t and the pixel electrode 17c overlap each other via the interlayer insulating film. The coupling capacitance Ctc (see Fig. 25) between the pixel electrodes 17t and 17c is thus formed. Meanwhile, the source electrode 8b is connected to the data signal line 15x. The drain electrode 9b is connected to a drain lead line 27b, which is connected to: a coupling capacitance electrode 37b in the same layer; and the pixel electrode 17b via a contact hole 11b. The drain lead line 27b and the coupling capacitance electrode 37b are provided in the same layer. The coupling capacitance electrode 37b and the pixel electrode 17s overlap each other via the interlayer insulating film. The coupling capacitance Cbs (see Fig. 25) between the pixel electrodes 17b and 17s is thus formed. Further, the pixel electrode 17s is connected to a coupling capacitance electrode 37s via a contact hole 11s. The coupling capacitance electrode 37s and the pixel electrode 17d overlap each other via the interlayer insulating film. The coupling capacitance Csd (see Fig. 25) between the pixel electrodes 17s and 17d is thus formed.

Moreover, the retention capacitance line 18p and a part of edges of the pixel electrode 17c (among two edges extending along the row direction, the one farther from the scan signal line 16x) overlap each other so that most of the retention capacitance Chc (see Fig. 25) is formed in an overlapping part Kc of these (the retention capacitance line 18p and the pixel electrode 17c). Further, the retention capacitance line 18p has an extending portion 18c branching therefrom. In planar view, the extending portion 18c (i) extends so that the extending portion 18c and the other part of edges of the pixel electrode 17c overlap each other, or, alternatively, (ii) extends around the other part of edges of the pixel electrode 17c and then merges into the retention capacitance line 18p again. This causes the pixel electrode 17c, which is being in the electrically-floating state, to be electrically shielded by the retention capacitance line 18p and the extending portion 18c. Furthermore, the extending portion 18c and a part of edges of the pixel electrode 17t (among two edges extending along the row direction, the one farther from the scan signal line 16x) overlap each other so that a part of the retention capacitance Cht (see Fig. 25) is also formed in an overlapping part Kt of these (the extending portion 18c and the pixel electrode 17t). Moreover, the extending portion 18c has an extending portion 18t branching therefrom. In planar view, the extending portion 18t (i) extends so that the extending portion 18t and the other part of edges of the pixel electrode 17t overlap each other, or, alternatively, (ii) extends around the other part of edges of the pixel electrode 17t and then merges into the extending portion 18c again. This causes the pixel electrode 17t, which is being in the electrically-floating state, to be electrically shielded by the extending portions 18c and 18t. Further, the extending portion 18t and the pixel electrode 17a overlap each other so that the retention capacitance Cha (see Fig. 25) is formed in an overlapping part Ka of these (the extending portion 18t and the pixel electrode 17a). Note that a part of the retention capacitance Chc is also formed in an overlapping part of the extending portion 18c and the pixel electrode 17c, and a part of the retention capacitance Cht is also formed in an overlapping part of the extending portion 18t and the pixel electrode 17t.

In the same manner, the retention capacitance line 18q and a part of edges of the pixel electrode 17d (among two edges extending along the row direction, the one farther from the scan signal line 16x) overlap each other so that most of the retention capacitance Chd (see Fig. 25) is formed in an overlapping part Kd of these (the retention capacitance line 18q and the pixel electrode 17d). Further, the retention capacitance line 18q has an extending portion 18d branching therefrom. In planar view, the extending portion 18d (i) extends so that the extending portion 18d and the other part of edges of the pixel electrode 17d overlap each other, or, alternatively, (ii) extends around the other part of edges of the pixel electrode 17d and then merges into the retention capacitance line 18q again. This causes the pixel electrode 17d, which is being in the electrically-floating state, to be electrically shielded by the retention capacitance line 18q and the extending portion 18d. Furthermore, the extending portion 18d and a part of edges of the pixel electrode 17s (among two edges extending along the row direction, the one farther from the scan signal line 16x) overlap each other so that a part of the retention capacitance Chs (see Fig. 25) is formed in an overlapping part Ks of these (the extending portion 18d and the pixel electrode 17s). Moreover, the extending portion 18d has an extending portion 18s branching therefrom. In planar view, the extending portion 18s (i) extends so that the extending portion 18s and the other part of edges of the pixel electrode 17s overlap each other, or, alternatively, (ii) extends around the other part of edges of the pixel electrode 17s and then merges into the extending portion 18d again. This causes the pixel electrode 17s, which is being in the electrically-floating state, to be electrically shielded by the extending portions 18d and 18s. Further, the extending portion 18s and the pixel electrode 17b overlap each other so that the retention capacitance Chd (see Fig. 25) is formed in an overlapping part Kb of these (the extending portion 18s and the pixel electrode 17b). Note that a part of the retention capacitance Chd is also formed in an overlapping part of the extending portion 18d and the pixel electrode 17d, and a part of the retention capacitance Chs is also formed in an overlapping part of the extending portion 18s and the pixel electrode 17s.

Fig. 27 is a timing chart showing how to drive a liquid crystal display device (employing the normally black mode) employing the liquid crystal panel illustrated in Figs. 25 and 26. Note that in Fig. 27, (i) Sv and SV represent signal electric potentials, respectively, which are received by two data signal lines (15x and 15X, for example) being adjacent to each other, respectively, (ii) Gx and Gy represent gate on-pulse signals, respectively, which are received by the scan signal lines 16x and 16X, respectively, and (iii) Va to Vd, Vt, and Vs represent electric potentials of the pixel electrodes 17a to 17d, 17t, and 17s, respectively.

According to the driving method, (i) scan signal lines are sequentially selected, (ii) two data signal lines which are adjacent to each other receive signal electric potentials whose polarities are opposite to each other, respectively, during the same 1 horizontal scanning period, (iii) a polarity of a signal electric potential received by each of the data signal lines is inverted every 1 horizontal scanning period (1H), and (iv) the polarity of the signal electric potential received by each of the data signal lines during the same horizontal scanning period in a frame is inverted every 1 frame (see Fig. 27).

Specifically, in F1 among sequential frames F1 and F2, the scan signal lines are sequentially selected (the scan signal lines 16x and 16y are selected in this order, for example). One of two data signal lines which are adjacent to each other (the data signal line 15x, for example) receives (i) a positive signal electric potential during the first horizontal scanning period (including a writing period of the pixel electrodes 17a and 17b, for example), and (ii) a negative signal electric potential during the second horizontal scanning period (including a writing period of the pixel electrodes 17e and 17f, for example), while the other one of two data signal lines (the data signal line 15X, for example) receives (i) a negative signal electric potential during the first horizontal scanning period (including writing period of the pixel electrodes 17A and 17B, for example), and (ii) a positive signal electric potential during the second horizontal scanning period (including a writing period of the pixel electrodes 17E and 17F, for example). It follows that the sub-pixel including the pixel electrode 17c (whose polarity is positive) is "dark", the sub-pixel including the pixel electrode 17t (whose polarity is positive) is "halftone", the sub-pixel including the pixel electrode 17a (whose polarity is positive) is "bright", the sub-pixel including the pixel electrode 17b (whose polarity is positive) is "bright", the sub-pixel including the pixel electrode 17s (whose polarity is positive) is "halftone", and the sub-pixel including the pixel electrode 17d (whose polarity is positive) is "dark" (see Fig. 27). As a whole, in F1, a display state of the liquid crystal panel 5j becomes as illustrated in (a) of Fig. 28.

Further, in F2, the scan signal lines are sequentially selected (the scan signal lines 16x and 16y are selected in this order, for example). One of two data signal lines which are adjacent to each other (the data signal line 15x, for example) receives (i) a negative signal electric potential during the first horizontal scanning period (including the writing period of the pixel electrodes 17a and 17b, for example), and (ii) a positive signal electric potential during the second horizontal scanning period (including the writing period of the pixel electrodes 17e and 17f, for example), while the other one of two data signal lines (the data signal line 15X, for example) receives (i) a positive signal electric potential during the first horizontal scanning period (including the writing period of the pixel electrodes 17A and 17B, for example), and (ii) a negative signal electric potential during the second horizontal scanning period (including the writing period of the pixel electrodes 17E and 17F, for example). It follows that the sub-pixel including the pixel electrode 17c (whose polarity is negative) is "dark", the sub-pixel including the pixel electrode 17t (whose polarity is negative) is "halftone", the sub-pixel including the pixel electrode 17a (whose polarity is negative) is "bright", the sub-pixel including the pixel electrode 17b (whose polarity is negative) is "bright", the sub-pixel including the pixel electrode 17s (whose polarity is negative) is "halftone", and the sub-pixel including the pixel electrode 17d (whose polarity is negative) is "dark" (see Fig. 27). As a whole, in F2, the display state of the liquid crystal panel 5j becomes as illustrated in (b) of Fig. 28.

According to the liquid crystal panel 5j, the scan signal line is provided in the center of the pixel. This layout makes it possible to (i) arrange the six pixel electrodes in the pixel such that two first pixel electrodes (the pixel electrodes corresponding to the bright sub-pixels), each of which is connected to the data signal line via the transistor, are provided in the center of the pixel, two second pixel electrodes (the pixel electrodes corresponding to the dark sub-pixels), which are being in the electrically-floating state, are provided in respective ends of the pixel, and each of two third pixel electrodes (the pixel electrodes corresponding to the halftone sub-pixels), which are being in the electrically-floating state, is provided between a corresponding one of the bright sub-pixels and a corresponding one of the dark sub-pixels, and simultaneously, (ii) cause corresponding two retention capacitance lines and corresponding four extending portions of the retention capacitance lines to function, in a position away from the scan signal line, as patterns for electrically shielding the two second pixel electrodes and the two third electrodes, which are being in the electrically-floating state. Therefore, it is possible for the liquid crystal display device employing the liquid crystal panel 5j to have such an arrangement that (i) a diving charge with respect to the four pixel electrodes being in the electrically-floating state is suppressed so that burn-in of the halftone sub-pixels and the dark sub-pixels is prevented as much as possible, and (ii) the bright sub-pixels, belonging to different pixels, respectively, are not adjacent to each other. Accordingly, it becomes possible for the liquid crystal display device employing the liquid crystal panel 5j to display more natural images than those displayed by the conventional liquid crystal display device.

Further, the drain lead line can have a reduction in its length due to the provision of the scan signal line in the center of the pixel. Such a reduction realizes effects of: a reduction in risk of breakage of the drain lead line; and an increase in aperture ratio. Furthermore, the extending portion of the retention capacitance line realizes a redundant effect of the retention capacitance line. For example, even if the retention capacitance line is broken between a part where the extending portion branches from the retention capacitance line and a part where the extending portion merges into the retention capacitance line, a retention capacitance line signal (a Vcom signal equivalent to an electric potential of the common electrode com, for example) can be transmitted to a part in the downstream with respect to the breaking point via the extending portion functioning as a bypass route.

Moreover, the polarity of the signal electric potential received by each of the data signal lines is inversed every 1 horizontal scanning period (1H) (see Figs. 27 and 28). This causes two pixels which are adjacent to each other in the column direction to have opposite electric potential drawing directions, respectively, during a period of time in which the transistors are in an off-state. Therefore, it is possible to suppress generation of flickers. Further, two data signal lines which are adjacent to each other receive signal electric potentials whose polarities are opposite to each other, respectively, during the same 1 horizontal scanning period (see Figs. 27 and 28). This causes two pixels which are adjacent to each other in the row direction to have opposite electric potential drawing directions, respectively, during a period of time in which the transistors are in the off-state. Therefore, it is possible to further suppress the generation of flickers.

A liquid crystal display unit of the present embodiment, and a liquid crystal display device of the present embodiment can be manufactured as described below. That is, two polarizers A and B are attached to both surfaces of the liquid crystal panel (5a to 5h, 5j, 5k) of the present invention, respectively, so that a polarizing axis of the polarizer A and a polarizing axis of the polarizer B are orthogonal to each other. Note that an optical compensation sheet or the like can be attached to the polarizers, if necessary. Next, drivers (a gate driver 202 and a source driver 201) are connected to the liquid crystal panel (see (a) of Fig. 29). Here, the following description deals with how to connect the drivers to the liquid crystal panel by a TCP (tape career package) method, as an example. First, an ACF (anisotropic conductive film) is provisionally attached to terminal sections of the liquid crystal panel by applying pressure. Then, TCPs on which the drivers are provided are punched out from a career tape. The TCPs are positioned on terminal electrodes of the liquid crystal panel, and heated and pressed so as to be completely attached. After that, a circuit substrate 209 (PWB: printed wiring board) for connecting driver TCPs to each other is connected to input terminals of the TCPs via the ACF. A liquid crystal display unit 200 is thus manufactured. Then, as illustrated in (b) of Fig. 29, each driver (201 and 202) of the liquid crystal display unit is connected to a display control circuit 209 via the circuit substrate 203, and the liquid crystal display unit is combined with an illumination device (backlight unit) 204. A liquid crystal display device 210 is thus manufactured.

In the present specification, "a polarity of an electric potential" is such that "positive" means an electric potential not less than a reference electric potential, and "negative" means an electric potential not more than the reference electric potential. Here, the reference electric potential may be an electric potential Vcom, i.e. the electric potential of the common electrode (counter electrode) com, or another electric potential determined arbitrarily.

Fig. 30 is a block diagram illustrating an arrangement of the liquid crystal display device of the present embodiment. The liquid crystal display device of the present embodiment includes a display section (liquid crystal panel), a source driver (SD), a gate driver (GD), and a display control circuit (see Fig. 30). The source driver drives the data signal lines, while the gate driver drives the scan signal lines. The display control circuit controls the source and gate drivers.

From an external signal source (a tuner, for example), the display control circuit receives: a digital video signal Dv indicating an image to be displayed; a horizontal sync signal HSY corresponding to the digital video signal Dv; a vertical sync signal VSY corresponding to the digital video signal Dv; and a control signal Dc for controlling display operation. Further, on the basis of the received signals Dv, HSY, VSY, and Dc, the display control circuit generates: a data start pulse signal SSP; a data clock signal SCK; a digital image signal DA indicative of an image to be displayed (a signal corresponding to the video signal Dv); a gate start pulse signal GSP; a gate clock signal GCK; and a gate driver output control signal (a scanning signal output control signal) GOE, each serving as a signal for enabling the display section to display an image indicated by the digital video signal Dv. The display control circuit outputs these signals.

More specifically, the video signal Dv is subjected to timing adjustment etc. in an internal memory, if necessary, and then outputted as the digital image signal DA from the display control circuit. The data clock signal SCK is generated as a signal constituted by pulses corresponding to pixels of an image indicated by the digital image signal DA. The data start pulse signal SSP is generated, based on the horizontal sync signal HSY, as a signal which has a high (H) level only during a predetermined period with respect to each horizontal scanning period. The gate start pulse signal GSP is generated, based on the vertical sync signal VSY, as a signal which has a H level only during a predetermined period with respect to each frame period (each vertical scanning period). The gate clock signal GCK is generated based on the horizontal sync signal HSY. The gate driver output control signal GOE is generated based on the horizontal sync signal HSY and the control signal Dc.

Among the signals thus generated by the display control circuit, the digital image signal DA, a signal POL for controlling the polarity of a signal electric potential (data signal electric potential), the data start pulse signal SSP, and the data clock signal SCK are received by the source driver, and the gate start pulse signal GSP, the gate clock signal GCK, and the gate driver output control signal GOE are received by the gate driver.

On the basis of the digital image signal DA, the data clock signal SCK, the data start pulse signal SSP, and the polarity inversion signal POL, the source driver sequentially generates data signals that are analog electric potentials (signal electric potentials) corresponding to pixel values in each scan signal line of an image indicated by the digital image signal DA, every 1 horizontal scanning period. Then, the source driver transmits these data signals to data signal lines (15x and 15X, for example).

On the basis of the gate start pulse signal GSP, the gate clock signal GCK, and the gate driver output control signal GOE, the gate driver generates gate on-pulse signals, and transmits the gate on-pulse signals to the scan signal lines, so as to selectively drive the scan signal lines.

As described above, the source driver and the gate driver drive the data signal lines and the scan signal lines of the display section (the liquid crystal panel), so that a signal electric potential is written in a pixel electrode from a data signal line via a transistor (TFT) connected to the selected scan signal line. Thus, a voltage corresponding to the digital image signal DA is applied to the liquid crystal layer in individual sub-pixels. The application of the voltage controls transmittance of light from the backlight. Therefore, each sub-pixel can display an image indicated by the digital video signal Dv.

Next, the following description deals with an example of an arrangement in a case where the liquid crystal display device of the present invention is applied to a television receiver. Fig. 31 is a block diagram illustrating an arrangement of a liquid crystal display device 800 for a television receiver. The liquid crystal display device 800 includes: a liquid crystal display unit 84; a Y/C separation circuit 80; a video chroma circuit 81; an A/D converter 82; a liquid crystal controller 83; a backlight driving circuit 85; a backlight 86; a microcomputer 87; and a gradation circuit 88. Note that the liquid crystal unit 84 is constituted by a liquid crystal panel, and source and gate drivers for driving the liquid crystal panel.

In the liquid crystal display device 800 having the above arrangement, first, a complex color video signal Scv serving as a television signal is externally inputted into the Y/C separation circuit 80. In the Y/C separation circuit 80, the complex color video signal Scv is separated into a luminance signal and a color signal. The luminance signal and the color signal are converted into analog RGB signals corresponding to three primary colors of light in the video chroma circuit 81. Further, the analog RGB signals are converted into digital RGB signals by the A/D converter 82. The digital RGB signals are received by the liquid crystal controller 83. Moreover, in the Y/C separation circuit 80, horizontal and vertical sync signals are extracted from the complex color video signal Scv which is externally inputted. These sync signals are also received by the liquid crystal controller 83 via the microcomputer 87.

The liquid crystal display unit 84 receives, from the liquid crystal controller 83, the digital RGB signals as well as timing signals based on the sync signals, at predetermined timing. Further, the gradation circuit 88 generates gradation electric potentials corresponding to respective three primary colors R, G, and B for color display, and supplies the gradation electric potentials to the liquid crystal display unit 84. In the liquid crystal display unit 84, drive signals (data signals = signal electric potentials, scanning signals etc.) are generated by the internal source and gate drivers etc. in accordance with the RGB signals, the timing signals, and the gradation potentials. A color image is displayed on the internal liquid crystal panel on the basis of these drive signals. In order to enable the liquid crystal display unit 84 to display an image, it is necessary to emit light from the backside of the liquid crystal panel in the liquid crystal display unit. In the liquid crystal display device 800, under control of the microcomputer 87, the backlight drive circuit 85 drives the backlight 86 so as to emit light to the backside of the liquid crystal panel. Control of the whole system, including the aforementioned processes, is carried out by the microcomputer 87. As the video signal (complex color video signal) externally inputted, not only a video signal in accordance with a television broadcast but also a video signal picked up by a camera or supplied via the Internet line is also usable. In the liquid crystal display device 800, image display in accordance with various video signals can be performed.

In displaying an image by the liquid crystal display 800 in accordance with a television broadcast, a tuner section 90 is connected to the liquid crystal display 800, and thus the television receiver of the present embodiment is provided (see Fig. 32). The tuner section 90 extracts a channel signal of a target channel from waves (high-frequency signals) received by an antenna (not illustrated), and converts the channel signal to an intermediate frequency signal. The tuner section 90 detects the intermediate frequency signal, thereby extracting the complex color video signal Scv as a television signal. The complex color video signal Scv is received by the liquid crystal display device 800 as described above and an image is displayed on the liquid crystal display device 800 in accordance with the complex color video signal Scv.

Fig. 33 is an exploded perspective view illustrating an example of an arrangement of the television receiver of the present invention. As illustrated in Fig. 33, the television receiver of the present invention includes, as components thereof, a first housing 801 and a second housing 806 in addition to the liquid crystal display device 800. The liquid crystal display device 800 is arranged such that the first hosing 801 and the second housing 806 hold the liquid crystal display device 800 so as to wrap the liquid crystal display device 800 therebetween. The first housing 801 has an opening 801 a for transmitting an image displayed on the liquid crystal display device 800. On the other hand, the second housing 806 covers a backside of the liquid crystal display device 800. The second housing 806 is provided with an operating circuit 805 for operating the liquid crystal display device 800. The second housing 806 is further provided with a supporting member 808 therebelow.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

A liquid crystal panel and a liquid crystal display device in accordance with the present invention are suitably applicable to a liquid crystal television, for example.

## Claims

1. An active matrix substrate comprising:
scan signal lines;
switching elements each connected to a corresponding one of the scan signal lines;
data signal lines;
the active matrix substrate further comprising, in each pixel region:
a first pixel electrode connected to a corresponding one of the data signal lines via a corresponding one of the switching elements;
a second pixel electrode connected to the corresponding one of the data signal lines via a corresponding one of the switching elements; and
a third pixel electrode connected to the first pixel electrode via a capacitance,
the pixel region being intersected by a corresponding one of the scan signal lines so as to be divided into two parts,
the first pixel electrode being provided in one of the two parts,
the second pixel electrode being provided in the other one of the two parts.

2. The active matrix substrate as set forth in claim 1, wherein:
in planar view, each of the first pixel electrode and the second pixel electrode are provided adjacent to the corresponding one of the scan signal lines.

3. The active matrix substrate as set forth in claim 1 or 2, wherein:
the first pixel electrode and the third pixel electrode are provided in the one of the two parts.

4. Claim 4 The active matrix substrate as set forth in claim 3, further comprising:
first retention capacitance lines each overlapping a part of edges of corresponding third pixel electrodes with each other,
each of the first retention capacitance lines having first extending portions branching therefrom,
each of the first extending portions, in planar view, extending so that the first extending portion and the other part of edges of a corresponding one of the third pixel electrodes overlap each other, or, alternatively, the first extending portion extending around the other part of edges of the corresponding one of the third pixel electrodes and then merging into the first retention capacitance line again.

5. The active matrix substrate as set forth in claim 4, wherein:
the first extending portions and the first pixel electrodes overlap each other, respectively.

6. The active matrix substrate as set forth in claim 4 or 5, wherein:
the first extending portions are provided one per pixel region and are connected to their neighboring first extending portion in a column direction.

7. The active matrix substrate as set forth in any one of claims 4 through 6, wherein:
the first retention capacitance lines are provided in such a manner that pixel regions in pair which are adjacent to each other share one first retention capacitance line.

8. The active matrix substrate as set forth in claim 3, further comprising:
first retention capacitance lines each overlapping a part of edges of corresponding third pixel electrodes with each other;
first sub-lines each of which forms retention capacitances in combination with corresponding first pixel electrodes; and
first conducting electrodes connected between the first retention capacitance line and the first sub-line, the first conducting electrodes being provided two per each pixel region in such a manner that a first sub-line and two first conducting electrodes corresponding to one pixel region are extended so that a combination of the first sub-line and the two first conducting electrodes, and the other part of edges of a corresponding one of the third pixel electrodes overlap each other, or, alternatively, that the combination of the first sub-line and the two first conducting electrodes is extended around the other part of edges of the corresponding one of the third pixel electrodes.

9. The active matrix substrate as set forth in claim 4, further comprising:
an interlayer insulating film provided below each of the first pixel electrode, the second pixel electrode, and the third pixel electrode,
the interlayer insulating film being less in thickness in at least (i) a part of a region where the third pixel electrode and the first retention capacitance line overlap each other, and (ii) a part of a region where the third pixel electrode and the first extending portion overlap each other.

10. The active matrix substrate as set forth in claim 9, wherein:
the interlayer insulating film includes an inorganic insulating film and an organic insulating film which is greater in thickness than the inorganic insulating film; and
the organic insulating film is absent in at least (i) the part of the region where the third pixel electrode and the first retention capacitance line overlap each other, and (ii) the part of the region where the third pixel electrode and the first extending portion overlap each other.

11. The active matrix substrate as set forth in claim 3, further comprising:
first retention capacitance lines each overlapping a part of edges of corresponding third pixel electrodes with each other; and
first shield electrodes each connected to a corresponding one of the first retention capacitance lines via a contact hole,
the first shield electrodes and the third pixel electrodes being provided in the same layer,
the first shield electrode, in planar view, extending around the other part of edges of a corresponding one of the third pixel electrodes.

12. The active matrix substrate as set forth in claim 11, further comprising:
an interlayer insulating film provided below each of the first pixel electrode, the second pixel electrode, and the third pixel electrode,
the interlayer insulating film including an inorganic insulating film and an organic insulating film which is greater in thickness than the inorganic insulating film.

13. The active matrix substrate as set forth in any one of claims 1 through 12, further comprising, in each pixel region:
a first coupling capacitance electrode electrically connected to the first pixel electrode,
the first coupling capacitance electrode and the third pixel electrode overlapping each other via an interlayer insulating film which is provided below each of the first pixel electrode, the second pixel electrode, and the third pixel electrode.

14. The active matrix substrate as set forth in claim 13, wherein:
the switching element includes a first transistor;
the first pixel electrode is connected to, via a contact hole, a lead line led out of a conducting terminal of the first transistor; and
the lead line and the first coupling capacitance electrode are connected to each other in the same layer.

15. The active matrix substrate as set forth in claim 13, wherein:
the switching element includes a first transistor;
the first pixel electrode is connected to (i), via a contact hole, a lead line led out of a conducting terminal of the first transistor, and (ii) a junction line via another contact hole; and
the first coupling capacitance electrode and the junction line are connected to each other in the same layer.

16. The active matrix substrate as set forth in claim 13, wherein:
the interlayer insulating film is less in thickness in at least a part of a region where the third pixel electrode and the first coupling capacitance electrode overlap each other.

17. The active matrix substrate as set forth in claim 16, wherein:
the interlayer insulating film includes the inorganic insulating film and the organic insulating film which is greater in thickness than the inorganic insulating film; and
the organic insulating film is absent in at least a part of the region where the third pixel electrode and the first coupling capacitance electrode overlap each other.

18. The active matrix substrate as set forth in any one of claims 1 through 17, further comprising, in each pixel region:
a fourth pixel electrode connected to the second pixel electrode via a capacitance, the second pixel electrode and the fourth pixel electrode being provided in the other one of the two parts.

19. The active matrix substrate as set forth in claim 18, further comprising:
second retention capacitance lines each overlapping a part of edges of corresponding fourth pixel electrodes with each other,
each of the second retention capacitance lines having second extending portions branching therefrom,
each of the second extending portions, in planar view, extending so that the second extending portion and the other part of edges of a corresponding one of the fourth pixel electrodes overlap each other, or, alternatively, the second extending portion extending around the other part of edges of the corresponding one of the fourth pixel electrodes and then merging into the second capacitance line again.

20. The active matrix substrate as set forth in claim 19, wherein:
the second extending portions and the second pixel electrodes overlap each other, respectively.

21. The active matrix substrate as set forth in claim 19 or 20, wherein:
the second extending portions are provided one per pixel region and are connected to their neighboring second extending portion in a column direction.

22. The active matrix substrate as set forth in any one of claims 19 through 21, wherein:
the second retention capacitance lines are provided in such a manner that pixel regions in pair which are adjacent to each other share one second retention capacitance line.

23. The active matrix substrate as set forth in claim 18, further comprising:
second retention capacitance lines each overlapping a part of edges of corresponding fourth pixel electrodes with each other;
second sub-lines each of which forms retention capacitances in combination with corresponding second pixel electrodes; and
the second conducting electrodes being provided two per each pixel region in such a manner that a second sub-line and two second conducting electrodes corresponding to one pixel region are extended so that a combination of the second sub-line and the two second conducting electrodes, and the other part of edges of a corresponding one of the fourth pixel electrodes overlap each other, or, alternatively, that the combination of the second sub-line and the two second conducting electrodes is extended around the other part of edges of the corresponding one of the fourth pixel electrodes.

24. The active matrix substrate as set forth in claim 19, wherein:
the interlayer insulating film is provided below each of the first pixel electrode, the second pixel electrode, the third pixel electrode, and the fourth pixel electrode,
the interlayer insulating film being less in thickness in at least (i) a part of a region where the fourth pixel electrode and the second retention capacitance line overlap each other, and (ii) a part of a region where the fourth pixel electrode and the second extending portion overlap each other.

25. The active matrix substrate as set forth in claim 24, wherein:
the interlayer insulating film includes an inorganic insulating film and an organic insulating film which is greater in thickness than the inorganic insulating film; and
the organic insulating film is absent in at least (i) a part of the region where the fourth pixel electrode and the second retention capacitance line overlap each other, and (ii) a part of the region where the fourth pixel electrode and the second extending portion overlap each other.

26. The active matrix substrate as set forth in claim 18, further comprising:
second retention capacitance lines each overlapping a part of edges of corresponding fourth pixel electrodes with each other; and
second shield electrodes each connected to a corresponding one of the second retention capacitance lines via a contact hole,
the second shield electrodes and the fourth pixel electrodes being provided in the same layer,
the second shield electrode, in planar view, extending around the other part of edges of a corresponding one of the fourth pixel electrodes.

27. The active matrix substrate as set forth in claim 26, further comprising:
an interlayer insulating film provided below each of the first pixel electrode, the second pixel electrode, the third pixel electrode, and the fourth pixel electrode,
the interlayer insulating film including an inorganic insulating film and an organic insulating film which is greater in thickness than the inorganic insulating film.

28. The active matrix substrate as set fourth in any one of claims 18 through 27, further comprising, in each pixel region:
a second coupling capacitance electrode electrically connected to the second pixel electrode,
the second coupling capacitance electrode and the fourth pixel electrode overlapping each other via the interlayer insulating film which is provided below each of the first pixel electrode, the second pixel electrode, the third pixel electrode, and the fourth pixel electrode.

29. The active matrix substrate as set forth in claim 28, wherein:
the switching element includes a second transistor;
the second pixel electrode is connected to, via a contact hole, a lead line led out of a conducting terminal of the second transistor; and
the lead line and the second coupling capacitance electrode are connected to each other in the same layer.

30. The active matrix substrate as set forth in claim 28, wherein:
the switching element includes a second transistor;
the second pixel electrode is connected to (i) via a contact hole, a lead line led out of a conducting terminal of the second transistor, and (ii) a junction line via another contact hole; and
the second coupling capacitance electrode and the junction line are connected to each other in the same layer.

31. The active matrix substrate as set forth in claim 28, wherein:
the interlayer insulating film is less in thickness in at least a part of a region where the fourth pixel electrode and the second coupling capacitance electrode overlap each other.

32. The active matrix substrate as set forth in claim 31, wherein:
the interlayer insulating film includes the inorganic insulating film and the organic insulating film which is greater in thickness than the inorganic insulating film; and
the organic insulating film is absent in at least a part of the region where the fourth pixel electrode and the second coupling capacitance electrode overlap each other.

33. The active matrix substrate as set forth in claim 14 or 15, wherein:
the switching element further includes a second transistor; and
the second pixel electrode is connected to, via a contact hole, a lead line led out of a conducting terminal of the second transistor.

34. The active matrix substrate as set forth in any one of claims 1 through 33, further comprising, in each pixel region:
a coupling electrode for connecting the first pixel electrode and the second pixel electrode to each other,
the coupling electrode, the first pixel electrode, and the second pixel electrode being provided in the same layer.

35. The active matrix substrate as set forth in any one of claims 1 through 34, further comprising, in each pixel region:
a fourth pixel electrode connected to the second pixel electrode via a capacitance;
a first coupling capacitance electrode electrically connected to the first pixel electrode;
a second coupling capacitance electrode electrically connected to the second pixel electrode; and
an interlayer insulating film provided below each of the first pixel electrode, the second pixel electrode, the third pixel electrode, and the fourth pixel electrode,
the first coupling capacitance electrode and the third pixel electrode overlapping each other via the interlayer insulating film,
the second coupling capacitance electrode and the fourth pixel electrode overlapping each other via the interlayer insulating film,
an area of the overlapping of the first coupling capacitance electrode and the third pixel electrode being larger or smaller than that of the overlapping of the second coupling capacitance electrode and the fourth pixel electrode.

36. The active matrix substrate as set forth in any one of claims 1 through 35, wherein:
a center of each pixel region is intersected by a corresponding one of the scan signal lines.

37. The active matrix substrate as set forth in any one of claims 1 through 36, further comprising, in each pixel region:
a fourth pixel electrode connected to the second pixel electrode via a capacitance,
the first pixel electrode and the third pixel electrode facing each other via a gap therebetween in the one of the two parts,
the second pixel electrode and the fourth pixel electrode facing each other via a gap therebetween in the other one of the two parts,
each of the gap between the first pixel electrode and the third pixel electrode and the gap between the second pixel electrode and the fourth pixel electrode functioning as an alignment control structure.

38. The active matrix substrate as set forth in any one of claims 1 through 37, further comprising, in each pixel region:
a fifth pixel electrode connected to the third pixel electrode via a capacitance.

39. The active matrix substrate as set forth in any one of claims 1 through 38, further comprising, in each pixel region:
a fourth pixel electrode connected to the second pixel electrode via a capacitance; and
a sixth pixel electrode connected to the fourth pixel electrode via a capacitance.

40. An active matrix substrate comprising:
scan signal lines;
data signal lines;
first transistors each connected to both of a corresponding one of the scan signal lines and a corresponding one of the data signal lines; and
second transistors each connected to both of the corresponding one of the scan signal lines and the corresponding one of the data signal lines,
the active matrix substrate further comprising, in each pixel region:
a first pixel electrode connected to a corresponding one of the first transistors;
a second pixel electrode connected to a corresponding one of the second transistors; and
a third pixel electrode connected to the first pixel electrode via a capacitance,
the first pixel electrode and the second pixel electrode facing each other via a gap therebetween,
the pixel region being intersected by a corresponding one of the scan signal lines so that the corresponding one of the scan signal lines and the gap overlap each other.

41. The active matrix substrate as set forth in claim 40, further comprising, in each pixel region:
a fourth pixel electrode connected to the second pixel electrode via a capacitance,
the first pixel electrode and the third pixel electrode, in planar view, being separated from each other by a first slit boundary which has (i) a part extending at an angle of 45° with respect to the corresponding one of the scan signal lines, and (ii) a part extending at an angle of 135° with respect to the corresponding one of the scan signal lines,
the second pixel electrode and the fourth pixel electrode, in planar view, being separated from each other by a second slit boundary which has (i) a part extending at an angle of 225° with respect to the corresponding one of the scan signal lines, and (ii) a part extending at an angle of 315° with respect to the corresponding one of the scan signal lines.

42. The active matrix substrate as set forth in claim 41 further comprising, in each pixel region:
a first coupling capacitance electrode electrically connected to the first pixel electrode; and
a second coupling capacitance electrode electrically connected to the second pixel electrode,
the first coupling capacitance electrode and the third pixel electrode overlapping each other,
the second coupling capacitance electrode and the fourth pixel electrode overlapping each other,
the first coupling capacitance electrode having, in planar view, at least a part extending at an angle of 45° or 135° with respect to the corresponding one of the scan signal lines,
the second coupling capacitance electrode having, in planar view, at least a part extending at an angle of 225° or 315° with respect to the corresponding one of the scan signal lines.

43. The active matrix substrate as set forth in claim 41, wherein:
the first pixel electrode has, in planar view, a part provided between the third pixel electrode and the corresponding one of the scan signal lines; and
the second pixel electrode has, in planar view, a part provided between the fourth pixel electrode and the corresponding one of the scan signal lines.

44. The active matrix substrate as set forth in claim 41, further comprising:
first retention capacitance lines; and
second retention capacitance lines,
the first retention capacitance lines being provided in such a manner that the pixel region and an upstream pixel region, which are adjacent to each other in a column direction, share one first retention capacitance line,
the second retention capacitance lines being provided in such a manner that the pixel region and a down stream pixel region, which are adjacent to each other in the column direction, share one second retention capacitance line,
in planar view, each of the first retention capacitance lines having one of (i) a first extending portion which extends so that the first extending portion and an edge of the third pixel electrode overlap each other, the edge of the third pixel electrode being along a corresponding one of the data signal lines, and (ii) a second extending portion which extends so that the second extending portion and an edge of the fourth pixel electrode overlap each other, the edge of the fourth pixel electrode being along a corresponding one of the data signal lines,
each of the second retention capacitance lines having the other one of said (i) and (ii).

45. A liquid crystal panel comprising:
an active matrix substrate as set forth in claim 42; and
a counter substrate facing the active matrix substrate, the counter substrate having alignment control structures,
the first coupling capacitance electrode having a part extending at the angle of 45° or 135° with respect to the corresponding one of the scan signal lines, below a corresponding one of the alignment control structures,
the second coupling capacitance having a part extending at the angle of 225° or 315° with respect to the corresponding one of the scan signal lines, below a corresponding one of the alignment control structures.

46. A liquid crystal panel comprising:
any one of active matrix substrates as set forth in claims 1 through 44.

47. A liquid crystal display unit comprising:
a liquid crystal panel as set forth in claim 46; and
a driver.

48. A liquid crystal display device comprising:
a liquid crystal display unit as set forth in claim 47; and
an illumination device.

49. A television receiver comprising:
a liquid crystal display device as set forth in claim 48; and
a tuner section for receiving a television broadcast.
